# EUROPEAN PATENT SPECIFICATION

(11) **EP 0 580 140 B1**
(45) Date of publication and mention of the grant of the patent: **25.11.1998**
(21) Application number: 93111670.1
(22) Date of filing: 21.07.1993
(51) Int. Cl.: G01S 13/72, G01S 5/16

(54) **Covert ranging method and system**
Geheime Entfernungsmess -Verfahren und -Vorrichtung
Méthode et système discrets de mesure de distance

(30) Priority: 22.07.1992 US 918534
(43) Date of publication of application: 26.01.1994
(73) Proprietor: TEXAS INSTRUMENTS INCORPORATED, Dallas Texas 75265 (US)
(72) Inventor: Choate, William C., Dallas, TX 75240 (US); Frey, Charles E., Colony, TX 75056, (US); Tyree, Anthony K., Plano, TX 75023, (US)
(74) Representative: Schwepfinger, Karl-Heinz, Dipl.-Ing.

(56) References cited:
- US-A- 3 935 572
- US-A- 4 954 837
- US-A- 5 095 467
- IEEE 1989 NATIONAL AEROSPACE AND ELECTRONICS CONFERENCE NAECON 1989 vol. 2, May 1989, DAYTON , OH , USA pages 909 - 916 , XP76441 NOEL COLLINS AND CHARLES BAIRD 'Terrain aided passive estimation'
- SPIE SENSING AND RECONSTRUCTION OF THREE-DIMENSIONAL OBJECTS AND SCENES, vol.1260, no., 1990, page 21 - 35, STELIOS ET AL. '3-D MOTION TRACKING USING STEREO CAMERA AND RANGE RADAR'

## Description

### TECHNICAL FIELD OF THE INVENTION

The present invention generally relates to target ranging methods and systems and more particularly to a covert ranging method and system based on passive target ranging in conjunction with active sensing that fixes target range to resolve range and speed ambiguity.

A 3-D motion tracking method which combines passive and active sensors is described in the article "3-D Motion Tracking Using Stereo Camera and Range Radar", SPIE, Vol. 1260, Sensing and Reconstruction of Three-Dimensional Objects and Scenes (1990). A stereo camera is used as passive sensor, while the active sensor is a range radar. Tracking of an object undergoing 3-D translational and rotational motion is effected by using an integral filter based on stereo images and range radar measurements. The range radar is used to estimate the distance from separate measurements. This distance estimate is subsequently used in an Extended Kalman Filter to recover the object position and velocity from a sequence of stereo images. A coordinate transformation is performed between the polar coordinates of the range radar measurements and the Cartesian coordinates used in the camera model. It is not specified for which time period the radar signals are applied.

### BACKGROUND OF THE INVENTION

For a wide variety of military and civilian aviation scenarios air-to-air passive ranging provides a useful way to determine distances between aircraft. The goal of air-to-air passive ranging is to determine the range from one aircraft, called "ownship," to another, called "target", by detecting energy emanating from the target. For this purpose, "ownship" may be equipped with directional receivers that measure the angle of the arriving energy during a data collection interval. To this are added fixes of "ownship's" position and heading obtained from an inertial navigation system (INS) on-board ownship. For most applications, the energy will be in the radio-frequency (RF) or infrared (IR) regions of the electromagnetic spectrum.

A RF system may monitor radar transmissions and RF communications from the target for these purposes. Very long detection ranges are feasible that substantially exceed those at which target could acquire ownship on its own radar. Thus, ownship may be able to locate target without itself being detectable. In this situation, the primary advantage of passive ranging is gained: stealth. Long acquisition range also affords ownship more time to detect target's presence. The directional receiver may be implemented by a two-axis RF interferometer or several such units covering different fields of view.

The infrared system would sense black body radiation emanated from the target. Therefore, operation does not depend on target transmission protocol. Detection range is considerably reduced and ownship would be within range of target's radar. Two factors mitigate this risk: (1) the target might restrict radar usage to avoid detection and (2) convergence time is considerably less for IR passive ranging systems. The latter is attributable to the shorter operating ranges and the higher spatial resolution of the IR sensor. The directional receiver may be implemented using a FLIR imager and video tracker.

A principal deficiency in all air-to-air passive ranging method is ill-conditioning. This is a condition in which small errors in the measurements can cause much larger ones in the computed ranges. There are two principal causes of ill-conditioning: (1) a limited baseline for ranging data; and (2) the need to infer target motion from the data. The relation between baseline ranging accuracy may be explained in terms of triangulation. This is appropriate, although there is no explicit triangulation step in the ranging algorithm, since a triangulation principle is at work whenever range is estimated from sightings at different locations. Factors affecting triangulation accuracy will have similar effects on ranging accuracy. Two of these are the lengths and direction of the baseline ranging data.

Accordingly, there is a need for a method and system that avoids ill-conditioning in passive air-to-air ranging by overcoming the limited ranging data baseline and target motion inference problems of the prior art.

### SUMMARY OF THE INVENTION

The present invention, accordingly, provides a covert ranging method and system that overcomes or reduces disadvantages and limitations associated with prior passive air-to-air ranging methods and system.

One aspect of the invention is a method for covertly determining and predicting air-to-air target range and speed data relative to a predetermined position. The method includes the steps defined in claim 1. In an operational target environment, the method and system of the present invention repeat the above steps continuously to covertly determine target data relative to the predetermined position.

A technical advantage of the present invention is that by using random or quasi-random flashes of active radar signals, the method and system perform covert ranging and, at the same time, overcome the limited ranging data base line and target motion inference problems associated with a purely passive ranging system.

Another technical advantage of the present invention is the simplifying of computations necessary for dynamic modeling of the air-to-air passive ranging problem. By bracketing the scope of the search necessary for ranging, the present invention improves the computational efficiency of the air-to-air ranging algorithm. In the present invention, penalties are imposed when target data values exceed predetermined brackets. Additionally, optimal magnitudes of dynamic target model perturbations are determined that assure a level of stability within the dynamic target model. This avoids the detrimental effects of ill-conditioning in the air-to-air passive ranging algorithm.

### BRIEF DESCRIPTION OF THE DRAWINGS

The invention and its modes of use and advantages are best understood by reference to the following description of illustrative embodiments when read in conjunction with the accompanying drawings, wherein:
FIGURE 1 provides a flow block diagram of the covert ranging system of the preferred embodiment;
FIGURE 2 shows factors effecting passive ranging accuracy;
FIGURE 3 illustrates the geometry of air-to-air ranging;
FIGUREs 4 and 5 illustrate the operation of optimizing the dynamic ranging model according to the preferred embodiment;
FIGURE 6 shows two orders of special penalty that the preferred embodiment uses; and
FIGURE 7 illustrates the effects of bracketing the solution of the preferred embodiment.

### DETAILED DESCRIPTION OF THE INVENTION

The preferred embodiment of the present invention is best understood by referring to the FIGUREs wherein like numerals are used for like and corresponding parts of the various drawings.

The covert ranging system of the preferred embodiment is based on a passive ranging system involving the use of an active radar sensor. The active radar obtains a fix on the target range by a "flash illumination" a transmission too short to detect in most circumstances. Consequently, ownship's location is not compromised in any circumstances. This active radar fix resolves the range and speed ambiguity that may otherwise slow conversion of the completely passive ranging system. Once resolved, the passive ranging system maintains an accurate fix on range as long as the target maintains at constant velocity. Any subsequent departure from the assumed flight path can be detected and corrections provided by a subsequent "flash illumination."

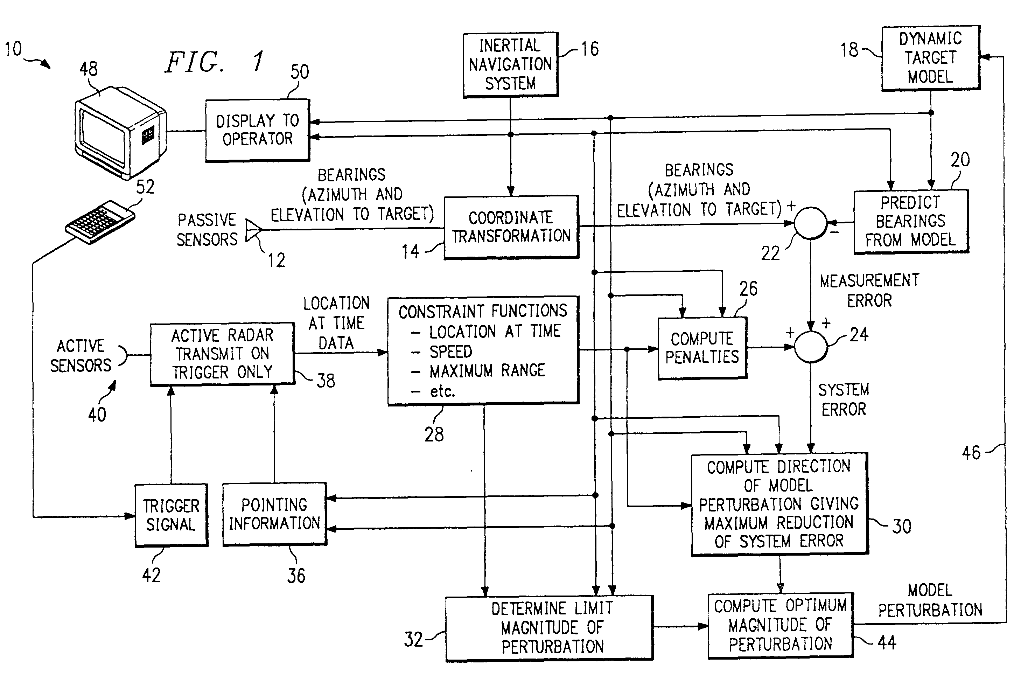

FIGURE 1 shows a system block diagram 10 of the covert ranging system of the preferred embodiment. Beginning with passive sensors 12, covert ranging system 10 shows that bearings relative to the body axes of the sensing aircraft are taken and sent to coordinate transformation unit 14. At coordinate transformation unit 14, navigation data from the aircraft's inertial navigation system (INS) 16 transforms these bearings into azimuth and elevation data relative to the INS 16 coordinate system. While actual passive data is being received and transformed, a resident model in an associated computer system generates data as indicated by dynamic target model block 18. The resident model outputs this data as indicated by block 20 to provide predict bearings from model. At junction 22, actual data including bearings having azimuth and elevation are joined and compared with the predicted bearings from the dynamic target model to generate a measurement error. Then, at junction 24, computed penalties from block 26 are input to junction 24. These computed penalties take into consideration the output of constraint functions from block 28, as well as INS data from block 16 and parameters of the resident dynamic target model of block 18. Other outputs from the constraint functions block 28 include an input to block 30, discussed below. Constraint functions block 28 receives an output from active radar portion 38. Active radar portion 38 receives an active sensor input 40, a trigger signal indicated by block 42, and pointing information 36, as already mentioned.

Inertial navigation system 16 provides data to seven places in the covert ranging system 10 of the preferred embodiment. These include coordinate transformation block 14, predicted bearing block 20, compute penalty block 26, compute direction of model perturbation block 30, determine limit magnitude of perturbation block 32, pointing information block 36, and operator display unit 50. Similarly, dynamic target model 18 provides data to six points including predict bearings from model block 20, compute penalties block 26, compute direction of model perturbation block 30, determine limit of magnitude of perturbation block 32, pointing information block 36, and display to operator block 50.

Returning to junction 24, the composite of the output from computer penalties block 26 and the measurement error from junction 22 is formed to comprise a "system error." The system error goes to compute direction of model perturbation block 30, which gives the maximum reduction of system error. Output from model perturbation direction block 30 combines with output from perturbation magnitude limit block 32 to produce at block 44 an optimum magnitude of perturbation. This is performed by a "linear search" method such as Davidon's algorithm as described in "Davidon's Cubic Interpolation Method," Methods of Optimization, G.R. Walsh, ed. Sec. 39, pp. 97-102 (1975). From block 44, an optimal model perturbation results and a signal goes along line 46 to the resident dynamic target model within the associated computer system for operating the model at block 18.

In an operational system, for example, as well as the covert ranging system 10 continuously updating the target data, output goes to a monitor such as monitor 48 that display to operator block 50 to exhibit a variety of useful information concerning target and ownship, for example, a running display of target's position relative to ownship. Also, operator control 52 may activate trigger signal block 42 to cause active radar 38 to send a flash of active radar energy that active sensors 40 receive. This may be in response to a signal from display to operator block 50 that an active fix would be beneficial, as when target acceleration.

In the preferred embodiment, constraint functions block 28 uses constraints such as location at time, speed, maximum range, etc., that may be switched on or off according to the availability of necessary and relevant data. Additionally, active radar block 38 may instead be a laser device or "ladar" that generates a laser signal in the light or infrared energy producing wavelengths of the electromagnetic spectrum.

The following discussion illustrates the passive air-to-air ranging problem that the preferred embodiment solves. This material may be supplemented by unpublished Appendix A for a more complete understanding. In air-to-ground ranging, for example, the target may be presumed stationary and ranging amounts to determining its special coordinates in three-dimensional space. Thus, an air-to-ground model representing the target has three degrees of freedom. This may be further reduced to two degrees of freedom if the altitude of ownship relative to target is known. The situation is more complicated in air-to-air ranging where the model must describe target's position as a function of time. Accordingly, the air-to-air ranging problem applies a model known as "kinematic" model. The additional degrees of freedom necessary for the kinematic model aggravate ill-conditioning, because they decrease the redundancy through which noise is rejected. To recover from the ill-conditioning that occurs, the data collection interval must be extended. This has the effect of slowing conversions of the algorithm.

In the passive air-to-air ranging problem, the form of the kinematic model is assumed *a priori*. This, in effect, limits the scope of the motion that may described. Over a short interval, a simple model suffices. The more complex motion possible in a longer interval may be accompanied by a more complex model. However, this may be counterproductive because of the associated need for more data and a longer data collection interval. Therefore, the preferred embodiment adopts a relatively simple model having six degrees of freedom. This is equivalent to assuming that the target flies in approximately a straight line path during data collection. For reliable performance, the convergence time of the algorithm should be short enough to make this a good assumption. Therefore, factors affecting rate of convergence, such as measurement accuracy, are extremely important. However, it has been shown that un-modeled target accelerations are not always detrimental to ranging accuracy.

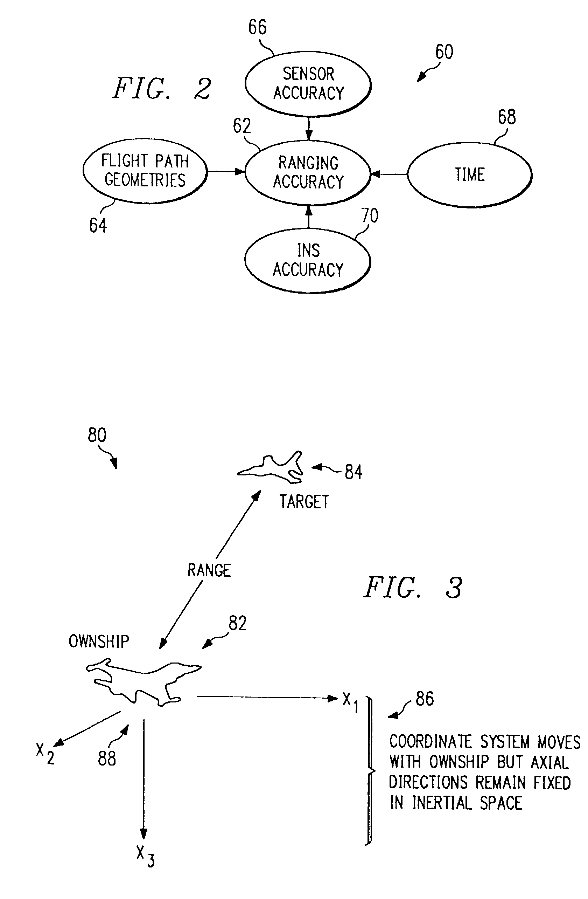

FIGURE 2 shows a conceptual data flow diagram 60 to illustrate the interplay of factors affecting ranging accuracy in the preferred embodiment. With reference to FIGURE 2, data flow diagram 60 has at its center ranging accuracy domain 62. Ranging accuracy domain 62 is affected by the flight path geometries that domain 64 indicates (i.e., data collection internal) sensor accuracy that domain 66 indicates, time that domain 68 indicates and INS accuracy that domain 70 indicates.

An example of the interplay for ranging accuracy that domain 62 indicates may be as follows. Ranging accuracy 62 may be maintained while the data collection internal 68 is reduced by improving sensor accuracy 66 or as a result of more favorable flight path geometries 64. Favorable geometries are characterized by high angular rates of change of bearings. As a result, a shorter data collection internal is possible at shorter ranges (e.g., it takes twice as long to establish a particular geometry at a 100 km as at 50 km). A system which requires a shorter data collection interval to attain a given accuracy is said to "converge faster."

FIGURE 3 graphically depicts an air-to-air encounter 80 that the preferred embodiment addresses. Consider air-to-air encounter sketch 80 where ownship 82 seeks to obtain a range to target 84. In this encounter, coordinate system 86 moves in translation so that ownship 82 remains at the origin 88 at all times. The directions of the axis, X₁, X₂, and X₃ are then fixed in inertial space by references from the ownship INS. Bearing measurements may then be assumed as referenced to these axis rather than to the body axis of ownship. Time is taken as zero at the onset of data collection. In this scenario, an important limitation is that range is indeterminate in the absence of ownship acceleration. As a result, there is a fundamental ambiguity between range and speed. This means that there are infinitely many target models consistent with a particular set of sightings in such a case. As described in Appendix A, the preferred embodiment solves this ambiguity problem.

The preferred embodiment characterizes the formulation of passive ranging as an inverse problem. The goal of the inverse problem is to find the kinematic model which is most consistent with the measured azimuth and elevations recorded during the data collection interval. These measurements are referred to as "actual data." Consistency is determined by numerically computed "synthetic data" from the model in comparing on a one-two-one basis with the actual data. The result is summarized by a single non-negative number called "measurement error." As mentioned, the form of the model is assumed *a priori.* The task of the algorithm therefore is to evaluate the parameters of the model.

As described in Appendix A the minimization problem uses the following recursive procedure to dynamically model target data:
(a) a start-up model is chosen;
(b) a perturbation of the model δ***m***, which causes the measurement error, J, to decrease is computed;
(c) a search is conducted along a straight line in the parameter space of the model for the minimum of J. The model which minimizes J becomes the new resident model. The direction of a straight line is given by (b);
(d) if several consecutive iterations leave the model virtually unchanged, the resident model is taken as the solution. Otherwise, a new iteration is begun at (b).

To find the perturbation direction as indicated at block 30 of FIGURE 1, the preferred embodiment derives approximate expressions for J(**m**+ δ**m**) which is accurate for small δ**m** and which is simple enough that a closed form expression can be found for δ**m̂**. This solved for δ**m̂**. Only the direction is used, magnitude is recomputed in step (c), above. The approximate expression is a Taylor series truncated after the second or third term which may be derived by several associated solution techniques.

One solution technique to this problem may be the gradient method, also known as the method of steepest descent. Another method may be the conjugate gradient method. Yet another method may be Newton-Raphson algorithm, which utilizes a second degree approximation that remains accurate for probations of much greater magnitude. The Newton-Raphson algorithm makes feasible larger step sizes with fewer iterations to achieve conversions. This process, unfortunately, requires increased per-iteration processing. Another method that the preferred embodiment may use is a computation of the Hessian matrix used in the Newton-Raphan algorithm. All of these solution techniques are described in more detail in unpublished Appendix A.

Perturbation magnitude is determined in step (c) of the ranging algorithm by a "linear search." This terminology derives from the fact that the minimum sighting error is sought along a straight line path in the parameter space of the model. The line passes through the origin and is directed in the perturbation direction determined in step (b) above. The only free parameter is perturbation magnitude, therefore, the search is one-dimensional. The minimum is determined by trial-and-error using a Davidon's Cubic Interpolation Method as stated previously. The computations are based on the exact model, rather than an approximation of finite degree, and, therefore, are themselves exact. This is the advantage of using step (c) to determine perturbation magnitude.

Davidon's algorithm works as follows in the preferred embodiment. A bracket containing the minimum is established. Normally, this is done by increasing the upper limit of the bracket until either of two conditions are meet:
(1) the derivative of J in the search direction is positive; or
(2) J is larger than at the origin.
However, using the constraints introduced later herein, the preferred embodiment may compute it directly, and, thus avoid trial-and-error in most cases. Next, J and its first order derivative in the direction of the search are computed at the boundaries of the bracket. These four numbers determine the cubic polynomial which is taken as a model of J within the bracket. The minimum of the cubic may be readily computed analytically. The location of the minimum becomes a new boundary. Whether "upper" or "lower" depends on the value of the derivative of J. The following Table 1 defines this relationship:

**TABLE 1**

| Sign of Derivative of J | Classification of boundary |
|---|---|
| Negative | Lower |
| Positive | Upper |

If the derivative is zero, the location is returned as the solution of the linear search. Since the new boundary divides the original bracket, the width of the new bracket is reduced. If "small enough", the center of the bracket is returned as the solution of the linear search. Otherwise, a new polynomial is fitted to the new bracket and the procedure iterated. The current program exits when the uncertainty in range is 100 meters or less, and the uncertainty in velocity is 0.1 meters per second, or less.

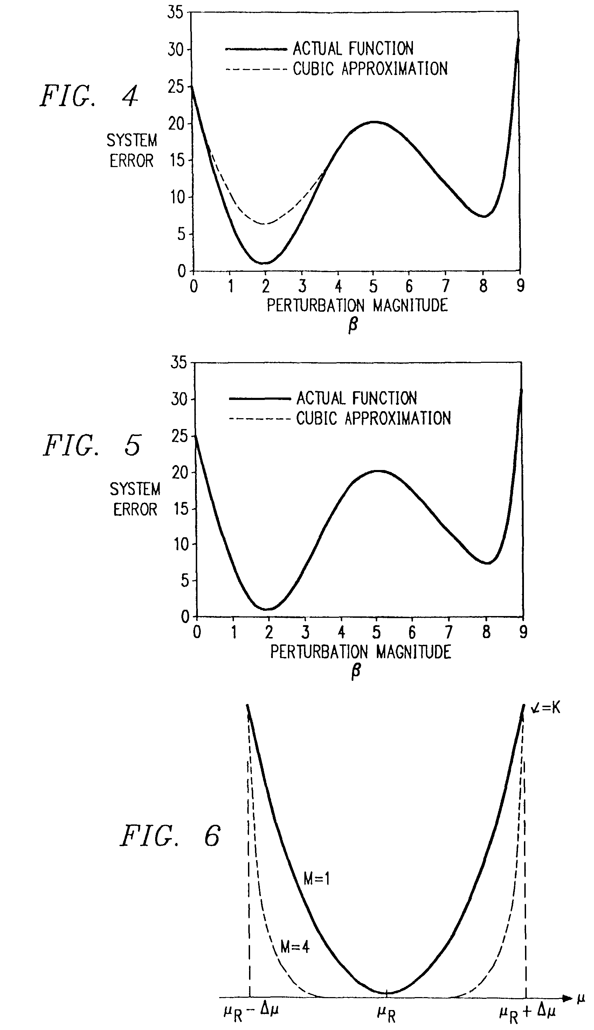

FIGUREs 4 and 5 illustrate these operations. The solid curves give J as a function of perturbation magnitude. In FIGURE 4, the initial bracket is the integral bracket [0,4]. The dashed curve is a plot of cubic polynomial matched to J and its derivative at the end-points. The fit in the interior is not particular good, but the minima occur at similar locations. It is found that J is increasing at the minima of the cubic polynomial β = 1.975. Therefore, this becomes a new upper boundary. The polynomial has been refitted [0,1.975] in FIGURE 5 [dashed curve]. The approximation is now quite accurate and the minima occur at virtually identical locations. This illustrates the rapid convergence that typifies the Davidon algorithm. However, in later iterations of the ranging algorithm, the topology of J can be exceptionally flat and subject to artifacts caused by numerical noise. As a result, a newly defined boundary may be consistently upper (lower) and situated very near the previous one. The preferred embodiment includes "accelerators" that detect condition and force a minimum reduction of bracket width.

The preferred embodiment employs constraints for making available to the ranging algorithm knowledge of the real-world that is not explicitly present in the data. The constraint function, by restricting the domain of feasible solutions, excludes unrealistic target models. This makes conversions more rapid and alleviates ill-conditioning to a large degree. While additional computations are needed to implement the constraint functions, these are largely offset by a reduction in the number of iterations. By using the constraints to determine the initial bracket in Davidon's algorithm, numerical overflow (underflow), which sometimes occurs when evaluating constraint functions within the stop-band, is avoided. The action of the constraints is indirect. More specifically, they are responsive to functions of model parameters--not to the parameters themselves. For example, the speed constraint is responsive to the magnitude of target velocity. Therefore, changes in velocity which preserve speed have no effect on the constraint. Further, the speed constraint is independent of the position components of the model.

The constraints are implemented as penalty functions which return non-negative numbers (penalties) which are very small when the constraint is satisfied and large when it is violated. The penalties add to the measurement error to yield to the "system error," which is minimized in solving the ranging problem. The fundamental structure of the ranging algorithm is unaffected by the constraints. Only the numbers appearing in the equation change. The additive nature of the constraints allows them to be developed and tested independently--a property of considerable practical importance.

The cost of implementing the constraints is substantially reduced by their independence of the measurements (time samples). Thus, calculations do not have to be performed over a sequence of N time samples, as do computations relating to measurement error. Further, a penalty function is often dependent on only a subset of the model parameters.

Since the penalties are negligibly small when the constraints are satisfied, the constraints have little effect on the result when the model is well within the feasible solution space. Clearly, it is important to choose constraint parameters so as not exclude the true target model. This must be balanced with the desire to restrict the feasible solution space for better ranging performance. To optimize this trade-off, it may be attractive to adapt the constraint parameters for each individual target. This could employ *a priori* information derived from intelligence sources or inferred from an electronic characterization of target transmissions.

FIGURE 6 illustrates two orders, denoted by the symbol M, for speed penalty. Note that as order increases, the influence of the constraint within the bandpass is reduced. In the limit (M→∞), the penalty function takes on the shape of rectangular well with zero penalty within the bandpass and infinite penalty outside. This is ideal theoretical behavior. But, from a practical standpoint orders above four or eight do not offer significant advantages.

Another useful constraint is a limit on maximum target acquisition range. This is known approximately from consideration of the power of target's radar, antenna gain of ownship's receiver, ambient noise level, etc. The location of target at acquisition is a basic component of the kinematic model of the target (see *x(0)*, equation (2) below). Range is simply the Euclidian norm of *x(0)*. Any exponential power of range, typically a positive even integer, can be used as the penalty function. The penalty is weighted to realize a desired penalty at the specified maximum acquisition range.

The preferred embodiment further includes a flight path adviser for processing early sighting data to do the following:
(1) Recommend an ownship maneuver to optimize ranging performance;
(2) Determine the start-up model to initiate data inversion; and
(3) Detect a change of target velocity (i.e., target acceleration) indicating the need to revise the target model and possibly, a new active radar fix.
"Early sighting data" refer to sightings collected at the beginning of the data collection interval, for which ownship's velocity may be taken as approximately constant. Under this condition, relative target motion is confined to a plane in three-dimensional space. This implies that the salient features of the motion may be described in only two dimensions. As noted earlier, range can not be resolved in the absence of ownship acceleration. However, in the preferred embodiment it is possible to determine range if target speed is known. This is not the case, but often a reasonable estimate of speed is available. An accurate start-up model can be determined by "flash ranging."

From the flight path adviser, it is possible to determine noise level to indicate sensor performance. It is also possible to indicate the efficacy of the flight path geometry during a sensing. Appendix A illustrates how each of these steps may be performed. In the preferred embodiment, flash ranging significantly improves the accuracy of ranging algorithm. In particular, by including with a preferred embodiment the flash ranging using active sensors 40 of FIGURE 1, serious ill-conditioning problems are overcome. To more fully understand the flash ranging aspect of the preferred embodiment, the following discussion provides a mathematical derivation of its use in the ranging algorithm. Additionally, Appendix B provides an exemplary source code listing of the ranging algorithm of the preferred embodiment including the active flash ranging aspect. Dealing particularly with the flash ranging aspect of the preferred embodiment, we begin an exemplary mission at time, *t* = 0 and then at sometime later, for example at$\text{t} \text{= τ}$ active sensors 40 turn on to obtain a range fix on the target. For purposes of covert operation, the use of active sensors 40 is random or quasi-random. Active sensors 40 are off most of the time, thus making them very difficult to detect so that the target cannot sight or range on ownship. There are several kinds of information that can be determined from the active sensor:
(1) Range
(2) Doppler
(3) Bearing (azimuth and elevation).
Combined, range and bearing determine target's location relative to ownship. This can advantageously be used as a constraint when bearings from the active sensor are more reliable than those from the passive sensor. However, the passive sensor is at no fundamental disadvantage for determining bearing and may be preferred for this purpose. In this case, range information alone would be utilized for the constraint. Doppler gives the component of relative target velocity along the line-of-sight. This information is particularly difficult to determine passively and thus is highly complementary. As a constraint it would be applied to the velocity component of the model.

In the following we will describe how active range information can be incorporated as a constraint. Techniques for constructing constraints from active doppler and bearing measurements are similar. The range fix that active sensors 40 and active radar 38 obtain may be denoted, ρ_{*N*}, meaning the nominal range at time τ. Since the use of active radar is expected to be very short and occasionally employed, in discussing the preferred embodiment, the use of active sensors 40 will be denoted "flash ranging." Note that flash ranging would be of limited value if it were not possible to maintain an accurate estimate of target location by passive means the majority of the time. As stated previously, the method and system of the preferred embodiment assume a linear kinematic model for relative target motion. This model may have the following model expression:$\text{x} \text{(} \text{t} \text{) =} \text{x} \text{(0) +} \text{t} \text{ν +} \text{a} \text{(} \text{t} \text{).}$ It will also be convenient to express the model as the following expression:$\text{x} \text{(} \text{t} \text{) =} \text{L} \text{(} \text{t} \text{) ·} \text{m} \text{+} \text{a} \text{(} \text{t} \text{)}$ where the matrix L*(t)* takes the following form:$\text{L} \text{(} \text{t} \text{) = [} \text{I} \text{/} \text{tI} \text{]}$ and **m** is a column vector consisting of the parameters of the model as follows:$\text{m =} \text{[} {\text{x}}_{\text{1}} \text{(0)} {\text{x}}_{\text{2}} \text{(0)} {\text{x}}_{\text{3}} {\text{(0) ν}}_{\text{1}} {\text{ν}}_{\text{2}} {\text{ν}}_{\text{3}} {\text{]}}^{\text{T}}$ The estimate ρ_{*N*} at τ is introduced into the passive ranging method and system as a constraint that is implemented through the penalty functions that block 26 computes. The penalty function for the computations of block 26 may take the form:$\text{γ =} \frac{{\text{K}}_{\text{γ}}}{{\text{Ω}}^{\text{2}}} {\text{(ρ - ρ}}_{\text{N}} {\text{)}}^{\text{2}}$ where *K*_{γ} is the "gain", Ω is the "bandwidth," and ρ is the range computed from the model expression for **x(t)** of Equation (3) at time τ through the following relationship:$\text{ρ = ∥} \text{x} \text{∥ = ∥} \text{L m + a} \text{∥.}$ In Equation (7), dependence on the time parameter τ is implicit. The exponent "2" appearing in (6) is used for the purpose of illustration and may be replaced by other positive even integers. For convenience in the following derivations, assume that $\frac{{\text{K}}_{\text{γ}}}{{\text{Ω}}^{\text{2}}}$ = 1. This multiplicative scale factor may then be restored to the result.

In the air-to-air passive ranging algorithm, by introducing constraints through penalty functions and then adding them to the cost function of the system, it is possible to determine how well the measurements fit the measurements and the allowed scope of the model.

By computing partial derivatives of γ with respect to model parameters, the following expressions obtain:$\frac{\text{∂γ}}{\text{∂} {\text{m}}_{\text{i}}} {\text{= 2 (ρ-ρ}}_{\text{N}} \text{)} \frac{\text{∂ρ}}{\text{∂} {\text{m}}_{\text{i}}}$ and$\frac{{\text{∂}}^{\text{2}} \text{γ}}{\text{∂} {\text{m}}_{\text{i}} \text{∂} {\text{m}}_{\text{j}}} \text{= 2} \frac{\text{∂ρ∂ρ}}{\text{∂} {\text{m}}_{\text{i}} \text{∂} {\text{m}}_{\text{j}}} {\text{+ 2(ρ -ρ}}_{\text{N}} \text{)} \frac{{\text{∂}}^{\text{2}} \text{ρ}}{\text{∂} {\text{m}}_{\text{i}} \text{∂} {\text{m}}_{\text{j}}} \text{.}$

With these expressions, it is possible to develop expressions for the derivatives of range with respect to model parameters. From Equation (7),${\text{ρ}}^{\text{2}} \text{=} {\text{m}}^{\text{T}} {\text{L}}^{\text{T}} \text{Lm} \text{+} {\text{m}}^{\text{T}} {\text{L}}^{\text{T}} \text{a} \text{+} {\text{a}}^{\text{T}} \text{Lm} \text{+} {\text{a}}^{\text{T}} \text{a} \text{.}$ As a result,$\text{2ρ} \frac{\text{∂ρ}}{\text{∂} {\text{m}}_{\text{i}}} \text{= 2} {\text{e}}_{\text{i}} {\text{}}^{\text{T}} {\text{L}}^{\text{T}} \text{Lm} \text{+ 2} {\text{e}}_{\text{i}} {\text{}}^{\text{T}} {\text{L}}^{\text{T}} \text{a}$ where **e**_{**i**} is a unit vector of dimension six. It follows from Equation (3) that$\frac{\text{∂ρ}}{\text{∂} {\text{m}}_{\text{i}}} \text{=} \frac{\text{1}}{\text{ρ}} {\text{l}}_{\text{i}}^{\text{T}} \text{x} \text{(τ)}$ where ***l***_{***i***}^{T} is the *i*^{th} *row of* ***L***^{*T*}*.*

By computing second derivatives, 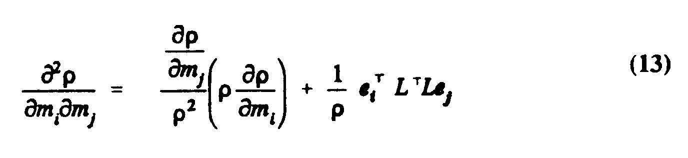 Defining the 6x6 matrix as$\text{P} \text{=} {\text{L}}^{\text{T}} \text{L} {\text{Δ}}_{̲} \text{[} {\text{p}}_{\text{ij}} \text{]}$ and 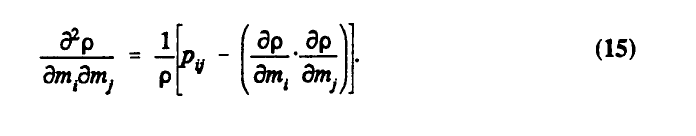 Further, denoting the gradient of γ with respect to the model parameters **m** as$\text{g} {\text{= ∇}}_{\text{m}} \text{γ}$ the following expression results from Equations (8) and (12).$\text{g} \text{=} \frac{{\text{2(ρ - ρ}}_{\text{N}} \text{)}}{\text{ρ}} {\text{L}}^{\text{T}} \text{x} \text{(τ) = 2(1-σ)} {\text{L}}^{\text{T}} \text{x} \text{(τ),}$ where${\text{σ = ρ}}_{\text{N}} \text{/ρ.}$ Also, in modifying the ranging algorithm as described above, it is important to modify the Hessian matrix that has the following definition: 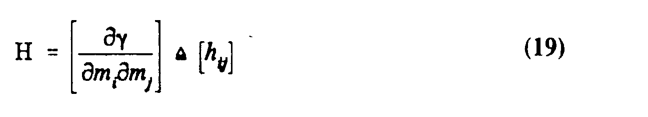 The elements of the Hessian matrix were determined in Equation (9) above. However, a simpler expression results by substituting from Equation (15) to derive the following expression:

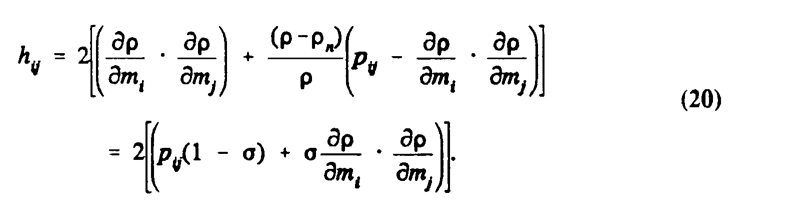

It will be recalled, that the scale factor $\frac{{\text{K}}_{\text{γ}}}{{\text{Ω}}^{\text{2}}}$, was assumed equal to 1 with the expectation that it would be restored subsequent to computation. This is possible now by simply multiplying **H** by $\frac{{\text{K}}_{\text{γ}}}{{\text{Ω}}^{\text{2}}}$. Moreover, numerical computations are greatly simplified by noting that${\text{g}}_{\text{i} \text{+3}} \text{= τ} {\text{g}}_{\text{i}} \text{;} \text{i} \text{= 1,3} \text{= 2 τ(1-σ)} {\text{x}}_{\text{i}} \text{(τ)}$ and 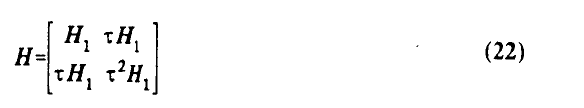 with 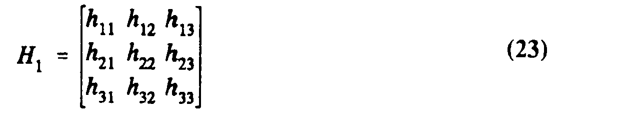 and hᵢⱼ = hⱼᵢ for i=1, j= 1,3. Note that the derivative expressions now only need to be evaluated for three elements of the six elements **g**, and six elements of the 36 elements of **H**.

The gradient **g** and the Hessian **H** are used to approximate the range-at-time penalty function γ. An exact definition of γ is given by equation (6). The approximation is given by$\text{γ(} \text{m} \text{+δ} \text{m} \text{) = γ(} \text{m} \text{)+} \text{g} {}^{\text{T}} \text{δ} \text{m} \text{+(1/2)δ} {\text{m}}^{\text{T}} \text{Hδm}$ and holds for all δ***m*** of small magnitude. Used within the Newton-Raphson procedure, (a) can be used to compute in closed form the perturbation δ***m*** for which ***m***+δ***m*** yields the minimum γ (within the limits of the approximation). However, the objective is to minimize the system error J, not just the component γ. The extension presents no formal difficulty because system error is the sum of measurement error plus all penalties. The approximation for system error is simply the sum of expressions of the form (a), each of which may be derived independently. The approximate nature of the truncated series representation (a) limits accuracy of the solution δ***m*** when the magnitude δ***m*** is not very small. As a result, it is usually possible to improve the solution by rescaling it to optimum magnitude. This is done through a 'linear search," so named because the path of the search is a straight line in solution space. There is no approximation error in the linear search, although the path is usually suboptimal.

Constraints offer the opportunity to further bracket the scope of the search and, therefore, improve the computational efficiency of the search algorithm. As a result, it is possible to examine how the brackets are determined. For this purpose, the preferred embodiment assumes that, at the outset of the search, the system error is J₀. Obviously, then a successful search cannot result in a penalty exceeding J₀ (i.e., it is known that$\text{γ ≤} {\text{J}}_{\text{0}}$ in the preferred embodiment). The bracket boundaries are defined such that equality holds in Equation (25), thus yielding$\text{(} \hat{\text{ρ}} {\text{-ρ}}_{\text{N}} {\text{)}}^{\text{2}} {\text{= α}}^{\text{2}}$ Where α² is J₀ $\frac{{\text{Ω}}^{\text{2}}}{{\text{K}}_{\text{γ}}}$ and the carets "^" an "∨" denote values at the bracket boundaries. Thus, bracket boundaries are attained when$\hat{\text{ρ}} {\text{= ρ}}_{\text{N}} \text{±α.}$ Since ρ is not the free parameter of the search, consider now its relationship to this parameter, denoted β.
During the search, the dynamic target model may be expressed in the following form$\text{m} \text{=} {\text{m}}_{\text{0}} \text{+ βδ} \text{m} \text{,}$ where β is the "distance" in the direction of the search δ***m***, and **m**₀ is the unperturbed model. The corresponding relative target position is given by the following expression:$\text{x} \text{(τ)=} \text{L} \text{(τ)[} {\text{m}}_{\text{o}} \text{+βδ} \text{m} \text{]+} \text{a} \text{(τ)}$ or$\text{x} \text{(τ) =} {\text{x}}_{\text{o}} \text{(τ)+β} \text{d}$ with$\text{d} \text{=} \text{L} \text{(τ)δ} \text{m} \text{.}$ Taking the square of the Euclidian norm of Equation (30),${\text{ρ}}^{\text{2}} {\text{= ρ}}_{\text{0}}^{\text{2}} {\text{+ 2β〈x}}_{\text{0}} \text{,} \text{d} {\text{〉 + β}}^{\text{2}} \text{∥} \text{d} {\text{∥}}^{\text{2}} \text{.}$ Solving for β, it is then possible to obtain the expression$\text{β =} \frac{\text{-〈} {\text{x}}_{\text{o}} \text{,} \text{d} \text{〉±} \sqrt{\text{〈} {\text{x}}_{\text{o}} \text{,} \text{d} {\text{〉}}^{\text{2}} \text{+∥} \text{d} {\text{∥}}^{\text{2}} {\text{(ρ}}^{\text{2}} {\text{-ρ}}_{\text{o}}^{\text{2}} \text{)}}}{\text{∥} \text{d} {\text{∥}}^{\text{2}}}$ Because only the searches in the positive δ***m*** direction are allowed, negative solutions to Equation (33) or those that are not purely real, are not accepted in the algorithm of the preferred embodiment.

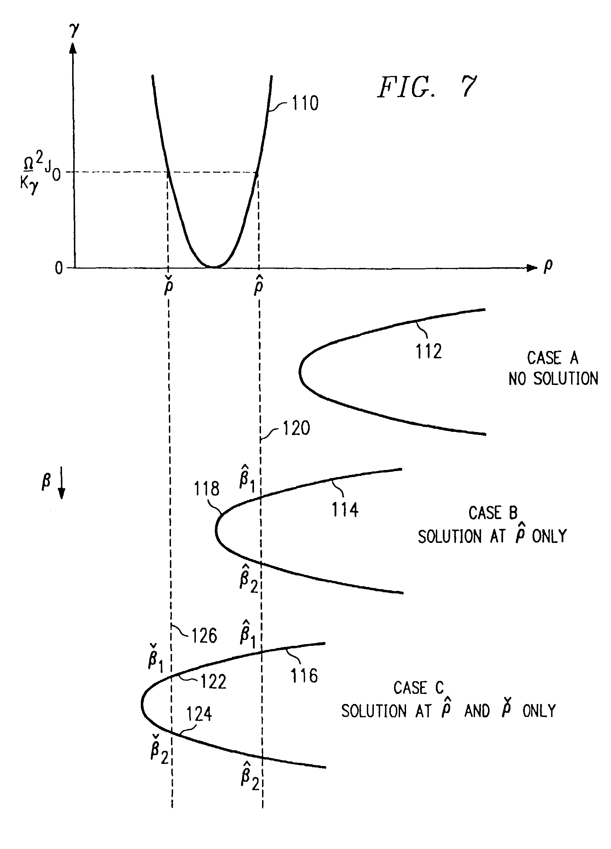

FIGURE 7 illustrates the bounding that occurs to obtain values for β̂₁ and β̂₂ by substituting ρ̂ (See Equation (27)) for ρ and Equation 33. Values for β̂₁ and β̂₂ are determined from ρ̂ in a similar manner. Referring to FIGURE 7, there is shown the effect of the constraint for the penalty function. With curve 110 representing the penalty function the example imposes the constraint (27) so that the penalty cannot exceed J₀ without leaving the bracket [ 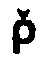 , ρ̂]. Additionally, with this constraint, curve 112 shows Case A where no solution occurs for Equation (33), since no positive real β yields a ρ within the bracket. Curve 114 shows Case B where a solution only at ρ̂ occurs. Curve 116 shows Case C where a solution occurs at ρ̂ and 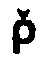 . By straight forward differential calculus, it can be shown from Equation (32) that${\text{min}}_{\text{β}} {\text{{ρ}}^{\text{2}} {\text{} = ρ}}^{\text{2}} {}_{\text{0}} \text{-} \frac{\text{〈} {\text{x}}_{\text{0}} \text{,} \text{d} {\text{〉}}^{\text{2}}}{\text{∥} \text{d} {\text{∥}}^{\text{2}}}$ If this exceeds ρ̂², the square of the largest ρ for which γ equals J₀, there clearly is no solution. This is Case A that curve 114 describes. If, 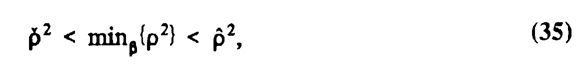 The solutions β̂₁ and β̂₂ exist for ρ̂, but there are no solutions for 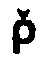 . Curve 114 shows this as Case B which is bracketed by [β̂₁,β̂₂]. This is that portion 118 to the left of the ρ̂ dash line 120. If, further,${\text{min}}_{\text{β}} {\text{{ρ}}^{\text{2}} \text{} <} {\hat{\text{ρ}}}^{\text{2}} \text{,}$ there are solutions β̂₁, β̂₂ for ρ̂ and solutions β̂₁, β̂₂ for 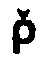 . Curve 116 shows this as Case C as bracketed by [β̂₁, 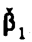 ] and [β̂₂, 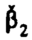 ] as depicted by those portions 122 and 124 between dash line 120 for ρ̂ and dash line 126 for 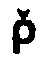 . Thus, the linear search must consider two ranges in Case C which curve 116 passes. On the other hand, if a speed constraint or maximum acquisition range is imposed, a narrower range for the optimal solution may be established.

It should be noted that the maximum range constraint may be absorbed into the range-at-time of constraint once ρ_{*N*} is established by the flash ranging active radar fix. As usual, the bandwidth Ω is geared to the precision to which ρ_{*N*} is known and is small when ρ_{*N*} is believed to be accurate.

Although the above description adequately illustrates the operation of the preferred embodiment, unpublished Appendix B as stated previously provides a source code listing to more explicitly illustrate a functioning example the operation of the "flash ranging" as well as conversion aspects of the preferred embodiment.

### APPENDIX A

### TEXAS INSTRUMENTS AIR-TO-AIR PASSIVE RANGING ALGORITHM

This paper describes a new air-to-air passive ranging algorithm developed at Texas Instruments and gives ranging results for several simulated mission scenarios. The evolution of the algorithm is traced to contrast it with alternatives considered earlier in the development. We begin by discussing the nature of the air-to-air passive ranging problem and factors affecting ranging performance.

The goal of air-to-air passive ranging is to determine the range from one aircraft, called "ownship," to another, called "target," by detecting electromagnetic energy emanating from target. For this purpose ownship is equipped with directional receivers which measure the angle of the arriving energy during a data collection interval. To this are added fixes of ownship's position and heading obtained from the on-board inertial navigation system (INS). For most applications the energy will be in the radio frequency (rf) or infrared (IR) regions of the spectrum.

A rf system would be designed to monitor radar transmissions and rf communications from the target. Very long detection ranges are feasible - substantially exceeding those at which target could acquire ownship on its own radar. Thus, ownship may be able to locate target without itself being detectable. In this situation the primary advantage of passive ranging is gained: stealth. Long acquisition range also affords ownship more time to respond to target's presence. The directional receiver may be implemented by a 2-axis rf interferometer, or several such units covering different fields of view.

The infrared system would sense black body radiation emitted by the target. Therefore, operation is independent of target transmission protocol. Detection range is considerably reduced and ownship would be within range of target's radar. Two factors mitigate this risk: target might limit radar usage to avoid detection and convergence time for the IR passive ranging system is short. The latter accrues from the shorter operating ranges and the higher spacial resolution of the IR sensor. The directional receiver may be implemented using a FLIR imager and video tracker.

### 1 NATURE OF THE AIR-TO-AIR RANGING PROBLEM

The dominating aspect of air-to-air passive ranging is ill-conditioning. This is a condition in which small errors in the measurements can cause much larger ones in the computed range. There are two principal causes
- limited baseline
- need to infer target motion from the data
The relation between baseline and ranging accuracy can be explained in terms of triangulation. This is appropriate, although there is no triangulation step in the ranging algorithm, because a triangulation principle is at work whenever range is estimated from sightings at different locations. Factors affecting triangulation accuracy will have similar effects on ranging accuracy. Two of these are the length and direction of the baseline.

All else being equal, sightings projected from a long baseline will have a more perpendicular intersection than those from a short baseline. This aids accuracy because the intersection of nearly parallel lines is strongly influenced by the angles of the lines while the intersection of nearly perpendicular lines is not. In air-to-air passive ranging baseline is limited by the distance that can be traveled during the data collection interval.

Direction is equally important. For example, if the aircraft fly toward one another, the baseline lies along the path connecting them and sightings are parallel at all times. Ownship can exercise partial control over baseline direction but this requires a notion of target's heading. Work at Texas Instruments has focused on how an estimate of target heading can be quickly determined.

In air-to-ground ranging the target can be presumed stationary and ranging amounts to determining its spacial coordinates in 3-dimensional space. Thus, a model representing the target has 3 degrees of freedom (2 if the altitude of ownship relative to target is known). The situation is more complicated in air-to-air ranging where the model must describe target's position as a function of time. Accordingly, we refer to the model as "kinematic." The additional degrees of freedom aggravate ill-conditioning because they decrease the redundancy through which noise is rejected. To recover redundancy the data collection interval must be extended. This has the effect of slowing the convergence of the algorithm.

The form of the kinematic model is assumed a priori. This, in effect, limits the scope of the motion that can be described. Over a short interval a simple model suffices. The more complex motion possible in a longer interval may be accommodated by a more complex model. However, this may be counterproductive because of the associated need for more data and a longer data collection interval. Therefore, we have adopted a relatively simple model having 6 degrees of freedom. This is equivalent to assuming the target flies approximately a straight line path during data collection. For reliable performance, the convergence time of the algorithm should make this a good assumption. Therefore, factors affecting convergence time, such as measurement accuracy, are extremely important. However, we shall see in a later section that unmodeled target accelerations are not always detrimental to ranging accuracy.

The interplay of factors affecting ranging accuracy is suggested by Figure 1. 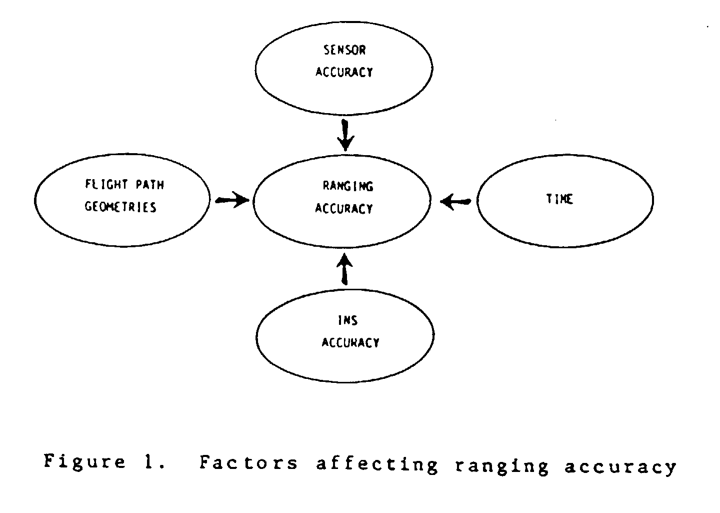 For example, ranging accuracy can be maintained while convergence time is reduced by improving sensor accuracy or as the result of a more favorable flight path geometry. Favorable geometries are characterized by high angular rates of change of bearing (although we shall see this is not a sufficient condition). This explains why faster convergence is possible at short range: it takes twice as long to establish a particular geometry at 100 km as at 50 km.

### 2 PHYSICAL MODEL OF THE AERIAL ENCOUNTER

A sketch depicting an aerial encounter is given in Figure 2.
The coordinate system moves in translation such that ownship remains at the origin at all times. The directions of the axes are fixed in inertial space by references from the INS. We will assume bearings measurements are referenced to these axes rather than to the body axes of ownship. Time is taken as zero at the onset of data collection. Target position at 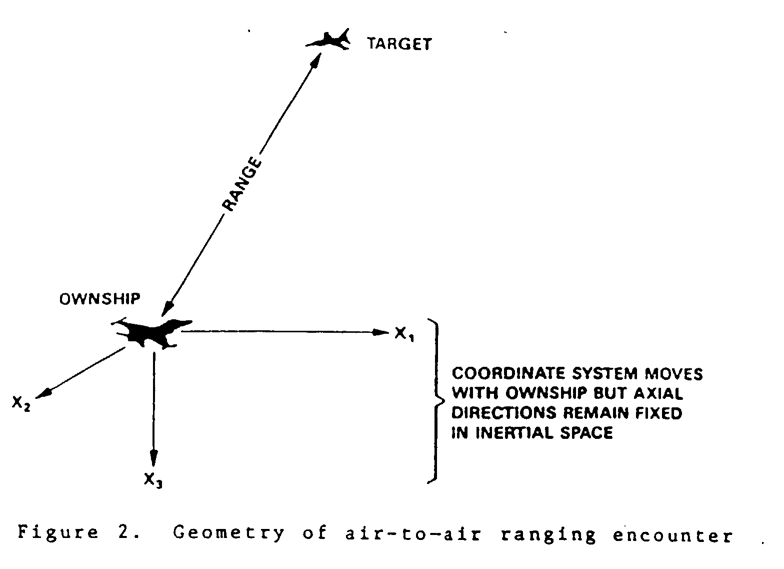 time t is expressible 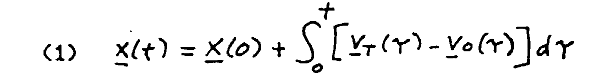 where y_{T} and y_{O} are the velocities of target and ownship, respectively. If the target maintains constant velocity in the interval [O,t], (1) can be simplified to 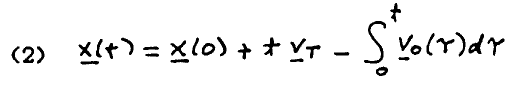 The integral is simply the displacement of ownship over [O,t] - a quantity available from the INS. We will assign the symbol a(t) to represent the negative of this displacement. Thus$\text{(3)} {\text{x}}_{̲} \text{(t) =} {\text{x}}_{̲} \text{(o) + t} {\text{v}}_{̲} {\text{}}_{\text{T}} \text{+} {\text{a}}_{̲} \text{(t)}$ Data samples occur at discrete times tᵢ. As a notational shorthand we will use subscripts to indicate the time parameter, e.g.,${\text{x}}_{̲} {\text{}}_{\text{i}} \text{=} {\text{x}}_{̲} {\text{(t}}_{\text{i}} \text{) and} {\text{a}}_{̲} {\text{}}_{\text{i}} \text{=} {\text{a}}_{̲} {\text{(t}}_{\text{i}} \text{).}$

As the data comprise measurements of angle, the spherical coordinate system of Figure 3 is often more convenient. 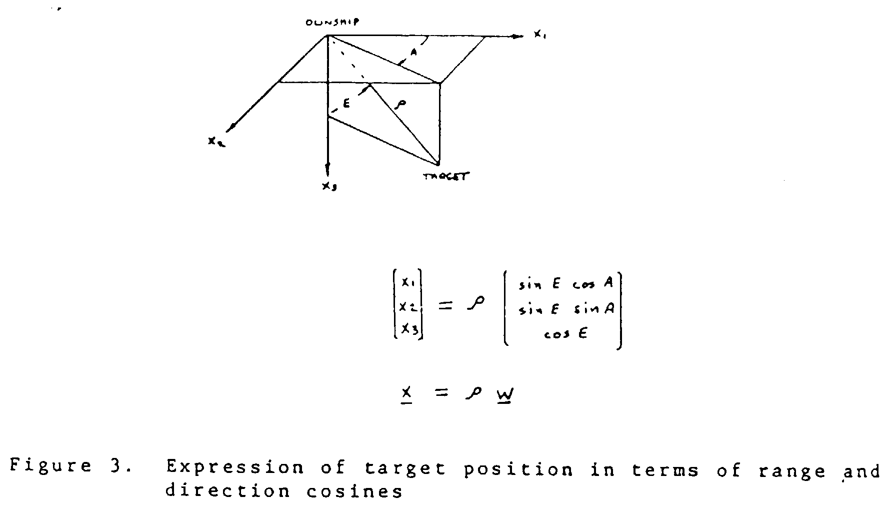 We define the azimuth "A" and the elevation "E" as shown in Figure 3. In spherical coordinates target position can be expressed 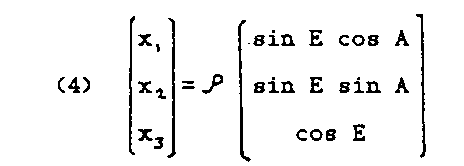 where ρ is range. Symbolically, equation (4) may be expressed$\text{(5)} {\text{x}}_{̲} \text{= ρ} {\text{w}}_{̲}$ where the elements of the "sighting vector" w are direction cosines of the line-of-sight to the target and are subject to measurement. The range ρ is to be determined.

Using this model an important limitation is readily proved: range is indeterminate in the absence of ownship acceleration. To see this, note that for constant ownship velocity (3) can be written$\text{(6)} {\text{x}}_{̲} \text{(t) =} {\text{x}}_{̲} \text{(o) + t} {\text{v}}_{̲} {\text{}}_{\text{R}}$ or, expanding with the aid of (5)$\text{(7) ρ(t)} {\text{w}}_{̲} \text{(t) = ρ(o)} {\text{w}}_{̲} \text{(o)+ t} {\text{v}}_{̲} {\text{}}_{\text{R}}$ Clearly, if a particular ρ(t) and v_{R} satisfy (7), then σρ(t) and σv_{R}, where σ is an arbitrary positive scalar, also satisfy it. Therefore, there is a fundamental ambiguity between range and speed and there are an infinity of target models consistent with the sightings.

This can also be shown pictorially. Consider Figure 4. 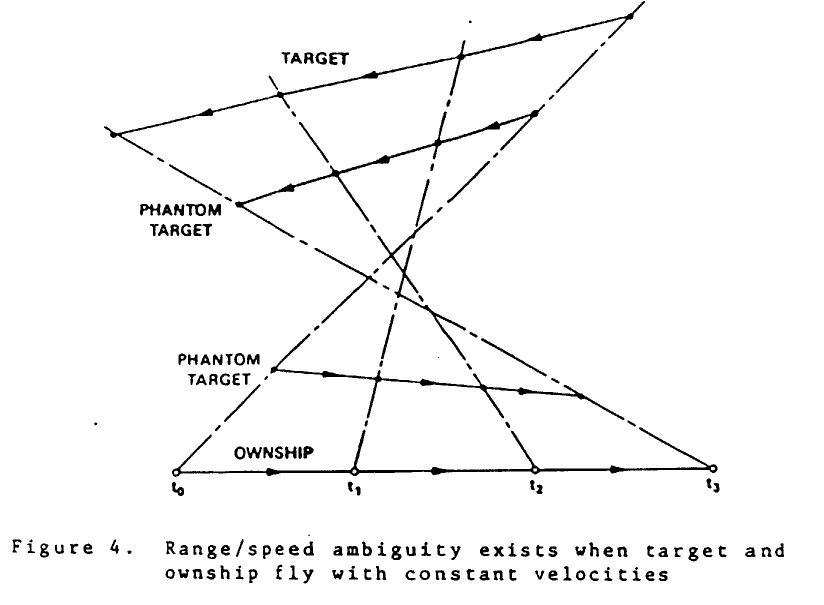 Here the target is flying approximately from right to left at the top and ownship if flying from left to right at the bottom. Bearing measurements, called "sightings" occur at times t₀, t₁, t₂ and t₃. Note the existence of phantom targets, each flying with constant velocity, which are equally consistent with the sightings and thus indistinguishable from the target.

Figure 5 shows what happens when ownship accelerates. The figure is identical to Figure 4 except ownship slows in the interval [t₂,t₃]. The phantoms are no longer consistent with the sighting at t₃ and may be rejected. However, a sighting error of one degree at t₃ could cause the nearest phantom to be selected in lieu of the target. The impact on range is about 20 %.

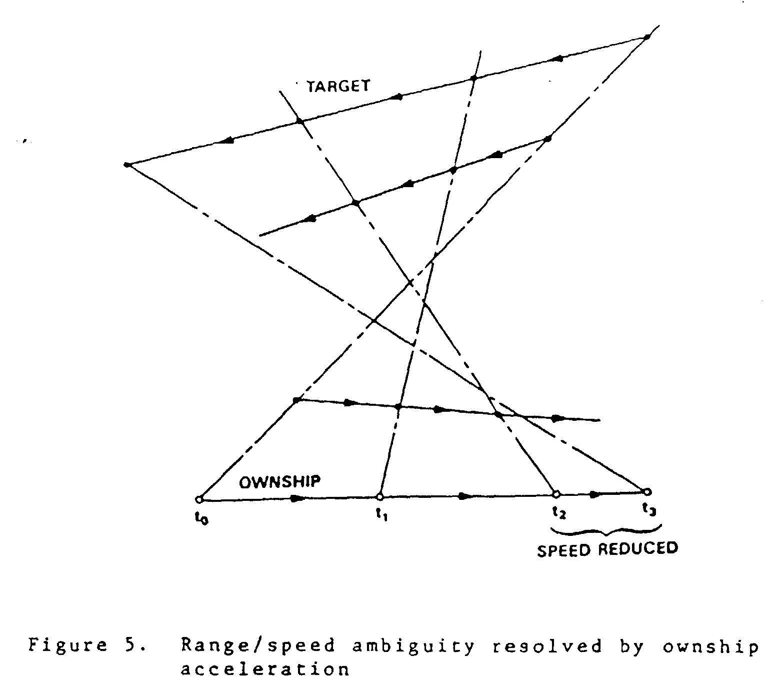

### 3 DIRECT COMPUTATION OF RANGE FROM THE SIGHTING DATA

Under the assumption of constant target velocity, range can be computed from three sightings by the method described in the following. Using the subscript notation to denote time, equation (3) can be expressed$\text{(3)'} {\text{x}}_{̲} {\text{}}_{\text{i}} \text{=} {\text{x}}_{̲} {\text{}}_{\text{o}} {\text{+ t}}_{\text{i}} {\text{v}}_{̲} {\text{}}_{\text{T}} \text{+} {\text{a}}_{̲} {\text{}}_{\text{i}} \text{.}$ To simplify the explanation we will assume measurements are taken every Δt seconds. Thus, for three measurements 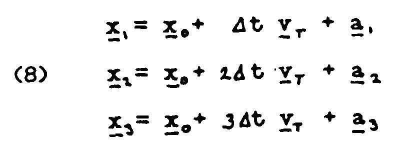 Subtracting equations in pairs eliminates the unknown xₒ yielding two equations: 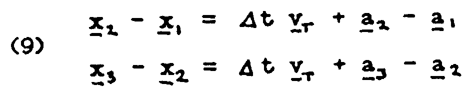 These may be subtracted to eliminate the unknown v_{T} :$\text{(10)} {\text{x}}_{̲} {\text{}}_{\text{1}} \text{- 2} {\text{x}}_{̲} {\text{}}_{\text{2}} \text{+} {\text{x}}_{̲} {\text{}}_{\text{3}} \text{=} {\text{a}}_{̲} {\text{}}_{\text{3}} \text{-} {\text{a}}_{̲} {\text{}}_{\text{2}} \text{- (} {\text{a}}_{̲} {\text{}}_{\text{2}} \text{-} {\text{a}}_{̲} {\text{}}_{\text{1}} \text{)}$ Converting to spherical coordinates, the unknown ranges can be factored out to yield 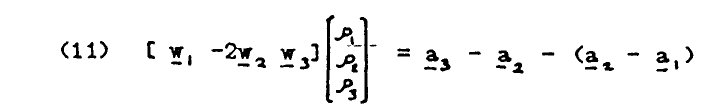 If the 3X3 matrix on the left is nonsingular, (11) can be solved for the ranges. The need for ownship acceleration is also apparent in (11). If ownship flies with constant velocity, the aᵢ are proportional to iΔt and the right hand side vanishes. A nontrivial solution can exist in this case if and only if the matrix is singular; singularity implies the solution is not unique. This insight suggests that ownship could enhance ranging performance by flying a course which maximizes the right hand side of (11). A more sophisticated strategy could be based on maximizing the minimum eigenvalue of the matrix on the left.

Note that ownship acceleration does not directly appear in the ranging equations. Its influence is limited to the effect on ownship's flight path. High g-forces, per se, are unimportant.

Unfortunately, the simple algorithm represented by equation (11) does not provide a vehicle for practical ranging. Why this is so is best illustrated by example. Figure 6 shows equation (11) evaluated with Δt = 75 seconds for an aerial encounter labeled "encounter A." 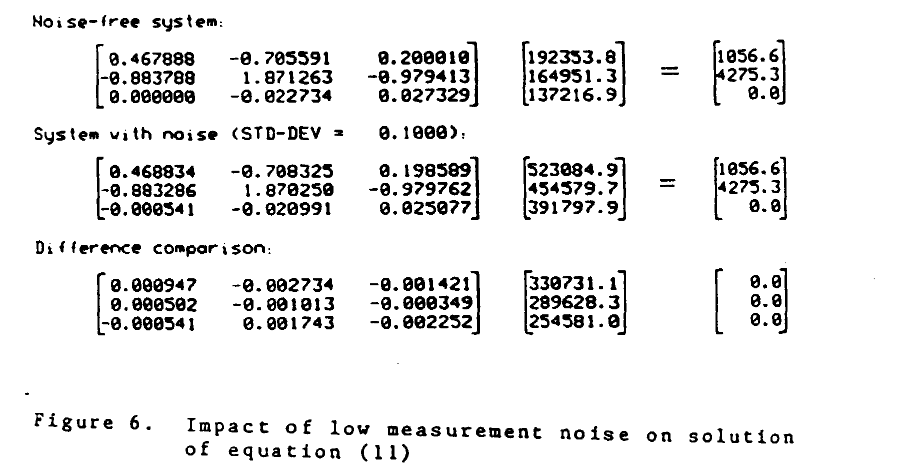 Range closure is from 193 Km (116 miles) to 137 Km (82 miles). The noise-free system is shown at the top of the figure and a system having small (0.1 degree standard deviation) measurement errors, at the middle. The measurement noise does not affect the vector on the right, which depends on the INS. The solution vector (left) is affected by the noise. In fact, the effect of the noise is greatly exaggerated by ill-conditioning; minimum range error is 170%. The arrays at the bottom of the figure are given to facilitate comparison.

Figure 7 gives a similar comparison with a more typical noise level of 0.5 degree standard deviation. 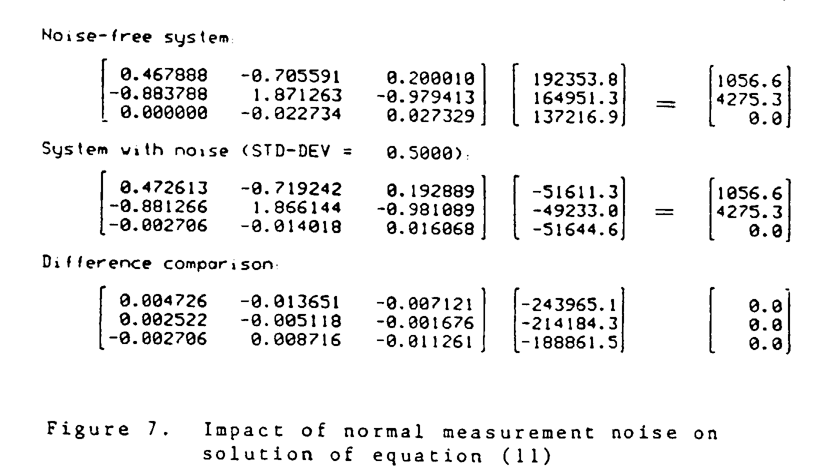 Now the computed range is not only grossly in error but is physically unrealistic, since range is intrinsically positive.

Some redundancy can be introduced by "stacking" equation (11) for additional sightings, as illustrated for 5 sightings in equation (12) 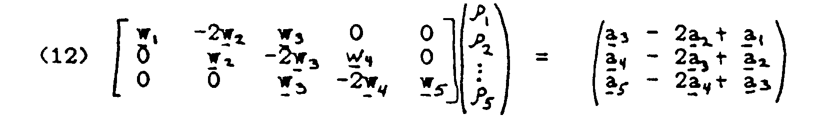 Since there are 9 equations and 5 unknowns, redundancy is on the order of 2:1. A redundancy of 3:1 may be approached in the limit. We have found stacking without increasing the time span of the data actually degrades the condition number of the matrix in (12) - the difference of successive sighting vectors is essentially noise. Therefore, the value of this approach is limited to the insights it provides.

### 4 FORMULATION OF PASSIVE RANGING AS AN INVERSE PROBLEM

The goal of the inverse problem is to find the kinematic model of the target which is most consistent with the measured azimuths and elevations recorded during the data collection interval. We will refer to these measurements as the "actual data". Consistency is determined by numerically computing "synthetic data" from the model and comparing on a one-to-one basis with the actual data. The result is summarized by a single nonnegative number. As mentioned, the form of the model is assumed a priori. The task of the algorithm is then to evaluate the parameters of the model.

The terminology "inverse problem" arises in distinction to the much simpler "forward problem" of computing synthetic data given the model. Solution of the forward problem is a component of the solution of the inverse problem.

To make these ideas more concrete, consider Figures 8 and 9 which give actual and synthetic data over a 150 second data collection interval. 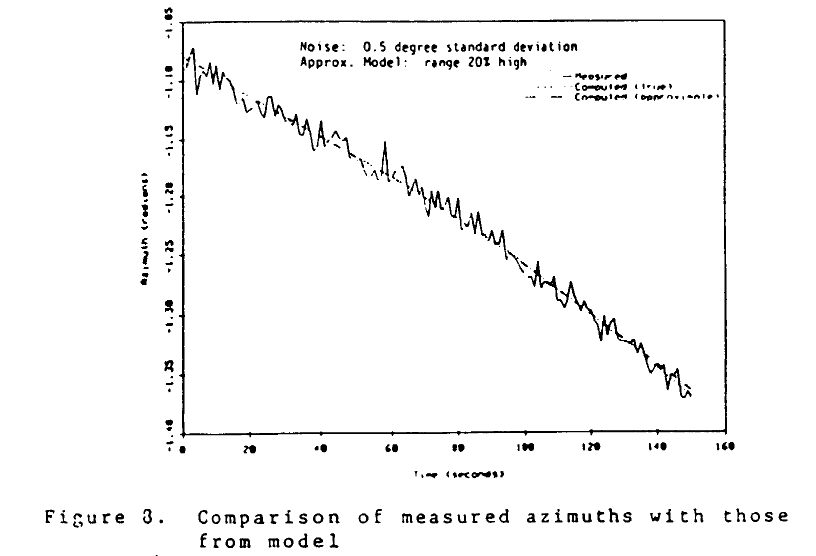 The curves depicting the actual data are jagged due to measurement noise. In contrast, the noise-free synthetic data curves are smooth. There are two synthetic curves, labeled "exact" and "approximate." The former is equal to the actual data minus measurement noise. The approximate model was obtained by interrupting the ranging algorithm when range error was still 20%. Note that the two synthetic data curves are quite similar. Differences in Figure 9 are emphasized by the scale factor used for plotting. When the ranging algorithm was allowed to resume convergence, the fit 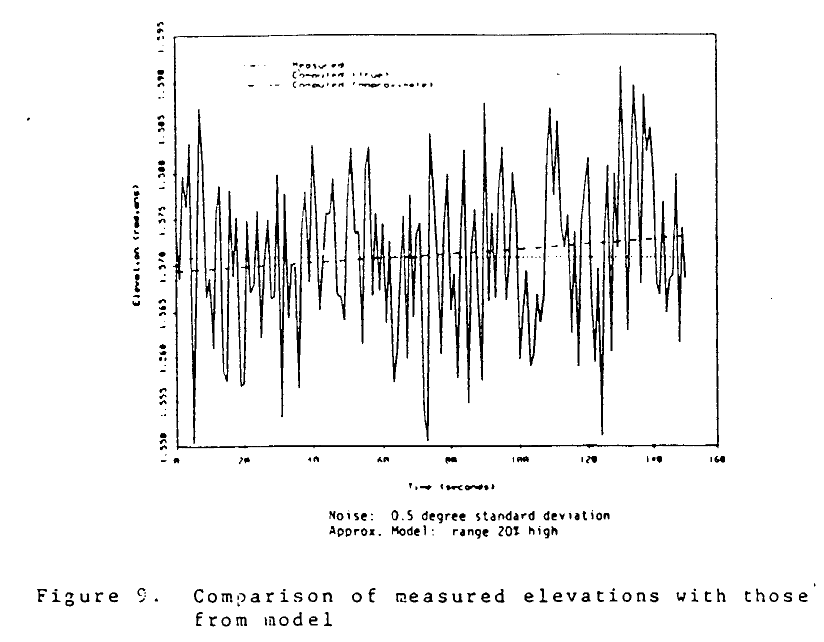 of the approximate model improved and eventually superseded that of the exact model. This typical and is used as an indication of convergence.

### 5 THE RANGING ALGORITHM

The first step is to quantify what we mean by "similarity" when comparing the actual and synthetic data. This is done by defining an error metric - a measure of dissimilarity - which is minimum when the data sets are most similar. The error metric is the familiar mean squared error (MSE) criterion, here defined 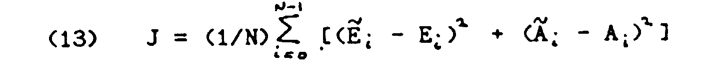 where N is the number of time samples in the data collection interval, 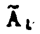 and 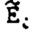 are the observed azimuth and elevation at time tᵢ and Aᵢ and Eᵢ are the corresponding values computed from the model. A weighted mean squared error criterion results when nonnegative weight(s) are included under the sum. These may, or may not, be functions of time. One application would be to compensate for different precisions in the measurement of azimuth and elevation. However, we have exclusively employed the simple unweighted criterion of (13).

The next step is to pick the canonical form of the target model, here, defined by (6) with v_{R} = v_{T}. This allows azimuth and elevation to be expressed 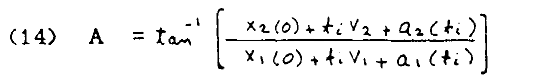 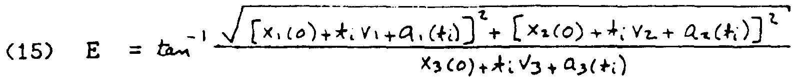 Substitution into (13) yields the desired relation between sighting error and model parameters and measurements. To avoid lengthy expressions we will leave this step implicit. It will also be convenient to collect the six model parameters into a 6-vector which we denote m. The first 3 elements relate to initial target position and the last 3, to target velocity. The m which minimizes J is denoted as m̂.

The minimization problem cannot be solved in closed form, meaning we cannot express m̂ as a function of the measurements (bearings and INS outputs) using a finite number of terms. Therefore, the following recursive procedure was employed:
(a) A start-up model is chosen
(b) A perturbation of the model δm which causes J to decrease is computed
(c) A search is conducted along a straight line in the parameter space of the model for the minimum of J. The model which minimizes J becomes the new resident model. The direction of the straight line is given by (b)
(d) If several consecutive iterations leave the model virtually unchanged, the resident model is taken as the solution; otherwise, a new iteration is begun at (b)
We have considered several algorithms which differ primarily with regard to step (b). These are discussed in the following.

### 6 DETERMINING THE PERTURBATION DIRECTION

To find the perturbation direction we first derive approximate expression for J(m + δm) which is accurate for small δm and which is simple enough that a closed form expression can be found for δm̂. This is solved for δm̂. Only the direction is used, magnitude is recomputed in step (c). The approximate expression is Taylor series [1] truncated after the second or third term. Figure 10 shows these models and lists several associated solution techniques.

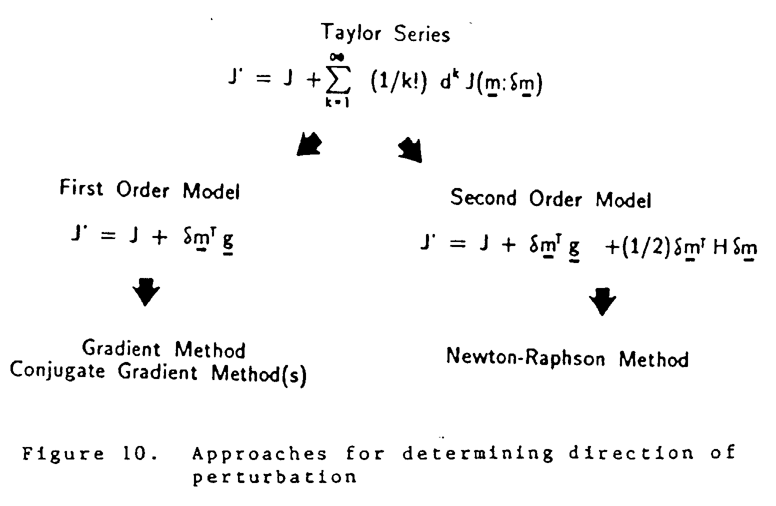

The gradient method, also known as the method of steepest descent, is one of the first techniques to be applied to this kind of problem. Its principal virtue is simplicity. The gradient, denoted by the symbol g in Figure 10, is a 6-vector whose elements are the first order partial derivatives of J with respect to the model parameters. A property of g is that it points in the direction of greatest increase of J. Therefore, we take the perturbation in the opposite direction.

The gradient method has several weaknesses: (i) the negative gradient may be an effective perturbation direction only for perturbations of very small magnitude, (ii) the linear search, step (c), is not an optimal strategy when used with the gradient method and (iii) numerical noise may arrest convergence short of the solution in ill-conditioned problems.

Problem (ii) is overcome by the conjugate gradient method. Previous research at Texas Instruments had shown successive minimization of J is suboptimum when the direction is the negative gradient. The author was able to derive a linear system of equations whose solution yielded the optimum perturbation magnitudes for use with the gradient method [2]. However, a simpler approach is provided by the conjugate gradient method. Here the perturbation directions are modified such that successive minimization of J is globally optimum. For a discussion of conjugate gradient methods, including certain caveats applicable to this discussion, see [3]. It is worth noting there is more than one conjugate gradient method. We employ the Fletcher-Reeves conjugate gradient method.

By overcoming (ii) the rate of convergence initially doubled but was arrested by numerical noise because problem (iii) is common to all gradient techniques. We investigated several standard ways of extending convergence but found none to be fully satisfactory*. Therefore, we abandoned the gradient methods in favor of the Newton-Raphson method which more effectively deals with (i) and (iii).
* These included use of scaling matrices and double precision computer arithmetic for certain key operations

The Newton-Raphson algorithm utilizes a second degree approximation which remains accurate for perturbations of much greater magnitude. Therefore, larger step sizes are feasible and fewer iterations are required to achieve convergence. On the other hand, per-iteration processing is increased. This premium has been minimized by a simplification which does not impair algorithm performance and, in particular, the ability of the Newton-Raphson method to overcome problem (iii).

Referring to Figure 10, the second degree model is$\text{(16) J(} {\text{m}}_{̲} \text{+ δ} {\text{m}}_{̲} \text{) = J(} {\text{m}}_{̲} \text{) + δ} {\text{m}}_{̲} {\text{}}^{\text{T}} {\text{g}}_{̲} \text{+ (1/2) δ} {\text{m}}_{̲} {\text{}}^{\text{T}} \text{H δ} {\text{m}}_{̲}$ Note that (16) is comprised of the first degree model plus a quadratic form defined by the Hessian matrix H. It follows that the new computations are associated with computing H.

Considering the computation of the gradient term, it can be shown from (13) that 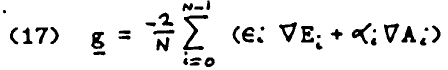 where εᵢ and αᵢ are the errors in elevation and azimuth, respectively, at time tᵢ. Near the solution εᵢ and αᵢ resemble white noise with zero mean and a variance approximately equal to the variance of the measurement noise in Eᵢ and Aᵢ. Because εᵢ and αᵢ are uncorrelated with the smoothly varying gradients, the terms of the sum "average out" and g is very small. In fact, g vanishes at the solution. Computational advantage can be taken of the fact that the partial derivatives with respect to the velocity components of the model are equal to those with respect to the position components multiplied by time. This may be shown using (6).

Consider now the computation of the Hessian matrix, defined${\text{(18) H = [h}}_{\text{ij}} \text{] = [} \frac{{\text{∂}}^{\text{2}} \text{J}}{{\text{∂m}}_{\text{i}} {\text{∂m}}_{\text{j}}} \text{] ; i,j = 1,6}$ It follows from (18) that H is symmetrical. Therefore, only 21 of the 36 elements can be unique. Allowing for the greater difficulty in evaluating the second order partial derivatives, the cost of computing H is about ten times the cost of computing g. We have been able to reduce this to less than a factor of two. While this is achieved through approximation, the essential accuracy of the second degree model is retained, particularly near the solution where most needed. The exact expression for the ijth element of H is 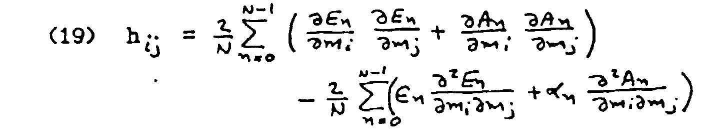 Again, εₙ and αₙ do not correlate with the smoothly varying second order partial derivatives and the second sum is small relative to the first. The approximation results from neglecting this term. It may be verified that the approximation for H may be expressed 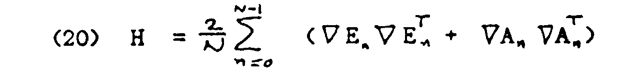 Note that the gradients in (20) were evaluated for (17) and need not be recomputed. It follows strictly from the form of (20) that H is positive semidefinite and practically, H has never been observed to be nonpositive definite.

It is possible to arrive at (20) by a different path. Returning to (13) replace Eₙ and Aₙ by their first degree perturbation models:${\text{(21) E'}}_{\text{n}} {\text{= E}}_{\text{n}} \text{+ δ} {\text{}}_{{\text{m}}_{̲}} {\text{}}^{\text{T}} {\text{∇E}}_{\text{n}}$${\text{(22) A'}}_{\text{n}} {\text{= A}}_{\text{n}} \text{+ δ} {\text{}}_{{\text{m}}_{̲}} {\text{}}^{\text{T}} {\text{∇A}}_{\text{n}}$ where the Eₙ and Aₙ and the gradients are evaluated for the unperturbed model. Expand the squares and collect terms. The result is of the form (16) but with H defined by (20). The accuracy of the approximation has also been verified empirically.

When H is positive definite the second degree model has a finite minimum which may be computed by solving the system of linear equations$\text{(23) H} {{\text{δ}}_{\text{m}}}_{̲} \text{= -} {\text{g}}_{̲}$ This solution gives both the direction and magnitude of the perturbation. However, we reevaluate the magnitude in step (c) as this allows nonlinearities of higher degree to be partially comprehended.

We will see in a later section that when the system is augmented to include certain constraint functions the positive definiteness of H may be destroyed. In this case (23) may have an unbounded minimum. We cope with this exceptional situation by determining the δm of specified magnitude which minimizes J. The algorithm utilizes an eigenvalue-eigenvector decomposition which is not computationally demanding in 6 dimensions. We will not pursue this algorithm here but turn to the standard procedure, employed when H is positive definite.

The first step is to factor H into the product of a lower triangular matrix L and its transpose L (an upper triangular matrix)${\text{(24) H = L L}}^{\text{T}}$ This is done using Cholesky's algorithm [4]. Our analysis indicates 6 square roots, 15 divides and 35 multiply-accumulate operations are required*.

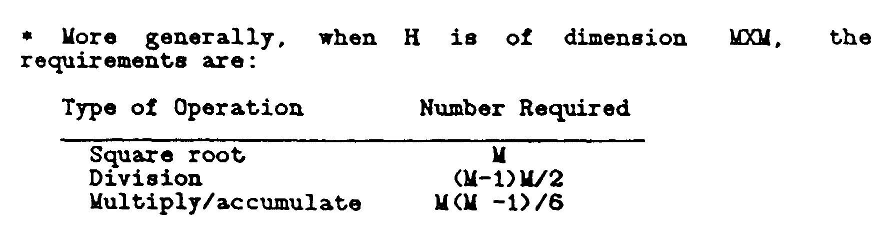

Following factorization, (23) may be solved in two steps. Defining$\text{(25)} {\text{y}}_{̲} {\text{= L}}^{\text{T}} {\text{δm}}_{̲}$ we have from (23)$\text{(26) L} {\text{y}}_{̲} \text{= -} {\text{g}}_{̲}$ There is only one nonzero term in the first row of L and we may immediately solve for${\text{(27) y}}_{\text{1}} {\text{= -g}}_{\text{1}} {\text{/l}}_{\text{11}}$ This done, y₁ can be eliminated to yield a new triangular system of dimension 5. This may be immediately solved for y₂ which may then be eliminated, etc. Continuing until all elements of y are known, we may then solve${\text{(25)' L}}^{\text{T}} \text{δ} {\text{m}}_{̲} \text{=} {\text{y}}_{̲}$ for δm using essentially the same procedure. The cost of solving (27) and (25) is 12 divide and 30 multiply-accumulate operations**.
** For the general case where y is of dimension M, the computation requires 2M divide and M(M-1) multiply-accumulate operations.

The accuracy of the solution obtained in the preceding can be improved by the iterative Forsythe-Moler algorithm. Each iteration of this algorithm requires what amounts to a new solution of (27) and (25)' but does not require H to be refactored. It works as follows: Let the initial solution be δmₒ. If perfect, substitution in (23) would yield an equality. But, due to roundoff error there will usually be a small residual$\text{(28)} {\text{r}}_{̲} {\text{}}_{\text{o}} \text{= H} {\text{δm}}_{̲} {\text{}}_{\text{o}} \text{+} {\text{g}}_{̲}$ This is computed using double precision arithmetic. The first iterative improvement step is to solve$\text{(29) H} {\text{c}}_{̲} \text{= -} {\text{r}}_{̲} {\text{}}_{\text{o}}$ for the correction c. The improved solution becomes$\text{(30) δ} {\text{m}}_{̲} \text{, = δ} {\text{m}}_{̲} {\text{}}_{\text{o}} \text{+} {\text{c}}_{̲}$ A new residual is computed. If sufficiently small, the procedure is terminated. Otherwise, a new iteration with δm₁ replacing δmₒ is undertaken.

The principal virtue of these algorithms is their insensitivity to numerical roundoff error. A rigorous treatment of this subject is fairly difficult and we refer the interested reader to [5], and [6]. However, the underlying principle can be explained simply as follows. Note from (24) that L is analogous to the square root of H. As with scalar quantities the square root operation results in a compression of dynamic range. For example, if the elements of H range from 10^{-N} to 10^{N}, the elements of L will range approximately from 10^{-N/2} to 10^{N/2}. To see why this is important consider the three term sum$\text{S = A + B + (-A) = B}$ whose operations are representative of a vector dot product operation. In the computer the first two terms would be added first. If the magnitude of B is less than one-half the least significant digit of A, there results the roundoff error$\text{S = A + B = A (error)}$ Consequently, when (-A) is added in the next step, we get$\text{S = A + B + (-A) = O (promulgated error)}$ instead of B. Obviously, this error could profoundly affect subsequent computations, for example, D = C/S. Factorization reduces the likelihood and severity of the problem by equalizing the magnitudes of A and B.

The numerical stability of factorization algorithms, of which the Cholesky algorithm is but one, has led to their incorporation into optimal estimation theory*. Bierman [7] has observed their performance is roughly comparable to a Kalman filter implemented with twice the numerical precision.
* The Householder transformation is most widely used in these applications.

### 7 DETERMINING THE PERTURBATION MAGNITUDE

Perturbation magnitude is determined in step (c) of the ranging algorithm by a "linear search." This terminology derives from the fact that the minimum sighting error is sought along a straight line path in the parameter space of the model. The line passes through the origin and is directed in the perturbation direction determined in step (b). The only free parameter is perturbation magnitude, therefore, the search is 1-dimensional. The minimum is determined by trial-and-error using a procedure known as Davidon's cubic interpolation method [8]. The computations are based on the exact model (13), (14) and (15) and therefore, are themselves exact. This is the advantage of using step (c) to determine perturbation magnitude.

Davidon's algorithm works as follows. A bracket containing the minimum is established. Normally, this is done by increasing the upper limit of the bracket until either of two conditions are met:
- The derivative of J in the search direction is positive
- J is larger than at the origin
However, using the constraints introduced later, we have devised a way of computing it directly, avoiding trial-and-error in most cases. Next, J and its first order derivative in the direction of the search are computed at the boundaries of the bracket. These four numbers determine a cubic polynomial which is taken as a model of J within the bracket. The minimum of the cubic is readily computed analytically. The location of the minimum becomes a new boundary. Whether "upper" or "lower" depends on the value of the derivative of J there:

| Sign of derivative of J | Classification of boundary |
|---|---|
| Negative | Lower |
| Positive | Upper |

If the derivative is zero, the location is returned as the solution of the linear search. Since the new boundary divides the original bracket, the width of the new bracket is reduced. If "small enough," the center of the bracket is returned as the solution of the linear search. Otherwise, a new polynomial is fitted to the new bracket and the procedure iterated. The current program exits when the uncertainty in range is 100 m, or less, and the uncertainty in velocity is 0.1 m/sec, or less.

These operations are illustrated in Figures 11 and 12. 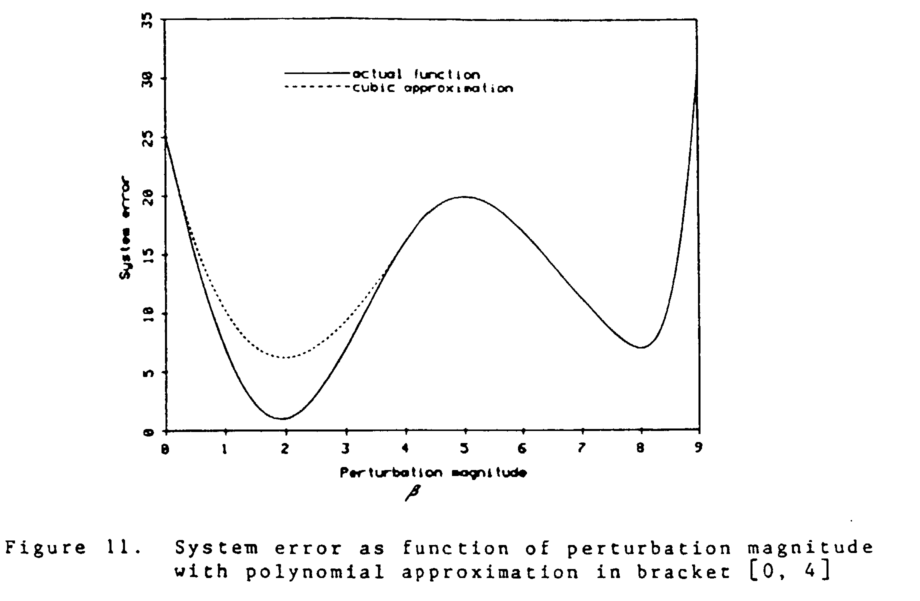 The solid curves give J as a function of perturbation magnitude. In Figure 11 the initial bracket is the interval [0,4]. The dashed curve is a plot of a cubic polynomial matched to J and its derivative at the end-points. The fit in the interior is not particularly good but the minima occur at similar locations. It is found J is increasing at the minimum of the polynomial β = 1.975. Therefore, this becomes a new upper boundary. The polynomial has been refitted to [O, 1.975] in Figure 12 (dashed curve). The approximation is now quite accurate throughout and the minima occur at virtually identical locations. This illustrates the rapid convergence that typifies the Davidon algorithm. However, in later iterations of the ranging algorithm the topography of J can become exceptionally flat and subject to artifacts caused by numerical noise. As a result, a newly defined boundary can be consistently upper (lower) and situated very near the previous one. We have 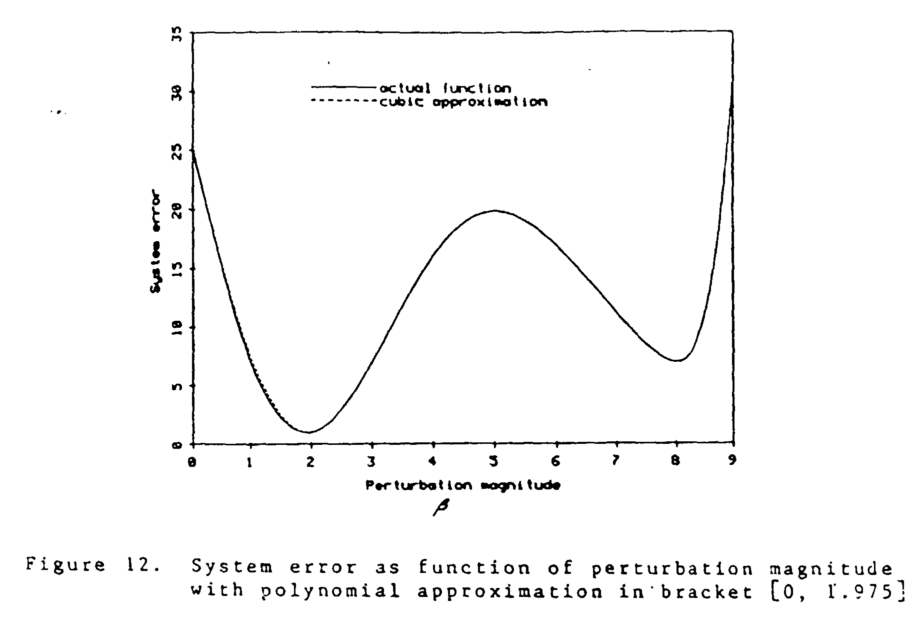 developed "accelerators" which detect condition and force a minimum reduction of bracket width.

### 8 CONSTRAINTS

Constraints are a mechanism for making available to the ranging algorithms knowledge of the real-world which is not explicitly present in the data. They function by restricting the domain of feasible solutions so that unrealistic target models are excluded. This speeds convergence and alleviates ill-conditioning. While additional computations are needed to implement the constraints, these are largely offset by a reduction in the number of iterations for convergence. By involving the constraints in determining the initial bracket in Davidon's algorithm, numerical overflow (underflow), which sometimes occurs when evaluating constraint functions within the stopband, is avoided.

The action of the constraints is indirect. More specifically, they are responsive to functions of model parameters - not to the parameters themselves. For example, the speed constraint is responsive to the magnitude of target velocity. Therefore, changes in velocity which preserve speed have no effect on the constraint. Further, the speed constraint is independent of the position components of the model. It follows that Hessian matrix for the speed constraint is of low rank. Similar statements hold for the other constraints, as well. However, the speed constraint is unique with regard to its ability to impart nonpositive definite behavior to the Hessian matrix for the system*.
* This can occur only when model speed is less than the nominal speed of the constraint.

The constraints are implemented as penalty functions which return nonnegative numbers (penalties) which are very small when the constraint is satisfied and large when it is violated. The penalties add to the sighting error to yield the "system error" which is minimized in solving the ranging problem. The fundamental structure of the ranging algorithm is unaffected by the constraints. Only the numbers appearing in the equations change. The additive nature of the constraints allows them to be developed and tested independently - a property of considerable practical importance.

The cost of implementing the constraints is substantially reduced by their independence of time and one-half of the model parameters. The former has an impact of N, where N is the number of time samples and the latter has an impact of approximately 3.

Since the penalties are negligibly small when the constraints are satisfied, the constraints have little effect on the result when the model is well within the feasible solution space. Clearly, it is important to choose constraint parameters so as not to exclude the true target model. This must be balanced with the desire to restrict the feasible solution space for better ranging performance. To optimize this tradeoff it may be attractive to adapt the constraint parameters for each individual target. This could employ a priori information obtained from intelligence sources and data derived from an electronic characterization of target transmissions.

Four constraints are employed in the current algorithm. One is velocity dependent and the other three are position dependent.

### 9 THE SPEED CONSTRAINT

Speed is the Euclidean norm of target velocity (magnitude velocity). The constraint derives from the supposition that an aircraft of a specified type will fly with approximately a nominal speed. The constraint is set up by defining the nominal speed, say 250 m/sec, and requiring the target not deviate from it by more than a certain amount, say 50 m/sec. The penalty function is${\text{(31) ψ = K}}_{\text{ν}} \text{(} \frac{{\text{µ - µ}}_{\text{R}}}{\text{Δµ}} \text{)} {\text{}}^{{\text{2m}}_{\text{ν}}}$ where
µ = speed of resident model
µ_{R} = nominal speed of the constraint
Kᵥ = weight of the constraint
Δµ = bandwidth of the constraint
Mᵥ = order of the constraint.
Note that the penalty equals the weight when the speed is one bandwidth from nominal. Thereafter, it increases rapidly at a rate dependent on the order. Within the passband the penalty is small. Bandwidth is chosen according to the uncertainty to which true target speed is known. A plot of (31) is given in Figure 13 for two orders. 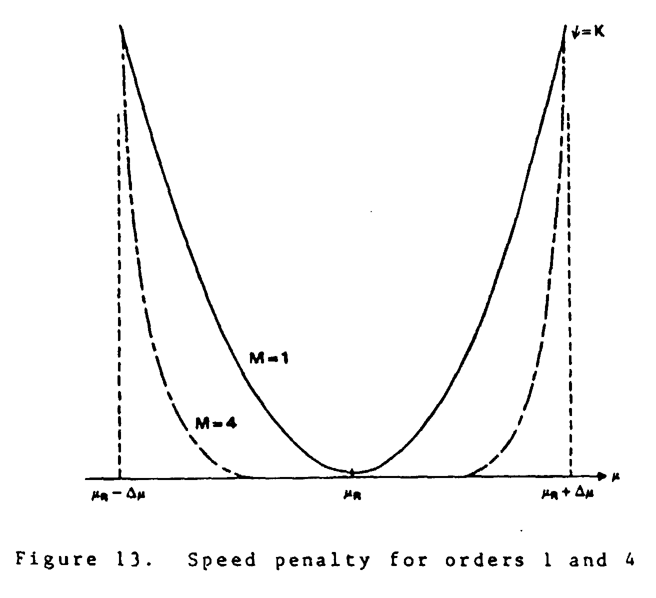 Note that as order increases the influence of the constraint within the passband is reduced. In the limit (Mᵥ → ∞) the penalty function takes on the shape of a rectangular well with zero penalty within the passband and infinite penalty outside. This is ideal theoretical behavior. But from a practical standpoint we have not found orders above four or eight to offer significant advantages.

### 10 THE POSITION CONSTRAINTS

There are three position constraints:
- Initial azimuth
- Initial elevation
- Initial range
The first two restrict the initial position of the target to the interior of a cone centered about the initial sighting vector. The cross-section of the cone is a hyperellipse whose principal axes depend on the uncertainty in measuring azimuth and elevation and an allowed risk. For example, we might dimension the cone to include the true target with 99.9 % probability. Figure 14 illustrates a conical volume superimposed on the illustration of Figure 2.

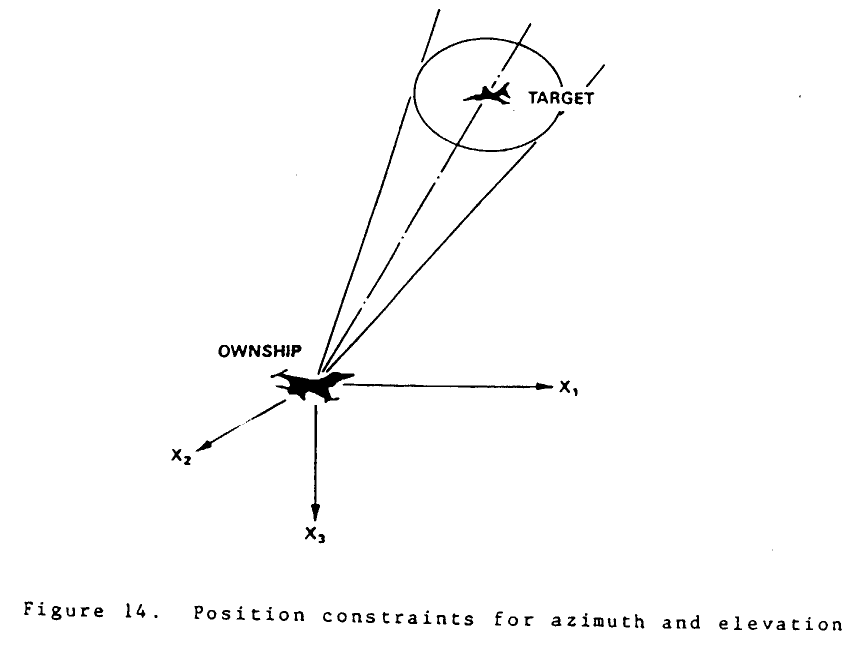

The penalty function is closely related to that for speed: 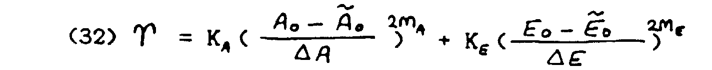 where
Aₒ = azimuth computed from resident model at t = 0
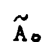 = azimuth of initial observation
ΔA = bandwidth for azimuth
M_{A} = order for azimuth
Eₒ = elevation computed from resident model at t = 0
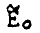 = elevation of initial observation
ΔE = bandwidth for elevation
M_{g} = order for elevation.
Note the penalty function is simply the superposition of individual penalty function of the form of (31). However, the functional relationship between the controlled parameter and the model parameters is different. A consequence is that (32) cannot induce nonpositive definite behavior.

The third position constraint bounds the maximum acquisition range. This may be visualized as a spherical cap on the cone of Figure 14. The range constraint is an analog of the speed constraint discussed earlier. However, the penalty function for the range constraint has no explicit lower bound*. The lower bound of the speed constraint accounts for its ability to induce nonpositive definite behavior. Such behavior cannot occur as a result of the range constraint. Development of the constraint was originally motivated by the desire to directly compute the initial bracket for Davidon's algorithm. It was subsequently found to improve algorithm convergence.
* There exists the implicit lower bound of zero.

The penalty function for the maximum range constraint is 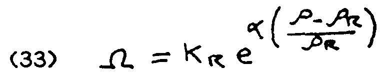 where
ρ = range of resident model
ρ_{R} = maximum acquisition range
α = order of the constraint
K_{R} = weight of the constraint.

### 11 THE FLIGHT PATH ADVISOR

The flight path advisor processes early sighting data to
- Recommend an ownship maneuver to optimize ranging performance
- Determine the start-up model to initiate data inversion.
"Early data" refer to sightings collected at the beginning of the data collection interval for which ownship's velocity can be taken as approximately constant. Under this condition equation (6) pertains and (relative) target motion is confined to a plane in 3-dimensional space. This implies the salient features of the motion can be described in only 2 dimensions. As noted earlier range cannot be resolved in the absence of ownship acceleration. However, we shall see that it is possible to determine range if target speed is known. This is not the case but often a reasonable estimate of speed is available.

Formally, we will say the early data is collected in the epoch${\text{(34) A = {t| 0 ≤ t < t}}_{\text{m}} \text{};} {\text{v}}_{̲} {\text{}}_{\text{o}} \text{(t ∈ A) = constant}$ At time tₘ we assume ownship suddenly accelerates and flies with a new constant velocity throughout an adjoining epoch, denoted "B." The question of interest is, "What acceleration is optimum for ranging accuracy? For t ∈ A we can write$\text{(35)} {\text{x}}_{̲} {\text{}}_{\text{i}} \text{=} {\text{x}}_{̲} {\text{}}_{\text{o}} {\text{+ t}}_{\text{i}} {\text{v}}_{̲} {\text{}}_{\text{A}}$ and for t ∈ B,$\text{(36)} {\text{x}}_{̲} {\text{}}_{\text{j}} \text{=} {\text{x}}_{̲} {\text{}}_{\text{m}} {\text{+ (t}}_{\text{j}} {\text{- t}}_{\text{m}} \text{)} {\text{v}}_{̲} {\text{}}_{\text{B}}$ The relative velocities v_{A} and v_{B} depend on the target velocity which is unknown. However, their difference is attributable to the change of ownship's velocity which is known:$\text{(37)} {\text{v}}_{̲} {\text{}}_{\text{B}} \text{=} {\text{v}}_{̲} {\text{}}_{\text{A}} \text{+ δ} {\text{v}}_{̲} \text{, with δ} {\text{v}}_{̲} \text{= known}$ Let a be a 3-vector of unit length which is orthogonal to xₒ and v_{A}, hence, to every xᵢ in A. Similarly, let b be a 3-vector of unit length which is orthogonal to xₘ, and v_{B}, hence, to every xⱼ in B. (These vectors can be determined as eigenvectors of a 3X3 matrix as discussed in the ensuing.) It follows from (37)$\text{(38) <} {\text{a}}_{̲} \text{,} {\text{v}}_{̲} {\text{}}_{\text{B}} \text{> = <} {\text{a}}_{̲} \text{, δ} {\text{v}}_{̲} \text{> = known}$ and$\text{(39) <} {\text{b}}_{̲} \text{,} {\text{v}}_{̲} {\text{}}_{\text{A}} \text{> = - <} {\text{b}}_{̲} \text{, δ} {\text{v}}_{̲} \text{> = known}$ Now using (35)$\text{(40) <} {\text{b}}_{̲} \text{,} {\text{x}}_{̲} {\text{}}_{\text{i}} \text{> = <} {\text{b}}_{̲} \text{,} {\text{x}}_{̲} {\text{}}_{\text{o}} {\text{> - t}}_{\text{i}} \text{<} {\text{b}}_{̲} \text{, δ} {\text{v}}_{̲} \text{>}$ Letting t → tₘ, this reduces to$\text{(41) <} {\text{b}}_{̲} \text{,} {\text{x}}_{̲} {\text{}}_{\text{o}} {\text{> = t}}_{\text{m}} \text{<} {\text{b}}_{̲} \text{, δ} {\text{v}}_{̲} \text{>}$ Eliminating <b, xₒ> in (40) and factoring range from xᵢ yields${\text{(42) ρ}}_{\text{i}} \text{=} \frac{{\text{(t}}_{\text{m}} {\text{- t}}_{\text{i}} \text{)<} {\text{b}}_{̲} \text{, δ} {\text{v}}_{̲} \text{>}}{\text{<} {\text{b}}_{̲} \text{,} {\text{w}}_{̲} {\text{}}_{\text{i}} \text{>}}$ Similarly, it can be shown${\text{(43) ρ}}_{\text{j}} \text{=} \frac{{\text{(t}}_{\text{j}} {\text{- t}}_{\text{m}} \text{)<} {\text{a}}_{̲} \text{, δ} {\text{v}}_{̲} \text{>}}{\text{<} {\text{a}}_{̲} \text{,} {\text{w}}_{̲} {\text{}}_{\text{j}} \text{>}}$ We wish the estimates (43) to be as insensitive to errors in the measured wⱼ as possible. The maneuver that achieves this is the "optimum maneuver." The first step is to derive the sensitivity function. We begin by computing the gradient of ρⱼ with respect to wⱼ${\text{(44) ∇w}}_{\text{j}} {\text{ρ}}_{\text{j}} \text{= -} \frac{{\text{ρ}}_{\text{j}}}{\text{<} {\text{a}}_{̲} \text{,} {\text{w}}_{̲} {\text{}}_{\text{j}} \text{>}} {\text{a}}_{̲}$ Let δwⱼ be the error in measuring wⱼ and δρⱼ the resulting error in the computed range. It follows from (44)$\text{(45)} \frac{{\text{δρ}}_{\text{j}}}{{\text{ρ}}_{\text{j}}} \text{=} \frac{\text{- <} {\text{a}}_{̲} \text{, δ} {\text{w}}_{̲} {\text{}}_{\text{j}} \text{>}}{\text{<} {\text{a}}_{̲} \text{,} {\text{w}}_{̲} {\text{}}_{\text{j}} \text{>}}$ Using$\text{(46) <} {\text{a}}_{̲} \text{,} {\text{w}}_{̲} {\text{}}_{\text{j}} \text{> =} \frac{{\text{(t}}_{\text{j}} {\text{- t}}_{\text{m}} \text{)<} {\text{a}}_{̲} \text{, δ} {\text{v}}_{̲} \text{>}}{{\text{ρ}}_{\text{j}}}$ which can be proved from (36) and (38), obtain$\text{(47)} \frac{{\text{δρ}}_{\text{j}}}{{\text{ρ}}_{\text{j}}} \text{=} \frac{{\text{-ρ}}_{\text{j}} \text{<} {\text{a}}_{̲} \text{, δ} {\text{w}}_{̲} {\text{}}_{\text{j}} \text{>}}{{\text{(t}}_{\text{j}} {\text{- t}}_{\text{m}} \text{)<} {\text{a}}_{̲} \text{, δ} {\text{v}}_{̲} \text{>}}$ For ∥δv∥ = constant, ^{δρⱼ}/_{ρⱼ} is minimized if a and δv have the same direction. Therefore, optimum ranging performance is attained when ownship turns perpendicular to the plane containing the sighting vectors in A. Note that there are two optimal maneuvers, differing by 180 degrees. This gives some flexibility in meeting tactical requirements. However, if neither optimum maneuver is tactically desirable, one could seek the δv which maximizes <a , δv> subject to constraints delimiting the feasible maneuvers. The computation of a will be considered subsequently.

The foundation for the flight path advisor theory is the matrix 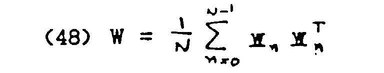 where wₙ is the sighting vector at time tₙ. Of the nine elements, three are determined by symmetry and need not be evaluated. Therefore, (approximately) 6N multiply-accumulate operations are required to compute W. Since the sighting vectors are affected by measurement errors, it is desirable to include as many samples under the sum as possible (large N). For simplicity we will assume the samples are uniformly spaced. This restriction would have to be removed for an operational system.

It follows strictly from the form of W that it is symmetric and positive semidefinite. Because the sighting vectors are real, W is real. Together, these properties imply
- all eigenvalues and eigenvectors are real
- all eigenvalues are nonnegative
- all eigenvectors are orthogonal.
- there is a complete set of 3 (independent) eigenvectors
We will assume the eigenvectors are normalized to unit length to form an orthonormal set. Normalization does not determine the signs of the eigenvectors; these will be chosen according to criteria introduced later. It may be verified that the trace of each dyad under the sum in (48) is unity. Therefore, the trace of W is also unity and the eigenvalues of W add to one. As no eigenvalue can be negative, none can exceed one. Without loss of generality we can assume the eigenvalues, denoted λᵢ, are ordered: λ₁ ≥ λ₂ ≥ λ₃.

In the absence of measurement noise λ₃= 0. This is easily proved by example:$\text{W} {\text{a}}_{̲} \text{=} {\text{0}}_{̲}$ where a is the vector introduced in (38). When noise is present λ₃ is a random variable whose expected value is commensurate with the variance of the measurement noise*. The eigenvectors associated with λ₁, λ₂ and λ₃ are denoted u₁, u₂, and u₃, respectively. It can be shown that u₃ is the least squares estimator of a and is used for a in determining the optimal ownship maneuver.
* The expected value of λ₃ is exactly equal to δ² if (a) measurement noise for azimuth and elevation are uncorrelated, (b) have zero mean, (c) both have variance δ² and (d) the velocities of target and ownship are coplanar. They are nearly equal when (d) is approximately true, as when target and ownship are at similar altitudes.

At low or moderate noise levels λ₃ is small** and to close approximation${\text{(49) λ}}_{\text{1}} {\text{+ λ}}_{\text{2}} \text{= 1}$ which means the sighting vectors are virtually confined to a plane in which u₁ and u₂ can be taken as orthogonal coordinate axes. An important equality is 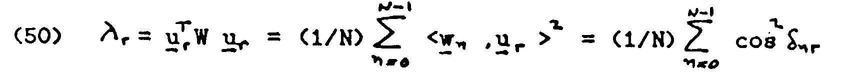 which holds for any eigenvector uᵣ. In (50) δₙᵣ is the angle between the eigenvector and the sighting vector at tₙ. Note that δₙ₃ will be very nearly 90 degrees for all n. Since u₁ and u₂ differ by 90 degrees, cos δₙ₂ = ± sin δₙ₁ and for present purposes we can adopt the simpler notation θₙ = δₙ₁. By virtue of the orthogonality of the sigenvectors 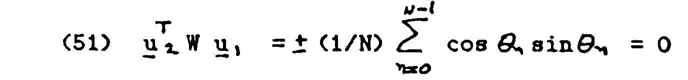 This implies 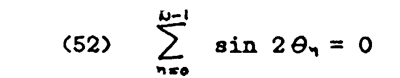 Equation (52) suggests the sighting vectors are "symmetrically distributed" about u₁ such that the sines cancel in pairs. To prove this rigorously, consider Figure 15 which illustrates the target's motion in the plane without regard to the yet to be established relation to the coordinate axes.
The target is shown at t = 0 and t = tᵢ when it occupies positions xₒ and xᵢ, respectively. These vectors make angles θₒ and θᵢ relative to the horizontal. Target displacement is equal to tᵢv_{R} and makes angle φ relative to xₒ. Because target motion is small relative to the range, (θᵢ- θₒ) is acute. Its sign is equal to that of φ.
** For example, in ranging experiments we frequently employed Gaussian white noise with a standard deviation of 0.5 degree. For this λ₃ = 7.62(10⁻⁵) under the conditions of the preceding footnote.

Using the law of sines it may be shown 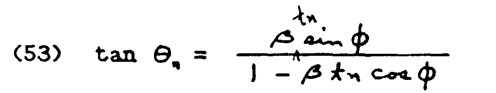 where β = ∥v_{R}∥/∥xₒ∥. By differentiation 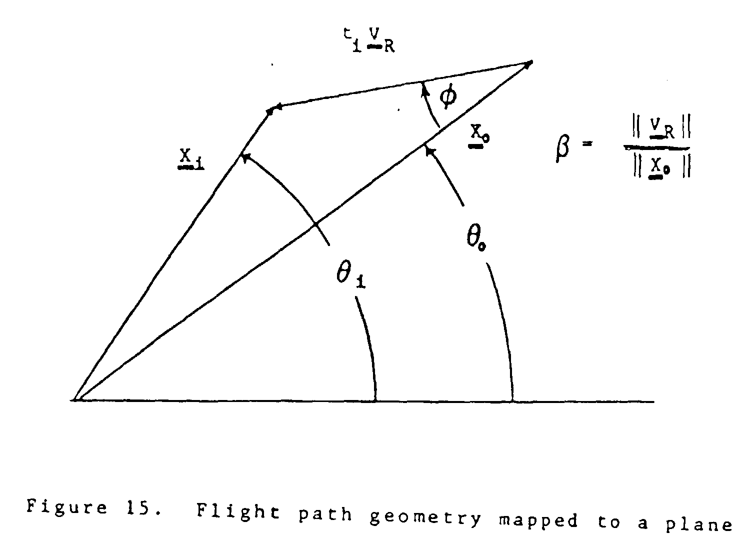 $\text{(54)} \frac{{\text{dθ}}_{\text{n}}}{\text{dt}} \text{=} \frac{\text{β sin φ}}{{\text{1 - 2 βt}}_{\text{n}} {\text{cosφ + (βt}}_{\text{n}} {\text{)}}^{\text{2}}}$ Normally, β tₙ << 1 and to close approximation${\text{(55) d θ}}_{\text{n}} \text{/dt = β sinφ = constant}$ and${\text{(56) θ}}_{\text{n}} {\text{= θ}}_{\text{o}} \text{+ nΔθ}$ where Δθ = β sinφ Δt and Δt is the sample period. Substituting this in (52) obtain 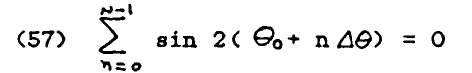 which has solution${\text{(58) θ}}_{\text{o}} \text{= -} \frac{\text{N-1}}{\text{2}} \text{Δθ}$ Thus, the horizontal axis defined by eigenvector u₁ splits the "fan" of sighting vectors as illustrated in Figure 16. It is not hard to verify an equally valid solution of (52) is obtained if θₒ is offset by 180 or plus or minus 90 degrees. These solutions accommodate the arbitrary signs of the eigenvectors and the interchangability of u₁ and u₂ as axial references. We now resolve these ambiguities in the following way. The sign of u₁ is chosen such that 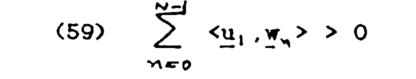 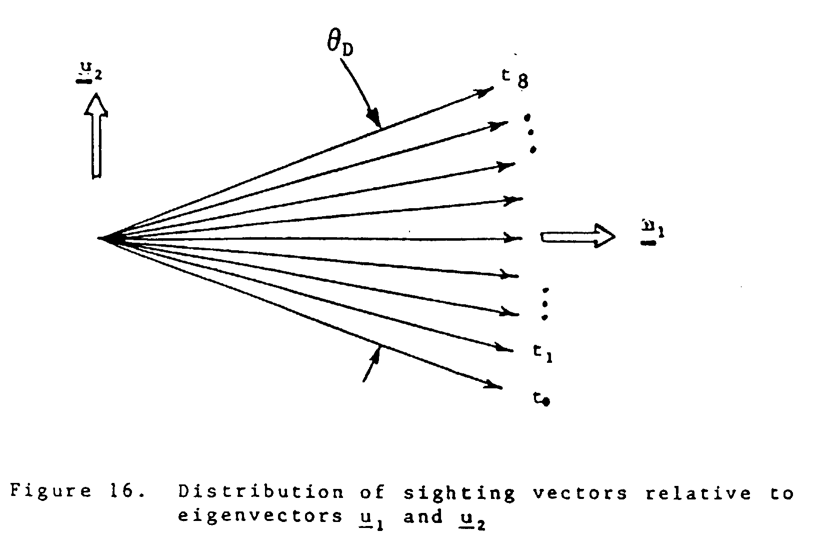 corresponding to the case illustrated in Figure 16. The figure is also consistent with u₁ being the largest eigenvalue. The sign of u₂ is chosen such that the sighting vectors progress toward u₂ as time increases. This is accomplished when 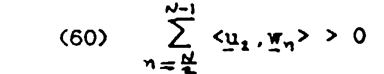 (written for N even). The labeling of the sighting vectors in Figure 16 corresponds to this convention.

There is an important relationship between the angular spread of the fan of sighting vectors and the eigenvalue λ₂. Writing (50) for r = 2, obtain in terms of the simplified notation 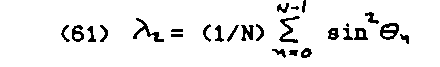 Using the small angle approximation for the sine, obtain with the aid of (56) and (58) 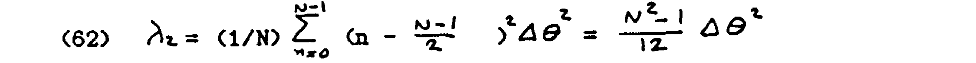 With N large relative to one, equation (62) states${\text{(63) λ}}_{\text{2}} {\text{= θ}}_{\text{D}}^{\text{2}} \text{/12}$ where θ_{D} is the angular width of the fan, in radians. Thus, we expect λ₂ to increase as the square of time. λ₁ is unity at time t = 0 and decreases with increasing λ₂ such that (49) is satisfied. λ₃ is commensurate with the variance of the measurement noise, typically small. The random variables λ₂ and λ₃ fluctuate about their expected values with the fluctuations damping with increasing time, due to the growing number of terms in the average (48).

These expectations are confirmed in Figure 17 where the eigenvalues have been plotted against time. 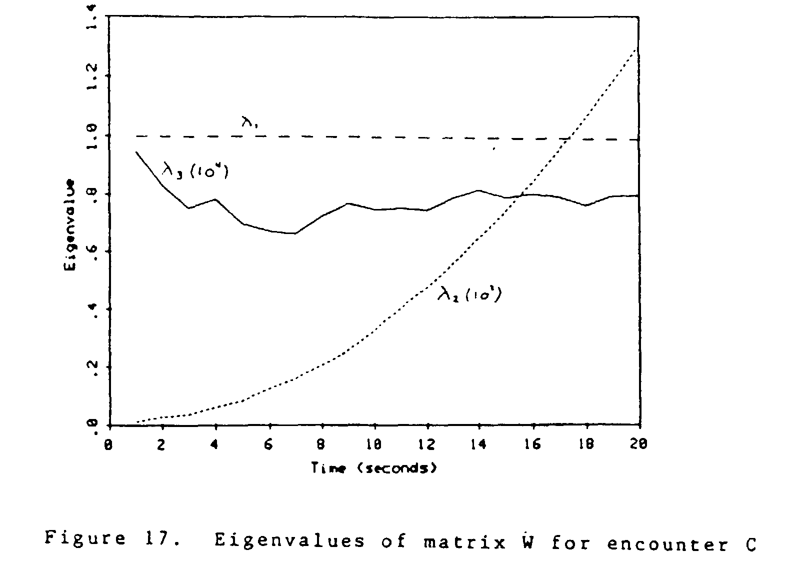 The curves are scaled to compress the range of the plot. There is close agreement between λ₃ and the variance of the measurement noise, which was set in this experiment to 7.62(10⁻⁵). λ₂ exhibits the expected parabolic growth with time. Using the known flight path geometry (identified as encounter C) the computed angular spread of the sightings over 20 seconds is 0.3948 radians. Substituting this in (63) gives λ₂ = 1.3(10⁻²), in close agreement with Figure 17.

The analysis illustrated by Figure 17 gives several useful bits of information. First, noise level (hence, performance) is indicated by λ₃. Second, the gathering of sufficient epoch A data is signified by stabilization of the λ₂ locus to a parabola. Third, the efficacy of the flight path geometry is indicated by the rate of growth of λ₂. Slow growth indicates an unfavorable geometry. A dislocation in the λ₂ curve indicates target is changing velocity, violating the assumptions of the theory. A long (0.1 second) sample period was employed in deriving Figure 17. This causes random fluctuations in the λ₂ and λ₃ curves to damp much more slowly than they would in an operational system.

We are now in a position to derive expressions for the parameters β and φ characterizing the geometry of Figure 15. For notational simplicity, let${\text{(64) s}}_{\text{i}} {\text{= tan θ}}_{\text{i}}$ Then, from (53)${\text{(65) s}}_{\text{i}} \text{=} \frac{{\text{βt}}_{\text{i}} \text{sinφ}}{{\text{1 - βt}}_{\text{i}} \text{cosφ}}$ Squaring and solving for cos φ, obtain$\text{(66) cos φ =} \frac{{\text{S}}_{\text{i}}^{\text{2}} \text{±} \sqrt{{\text{b}}_{\text{i}}^{\text{2}} {\text{(s}}_{\text{i}}^{\text{2}} {\text{+1)-S}}_{\text{i}}^{\text{2}}}}{{\text{b}}_{\text{i}} {\text{(S}}_{\text{i}}^{\text{2}} \text{+1)}}$ where bᵢ = βtᵢ. By an analogous procedure, obtain 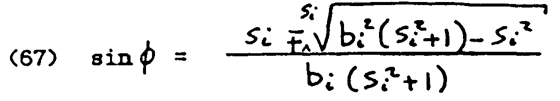 Note the unresolved signs in (66) and (67) are synchronized in the sense that if the sign in (66) is positive, the sign in (67) is negative and vice versa. (This is necessary if sin²φ +cos²φ = 1.) Defining${\text{(68) r}}_{\text{i}} \text{=} \sqrt{{\text{b}}_{\text{i}}^{\text{2}} {\text{(s}}_{\text{i}}^{\text{2}} {\text{+ 1) - s}}_{\text{i}}^{\text{2}}}$${\text{(69) d}}_{\text{i}} {\text{= t}}_{\text{i}} {\text{(s}}_{\text{i}}^{\text{2}} \text{+ 1)}$ we have upon equating expressions for β cosφ at times t₁ and t₂$\text{(70) β cosφ =} \frac{{\text{s}}_{\text{1}}^{\text{2}} {\text{±r}}_{\text{1}}}{{\text{d}}_{\text{1}}} \text{=} \frac{{\text{s}}_{\text{2}}^{\text{2}} {\text{±r}}_{\text{2}}}{{\text{d}}_{\text{2}}}$ And equating expressions for βsinφ at times t₁ and t₂, get$\text{(71) β sinφ =} \frac{{\text{s}}_{\text{1}} {\text{∓s}}_{\text{1}} {\text{r}}_{\text{1}}}{{\text{d}}_{\text{1}}} \text{=} \frac{{\text{s}}_{\text{2}} {\text{∓s}}_{\text{2}} {\text{r}}_{\text{2}}}{{\text{d}}_{\text{2}}}$ Dividing (71) by s₂ and adding to (70), obtain$\text{(72)} \frac{{\text{s}}_{\text{1}}^{\text{2}} {\text{±r}}_{\text{1}}}{{\text{d}}_{\text{1}}} \text{+} \frac{\text{1}}{{\text{s}}_{\text{2}}} \frac{{\text{s}}_{\text{1}} {\text{∓s}}_{\text{1}} {\text{r}}_{\text{1}}}{{\text{d}}_{\text{1}}} \text{=} \frac{{\text{1 + s}}_{\text{2}}^{\text{2}}}{{\text{d}}_{\text{2}}} \text{=} \frac{\text{1}}{{\text{t}}_{\text{2}}}$ Collecting terms in r₁, obtain$\text{(73) ± (1 -} \frac{{\text{S}}_{\text{1}}}{{\text{S}}_{\text{2}}} {\text{)r}}_{\text{1}} \text{=} \frac{{\text{t}}_{\text{2}}}{{\text{t}}_{\text{1}}} {\text{(S}}_{\text{1}}^{\text{2}} {\text{+1)-S}}_{\text{1}}^{\text{2}} \text{-} \frac{{\text{S}}_{\text{1}}}{{\text{S}}_{\text{2}}}$ Squaring and substituting for r₁, obtain 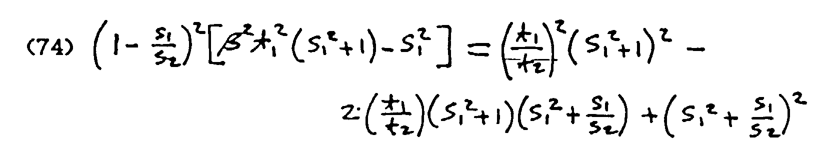 Defining 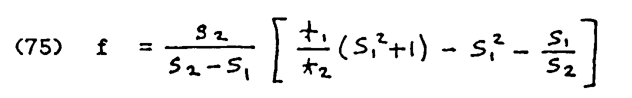 equation (74) may be rewritten${\text{(76) β}}^{\text{2}} \text{=} \frac{{\text{f}}^{\text{2}} {\text{+ s}}_{\text{1}}^{\text{2}}}{{\text{t}}_{\text{1}}^{\text{2}} {\text{(s}}_{\text{1}}^{\text{2}} \text{+1)}}$ which may be immediately solved for β. Note the negative solution can be disregarded because β is intrinsically positive.

It remains to derive an expression for φ**.** From (70) and (71) it may be verified${\text{(77) s}}_{\text{1}} \text{β cosφ + β sinφ =} \frac{{\text{s}}_{\text{1}}^{\text{3}} {\text{+s}}_{\text{1}}}{{\text{d}}_{\text{1}}}$${\text{(78) s}}_{\text{2}} \text{β cosφ + β sinφ =} \frac{{\text{s}}_{\text{2}}^{\text{3}} {\text{+s}}_{\text{2}}}{{\text{d}}_{\text{2}}}$ Subtracting (77) from (78), get${\text{(79) (s}}_{\text{2}} {\text{- s}}_{\text{1}} \text{) β cosφ =} \frac{{\text{s}}_{\text{2}}^{\text{3}} {\text{+s}}_{\text{2}}}{{\text{d}}_{\text{2}}} \text{-} \frac{{\text{s}}_{\text{1}}^{\text{3}} {\text{+s}}_{\text{1}}}{{\text{d}}_{\text{1}}}$ Multiplying (77) by s₂ and (78) by s₁, obtain by subtraction${\text{(80) (s}}_{\text{2}} {\text{- s}}_{\text{1}} {\text{) β sinφ = s}}_{\text{2}} \frac{{\text{s}}_{\text{1}}^{\text{3}} {\text{+ s}}_{\text{1}}}{{\text{d}}_{\text{1}}} {\text{- s}}_{\text{1}} \frac{{\text{s}}_{\text{2}}^{\text{3}} {\text{+ s}}_{\text{2}}}{{\text{d}}_{\text{2}}}$ Combining (79) and (80) it is possible to show 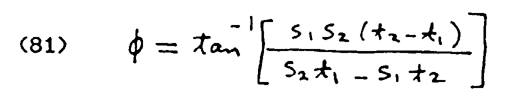 which is the desired expression for φ.

Use of (76) and (81) can be illustrated by the example of Figure 17. At t₂ = 20 seconds λ₂= 0.013025 implying (see (63)) θ₂ = θ_{D} = 0.3953483. Taking t₁ = 10 seconds, obtain by interpolation θ₁ = θ_{D}/2 = 0.1976742. Computing the tangents, get s₁ = 0.2002897 and s₂ = 0.4173208. In this case f is negligibly small and we can write$\text{β =} \frac{{\text{s}}_{\text{1}}}{{\text{t}}_{\text{1}} \sqrt{{\text{s}}_{\text{1}}^{\text{2}} \text{+ 1}}} {\text{= 0.0196389 sec}}^{\text{-1}}$ Using (81)${\text{φ = tan}}^{\text{-1}} \text{[4.92675] = 1.3731 radians}$ These are in good agreement with the values 0.01961 and 1.3735, respectively, computed from the known flight path geometry.

The remaining task is to convert these results into the start-up model consisting of initial target position and target velocity. For this purpose consider Figure 18 which is essentially Figure 15 rotated to the proper orientation with respect to the coordinate axes. 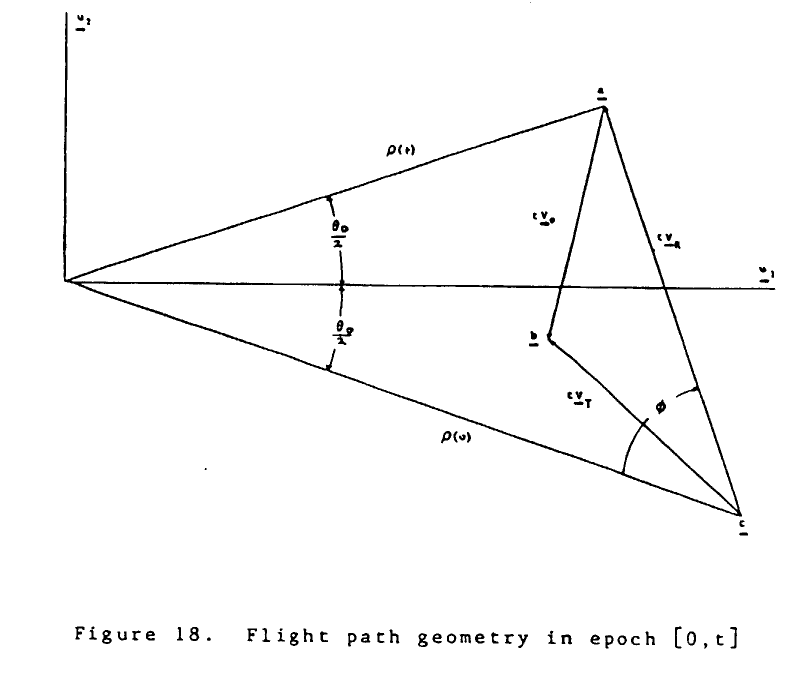 Projections of ownship and target velocities onto the plane are also shown. These vectors do not, in general, lie in the plane. However, their components perpendicular to the plane are equal and therefore, are known. Using the notation introduced earlier ρ(t) is range at time t. The location of the target at time t = 0, point c in Figure 18, is$\text{(82)} {\text{c}}_{̲} {\text{= ρ}}_{\text{0}} \text{(cos} \frac{{\text{θ}}_{\text{D}}}{\text{2}} {\text{u}}_{̲} {\text{}}_{\text{1}} \text{- sin} \frac{{\text{θ}}_{\text{D}}}{\text{2}} {\text{u}}_{̲} {\text{}}_{\text{2}} \text{)}$ During the interval [0,t] the relative displacement of the target is tµ_{R}, where µ_{R} is relative speed. Thus, from Figure 18 we can write for the target position at time t$\text{(83)} {\text{a}}_{̲} \text{=} {\text{c}}_{̲} {\text{+ (tµ}}_{\text{R}} \text{)[- cos (} \frac{{\text{θ}}_{\text{D}}}{\text{2}} \text{+ φ)} {\text{u}}_{̲} {\text{}}_{\text{1}} \text{+ sin (} \frac{{\text{θ}}_{\text{D}}}{\text{2}} \text{+ φ)} {\text{u}}_{̲} {\text{}}_{\text{2}} \text{]}$ We can replace µ_{R} through the equality${\text{(84) β = µ}}_{\text{R}} {\text{/ρ}}_{\text{0}}$ to obtain$\text{(85)} {\text{a}}_{̲} \text{=} {\text{c}}_{̲} {\text{+ tρ}}_{\text{0}} \text{β [- cos (} \frac{{\text{θ}}_{\text{D}}}{\text{2}} \text{+ φ)} {\text{u}}_{̲} {\text{}}_{\text{1}} \text{+ sin (} \frac{{\text{θ}}_{\text{D}}}{\text{2}} \text{+ φ)} {\text{u}}_{̲} {\text{}}_{\text{2}} \text{]}$ We can express the point b in Figure 18 by$\text{(86)} {\text{b}}_{̲} \text{=} {\text{a}}_{̲} \text{+ t <} {\text{u}}_{̲} {\text{}}_{\text{1}} \text{,} {\text{v}}_{̲} {\text{}}_{\text{0}} \text{>} {{\text{u}}_{\text{1}}}_{̲} \text{+ t <} {\text{u}}_{̲} {\text{}}_{\text{2}} \text{,} {\text{v}}_{̲} {\text{}}_{\text{0}} \text{>} {\text{u}}_{̲} {\text{}}_{\text{2}} \text{+ t <} {\text{u}}_{̲} {\text{}}_{\text{3}} \text{,} {\text{v}}_{̲} {\text{}}_{\text{0}} \text{>} {\text{u}}_{̲} {\text{}}_{\text{3}}$ where v₀, u₁, u₂ and u₃ are all knowns. The only unknown is a. This may be eliminated through (85) to yield:$\text{(87)} {\text{b}}_{̲} \text{=} {\text{c}}_{̲} {\text{+ t ρ}}_{\text{0}} \text{β[-cos(} \frac{{\text{θ}}_{\text{D}}}{\text{2}} \text{+φ)} {\text{u}}_{̲} {\text{}}_{\text{1}} \text{+ sin(} \frac{{\text{θ}}_{\text{D}}}{\text{2}} \text{+φ)} {\text{u}}_{̲} {\text{}}_{\text{2}} \text{] +} \text{t <} {\text{u}}_{̲} {\text{}}_{\text{1}} \text{,} {\text{v}}_{̲} {\text{}}_{\text{0}} \text{>} {\text{u}}_{̲} {\text{}}_{\text{1}} \text{+ t <} {\text{u}}_{̲} {\text{}}_{\text{2}} \text{,} {\text{v}}_{̲} {\text{}}_{\text{0}} \text{>} {\text{u}}_{̲} {\text{}}_{\text{2}} \text{+ t <} {\text{u}}_{̲} {\text{}}_{\text{3}} \text{,} {\text{v}}_{̲} {\text{}}_{\text{0}} \text{>} {\text{u}}_{̲} {\text{}}_{\text{3}}$ But from the figure$\text{(88)} {\text{b}}_{̲} \text{-} {\text{c}}_{̲} \text{= t} {\text{v}}_{̲} {\text{}}_{\text{τ}}$ Thus, after collecting terms$\text{(89)} {\text{v}}_{̲} {\text{}}_{\text{τ}} \text{= [<} {\text{u}}_{̲} {\text{}}_{\text{1}} \text{,} {\text{v}}_{̲} {\text{}}_{\text{0}} {\text{> - ρ}}_{\text{0}} \text{βcos(} \frac{{\text{θ}}_{\text{D}}}{\text{2}} \text{+ φ)]} {\text{u}}_{̲} {\text{}}_{\text{1}} \text{+} \text{[<} {\text{u}}_{̲} {\text{}}_{\text{2}} \text{,} {\text{v}}_{̲} {\text{}}_{\text{0}} {\text{> + ρ}}_{\text{0}} \text{βsin(} \frac{{\text{θ}}_{\text{D}}}{\text{2}} \text{+ φ)]} {\text{u}}_{̲} {\text{}}_{\text{2}} \text{+ <} {\text{u}}_{̲} {\text{}}_{\text{3}} \text{,} {\text{v}}_{̲} {\text{}}_{\text{0}} \text{>} {\text{u}}_{̲} {\text{}}_{\text{3}}$ Noting the orthogonality of the eigenvectors, obtain for target speed${\text{(90) µ}}_{\text{τ}}^{\text{2}} {\text{= µ}}_{\text{0}}^{\text{2}} {\text{= 2 ρ}}_{\text{0}} \text{β [<} {\text{u}}_{̲} {\text{}}_{\text{2}} \text{,} {\text{v}}_{̲} {\text{}}_{\text{0}} \text{> sin (} \frac{{\text{θ}}_{\text{D}}}{\text{2}} \text{+ φ) -} \text{<} {\text{u}}_{̲} {\text{}}_{\text{1}} \text{,} {\text{v}}_{̲} {\text{}}_{\text{0}} \text{> cos (} \frac{{\text{θ}}_{\text{D}}}{\text{2}} {\text{+ φ)] + ρ}}_{\text{0}}^{\text{2}} {\text{β}}^{\text{2}}$ By assuming target speed we can solve this quadratic for the initial range${\text{(91) ρ}}_{\text{0}} \text{=} \frac{\text{-B-} \sqrt{{\text{B}}^{\text{2}} \text{-AC}}}{\text{A}}$ where${\text{A = β}}^{\text{2}}$$\text{(92) B = β[<} {\text{u}}_{̲} {\text{}}_{\text{2}} \text{,} {\text{v}}_{̲} {\text{}}_{\text{0}} \text{> sin (} \frac{{\text{θ}}_{\text{D}}}{\text{2}} \text{+ φ) - <} {\text{u}}_{̲} {\text{}}_{\text{1}} \text{,} {\text{v}}_{̲} {\text{}}_{\text{0}} \text{> cos (} \frac{{\text{θ}}_{\text{D}}}{\text{2}} \text{+ φ)]} {\text{C = µ}}_{\text{0}}^{\text{2}} {\text{-µ}}_{\text{τ}}^{\text{2}}$ The sign on the radical in (91) is determined by requiring continuity of the solution at the special case µ_{τ}= µ_{O} for which (90) can be reduced to an equation of first degree, With solution${\text{(93) ρ}}_{\text{0}} \text{= (-2/β)[<} {\text{u}}_{̲} {\text{}}_{\text{2}} \text{,} {\text{v}}_{̲} {\text{}}_{\text{0}} \text{> sin(} \frac{{\text{θ}}_{\text{D}}}{\text{2}} \text{+ φ) - <} {\text{u}}_{̲} {\text{}}_{\text{1}} \text{,} {\text{v}}_{̲} {\text{}}_{\text{0}} \text{> cos (} \frac{{\text{θ}}_{\text{D}}}{\text{2}} \text{+ φ)]}$ Once ρₒ has been determined we may immediately compute the initial target position c using (82) and the target velocity v_{τ} using (89).

These procedures may be illustrated by continuing the previous example. The key knowns for the problem are: 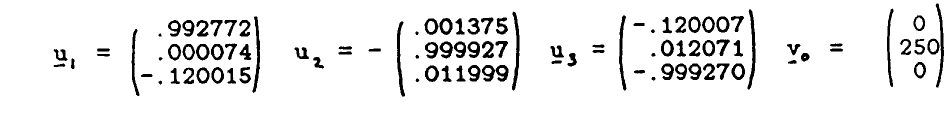 from which we compute$\text{<} {\text{u}}_{̲} {\text{}}_{\text{1}} \text{,} {\text{v}}_{̲} {\text{}}_{\text{o}} \text{> = 0.0185, <} {\text{u}}_{̲} {\text{}}_{\text{2}} \text{,} {\text{v}}_{̲} {\text{}}_{\text{o}} \text{> = -249.9819 and <} {\text{u}}_{̲} {\text{}}_{\text{3}} \text{,} {\text{v}}_{̲} {\text{}}_{\text{o}} \text{> = 3.0176}$ Using values of β and φ determined previously, it is readily verified$\text{sin (} \frac{{\text{θ}}_{\text{D}}}{\text{2}} \text{+ φ) = 1 and cos(} \frac{{\text{θ}}_{\text{D}}}{\text{2}} \text{+ φ) = 0}$ We will assume target speed is equal to ownship's speed of 250 m/sec. Therefore, (93) pertains and we compute${\text{ρ}}_{\text{o}} \text{= 25458 m}$ We may now evaluate (82) for the initial target position, obtaining 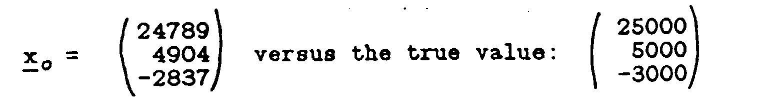 We then evaluate (89) for the target velocity, yielding 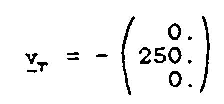 which is accurate to 3 digits.

These results are so good that there is hardly a need for data inversion to improve the start-up model. There are three reasons for this misleading result:
- The assumed target velocity was error-free
- The combination of a relatively long epoch A (20 seconds) and a favorable flight path geometry yielded excellent signal-to-noise
- Symmetries were present in the flight path geometry which caused certain unmodeled nonlinearities to cancel.
While greater errors can be expected under more normal circumstances, the start-up model will remain far more accurate than "guesstimates."

### 12 ORGANIZATION OF THE RANGING ALGORITHM

Figure 19 is a block diagram depicting the key processes of the ranging algorithm. 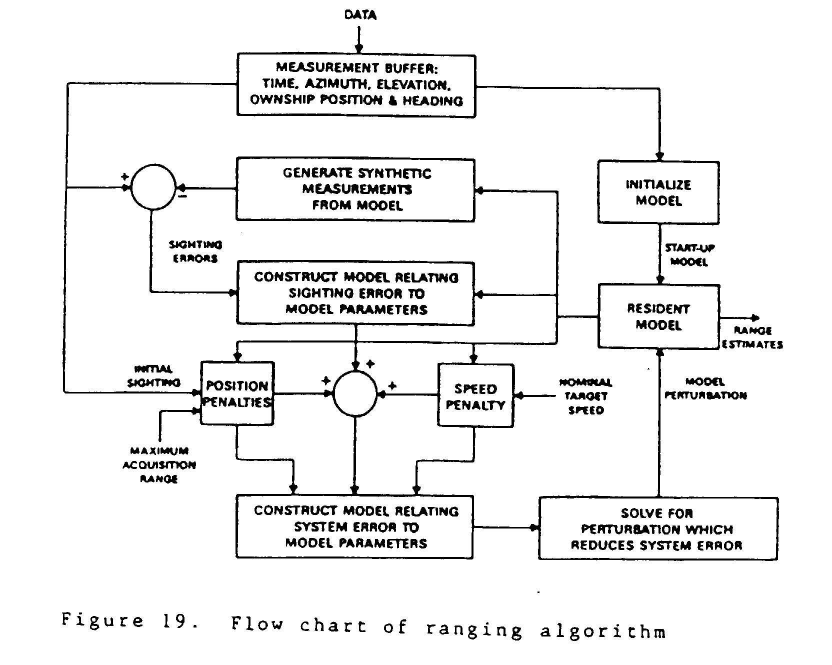 System operation will be described for batch mode. Here all data are loaded in the measurement buffer and processed buffer and processed until the algorithm has converged. This is most economical for initial laboratory evaluation. However, an operational system would undoubtedly employ continuous mode processing in which data would flow through the measurement buffer with the newest measurements displacing the oldest after the buffer had been filled. As a result, the algorithm would "see" slightly different data sets during different iterations. This requires no fundamental changes to the algorithm but data management and synchronization tasks are more involved.

The data loaded into the measurement buffer are comprised of azimuth and elevation measurements from the directional receiver, ownship position and heading from the INS and time from the system clock. The latter is used to synchronize actual and synthetic measurements during processing. These inputs would not be "raw data" but outputs of filters used to improve signal-to-noise. The filter outputs would be downsampled to reduce the data rate. Angles would be converted to the inertial reference prior to loading or immediately after loading by a processing step not depicted in the figure.

The start-up model is computed from early data in the manner described in the previous section. Of course, this computation is nonrecursive.

Synthetic measurements are generated from the resident model at times corresponding to the actual measurements by solving the forward problem. Instantaneous differences between these measurements are the sighting errors. These are squared and averaged to compute the mean squared sighting error. They are also essential inputs to the algorithm which computes the perturbation model for sighting error. Other essential inputs are model parameters and ownship positions at the sample instants.

The constraint penalties are computed and added to sighting error to give system error. For simplicity the three constraints associated with initial target position are combined under the block labeled "position penalties." The penalty function blocks also compute perturbation models which are added to the model for sighting error to obtain the perturbation model for system error. This is employed by the unit which computes the perturbation direction by the Newton-Raphson procedure and perturbation magnitude by the linear search.

The perturbation (consisting of magnitude and direction) is added to the resident model to update it.

If successive updates have left the model essentially unchanged, the procedure is terminated. Range may then be computed from the model at any desired time. On the other hand, if the model is still undergoing significant revision, a new iteration is initiated.

### 13 PERFORMANCE EVALUATION

Performance was evaluated by computer simulation for several mission scenarios. The methodology used in these experiments is indicated in Figure 20. 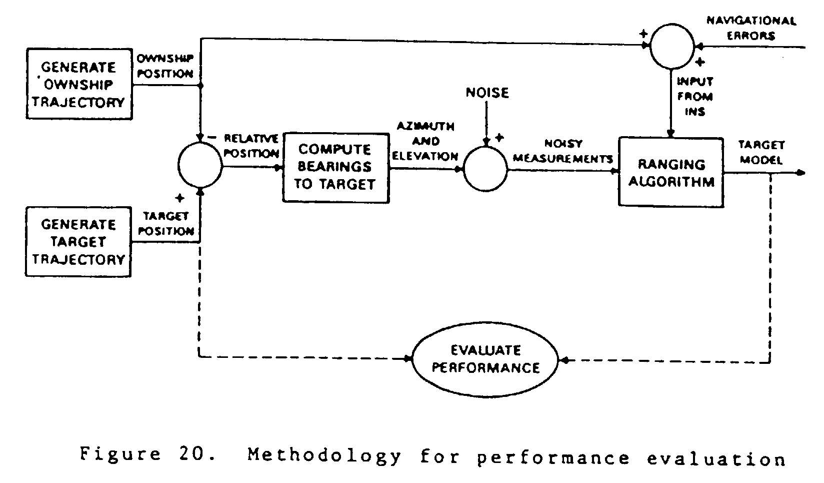 Separate subroutines generated ownship and target trajectories in 3-dimensions. Relative target location was computed by subtraction. We decided to employ separate programs for different combinations of -subroutines. This is reflected in the program name. For example, "ENCOUNTER13C" employs subroutines for flight path geometry C. The digits "13" indicate the generation of the ranging algorithm.

Elevation and azimuth were computed from relative target location using (14) and (15). Noise was added to obtain the elevation and azimuth measurements input to the ranging algorithm. This noise was computed on-line by calling the IMSL subroutine "GGNML." GGNML simulates a zero mean white Gaussian process of unit variance. Therefore, it was necessary to multiply the numbers returned by GGNML by the desired standard deviation of the noise, provided by user input. The noise added to elevation and azimuth was statistically independent but had the same variance. A trivial change to the program would provide for independent specification of noise levels. In future work it might be of interest to model correlations between various measurement errors.

We cite noise levels as they exist at the input to the ranging algorithm. Since the noise in the raw measurements (i.e., at the inputs to the filters) would be larger, this results in a conservative specification.

Position and heading outputs from the INS contain navigational errors which can affect ranging accuracy. Previous analysis had indicated drift errors could be ignored over the relatively short span of typical data collection intervals. Heading errors, potentially more serious, are included as part of the measurement noise just described. Therefore, the "navigational errors" stream in Figure 20 was not activated.

Ranging results were evaluated by comparing the kinematic model obtained by data inversion to the one used to generate the target trajectory (hereafter referred to as the "true model"). The basis for comparison is not clear-cut because the models are 6-dimensional. Since range is the parameter of interest, we decided to compare range-versus-time plots computed from each model. Ideal performance is indicated by coincident plots. With noise present, there is typically an offset and the plots may converge or diverge with time.

Persons accustomed to ranging results obtained using continuous processing may be surprised by the absence of a convergence transient. This distinction is due to batch processing. In particular, the point at time t is computed from all data and therfore, is no more or less likely to be accurate than any other point. In contrast, with continuous processing, the point at t has no access to data subsequent to t and is typically inaccurate when t is small. The initial period of poor but improving performance is the convergence transient.

We will adhere to the following format in presenting the experimental results. First, a top view of the flight path geometry is given. This generally captures the salient features of the geometry although target and ownship may be at different altitudes or may be changing altitude. As noted, the subroutines used to generate the flight path geometry is identified by a letter, for example, "A" for geometry A. The data collection interval is either stated or indicated by annotation. For example, "A-150" indicates geometry A extended over 150 seconds. Next, one or more figures showing ranging results are presented. Generally, these are of two types: Performance may be compared on the same measurement noise sequence for several combinations of algorithm parameters. Or, the same experiment can be repeated using different noise sequences. The latter shows the variability introduced by the random nature of the noise. We have not conducted large-scale Monte Carlo simulations needed to obtain a rigorous statistical characterization but believe the results presented in the following are representative.

Algorithm parameters were specified interactively. To minimize keyboard input, a system was written to select default values in the absence of a keyboard entry. The defaults were maintained in a file read by the program and updated when overridden by keyboard entry. A special set of permanent defaults was provided which could be selected by a single keystroke. It was used for debugging. Not all parameters were subject to independent specification. For example, the weights of the four constraints are all assigned the same value. Similarly, corresponding parameters of the azimuth and elevation constraints are equated. One parameter, the order of the maximum range constraint, was hard-programmed to the value 100. The seed for the random number generator was treated slightly differently. The user could select the standard seed 123456D0 or a default option. The default had the effect of causing the measurement noise sequence to never repeat.

To run an experiment the user chooses the program, for example, ENCOUNTER14A. He then specifies algorithm parameters by responding to prompts to enter the following data (common defaults are indicated parentheses):
- Seed for GGNML (see discussion above)
- Standard deviation of measurement noise (0.5 degree)
- Duration of data collection (150 seconds)
- Values of penalties at transition (0.02)
- Order of speed constraint (4)
- Nominal target speed (250 m/sec)
- Bandwidth of speed constraint (50 m/sec)
- Order of penalty functions for azimuth and elevation (4)
- Bandwidth of penalty functions for azimuth and elevation (4 degrees)
- Maximum acquisition range (230 km)
- Target jinking maneuver (0, 30 and 60 degree maximum deviation)
He then runs the experiment by interactively commanding the algorithm to iterate. A number of displays have been built into the program to facilitate analysis. At termination there is an option to write the results to a plot file. This was the means of generating the plots which follow.

In annotating experimental results we will indicate the flight path geometry, give the noise level and mission duration. Other parameters will be specified when different from nominal values or to emphasize a change. True target speed was 250 m/sec throughout.

We have found that performance is typically insensitive to moderate changes of parameters. The most sensitive parameter is nominal target speed - especially when the flight path geometry is conducive to range/speed ambiguity. Where the influence of this parameter is not expressly studied, the following rule may be useful: If the estimated range is too short, increasing nominal speed will reduce the error and, conversely. If the estimated range is too long, decreasing nominal speed will reduce error and, conversely.

### 14 EXPERIMENTAL RESULTS

Here we present some of the results obtained during performance evaluation. Since the space occupied by the figures is considerably greater than that needed to describe them, the text is presented in its entirety followed by the figures, two to a page.

Figure 21 depicts the flight path geometry for encounter A at an initial range of 193 km or 116 miles. Because of the long range the 150 second data collection interval does not offer a particularly long baseline. Further, ownship's trajectory can be well approximated by a straight line, suggesting the geometry is conducive to range/speed ambiguity. Figure 22 gives the ranging results when the nominal speed is 10% low. The range error is -7.5% (estimated range is shorter than true range). Figure 23 gives the ranging results when the nominal speed is 10% high. The range error is initially +9.3% high, declining to +8.3%. Since the range errors track those in specifying nominal speed, we would expect good accuracy if nominal speed were fortuitously picked without error. This is borne out by Figure 24 which shows a range error of only -1.5%. Note that linear interpolation would yield a positive range error, pointing to the quantitative limitations of the rule. Figure 25 repeats the experiment of Figure 24 with all parameters unchanged but with a new noise sequence. Now the error has changed to +3.0%. Such swings occur when components of the noise are misinterpreted by the algorithm as signal.

Figure 26 depicts the flight path geometry when the data collection interval is reduced to 75 seconds. Now, ownship's trajectory is almost perfectly linear, suggesting the data will contain little information for resolving the range/speed ambiguity. Further, the baseline is very short relative to the range, promoting ill-conditioning. These difficulties are reflected in Figure 27 which shows an initial error of +12.5% and which grows slowly with time.

Figure 28 depicts the flight path geometry when the data collection interval is increased to 300 seconds. This has the effect of increasing the curvature of ownship trajectory and the length of the baseline. Thus, improved ranging performance would be expected. This is verified by Figure 29. The initial error is +3.0% and decreases slowly with time. Very good tracking over the 300 second interval is evident.

Figure 30 depicts the flight path geometry with the data collection interval reduced to only 40 seconds. For the reasons discussed above, little or no ranging success would be expected in this situation. However, Figure 31 shows useful results can be obtained provided measurement errors are low enough. Here the measurement error has been reduced from 0.5 degree standard deviation to 0.1 degree. The resulting ranging error is -19%.

Encounter B and encounter C are characterized by an acquisition range of 25.7 km or 15.4 miles, only about one-seventh of that of encounter A. This favors faster convergence. The flight path geometry for encounter B is depicted in Figure 32. Note that ownship flies in straight line segments, changing direction at t = 20 seconds. Target flies directly toward the position occupied by ownship when it changes direction. However, this is only apparent, as target is actually 3 km (9700 feet) above ownship. Ranging results are given in Figure 33. The initial ranging error is +9.0% and declines to +3.3%. Results for the same experiment, but with a different sequence of measurement noise, are given in Figure 34. Now the initial range error is only +1.4%, thereafter increasing to 6.3%.

The flight path geometry of encounter C, depicted in Figure 35, is more favorable because target's velocity is now opposed to ownship's velocity, creating the maximum relative velocity. This impacts ranging performance as is evident in Figure 36. Range error is initially a few tenths of a percent (negative), decreases in magnitude and then grows to +2.2%.

While developed for the air-to-air problem, the ranging algorithm can be used for air-to-ground ranging by simply setting nominal target speed to a very small value and the bandwidth of the speed constraint to a yet smaller value. Performance was tested with the flight path geometry of Figure 37, which is identical to that of Figure 21 but with the target fixed. The lack of target mobility effectively reduces the number of degrees of freedom and alleviates ill-conditioning. This is confirmed by Figure 38. The range error, more or less constant at -2.6%, is gratifyingly low considering measurement noise has been increased four-fold to 2 degrees standard deviation.

A natural question regarding performance is, "How sensitive is ranging accuracy to unmodeled target acceleration?" Due to the nonlinear nature of the problem the answer must be sought through computer simulation. While simulations for a wide variety of accelerations have not been performed, tests employing several sinusoidal jinking maneuvers about the nominal target trajectory of encounter A were conducted. Maximum acceleration during these maneuvers was held constant at 4 g. Maximum deviation of target heading from nominal was varied between 30 and 60 degrees. (A keyboard input of 0 degrees signified no jinking maneuver was to be performed.) We conclude this section with a discussion of the results of this series of experiments

For reference, the unperturbed flight path geometry is depicted in Figure 39. This is Figure 21 plotted with different scale factors. Ranging results are given in Figure 40. The range error is -3.6%. Note that Figures 24, 25 and 40 depict results from the same experiment but with different noise sequences.

A sinusoidal perturbation has been added to target's flight path in Figure 41. It has a maximum directional deviation of 30 degrees. Figure 42 gives the ranging results. Note that range error has increased only moderately to -5.4%. Figure 43 gives a comparable result with the slightly shorter data collection interval of 138.7 seconds. This interval has the property of containing an integral number of cycles of the sinusoid. As a result the range error decreased to -3.8%. We will see that ranging results are consistently good when the flight path contains an integral number of cycles of the sinusoid. Figure 44 depicts the flight path geometry when the jink has a maximum directional deviation of 60 degrees. Since maximum acceleration is unchanged this has the effect of reducing the frequency of the sinusoid. (The skewed appearance is entirely due to the use of different scale factors for the vertical and horizontal directions.) Ranging results are given in Figure 45. Note that the range error has increased dramatically to -38%. An equally dramatic improvement can be seen in Figure 46 which differs in that the data collection interval has been extended to 206 seconds, exactly 3 periods of the sinusoid. Now the initial error is only 2% - less than that for no jink. To separate the effects of a longer data collection interval and a data collection interval containing an integral number of cycles, the interval was reduced to 138.7 seconds (2 cycles). The results are shown in Figure 47. Here the error is even smaller, indicating the benefit is due to the integral number of cycles.

We conclude that target acceleration does not necessarily impair ranging accuracy. Excellent ranging accuracy was consistently obtained when the target was on its nominal flight path at the beginning and end of data collection. This requirement diminishes in importance as the number of cycles of the jinking maneuver in the data collection interval grows.

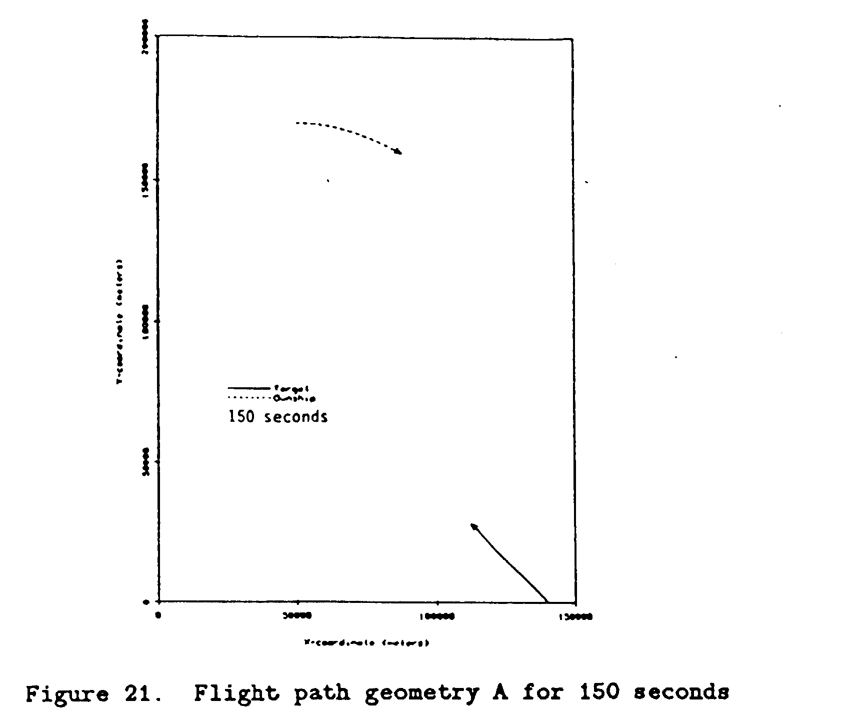

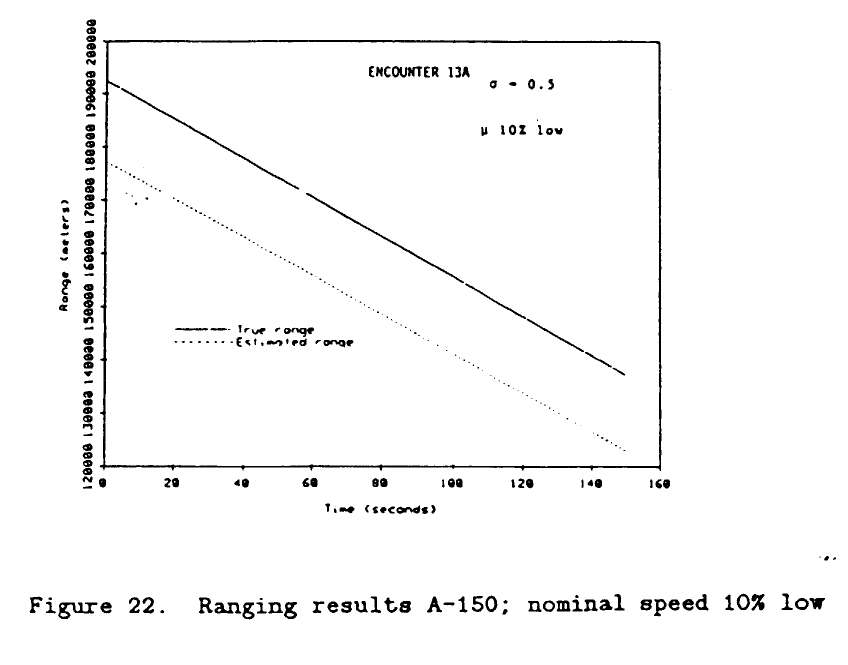

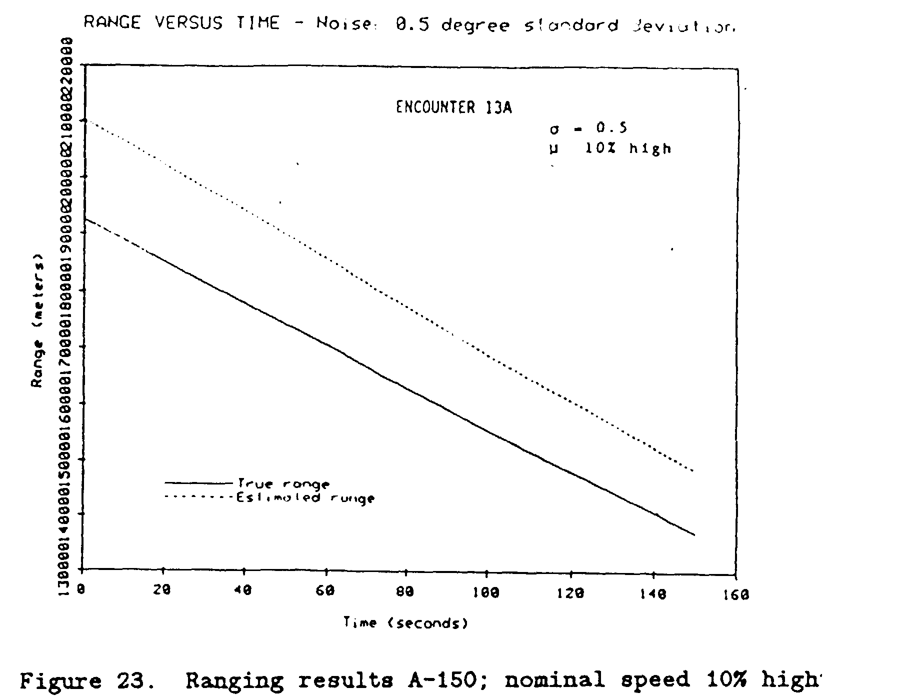

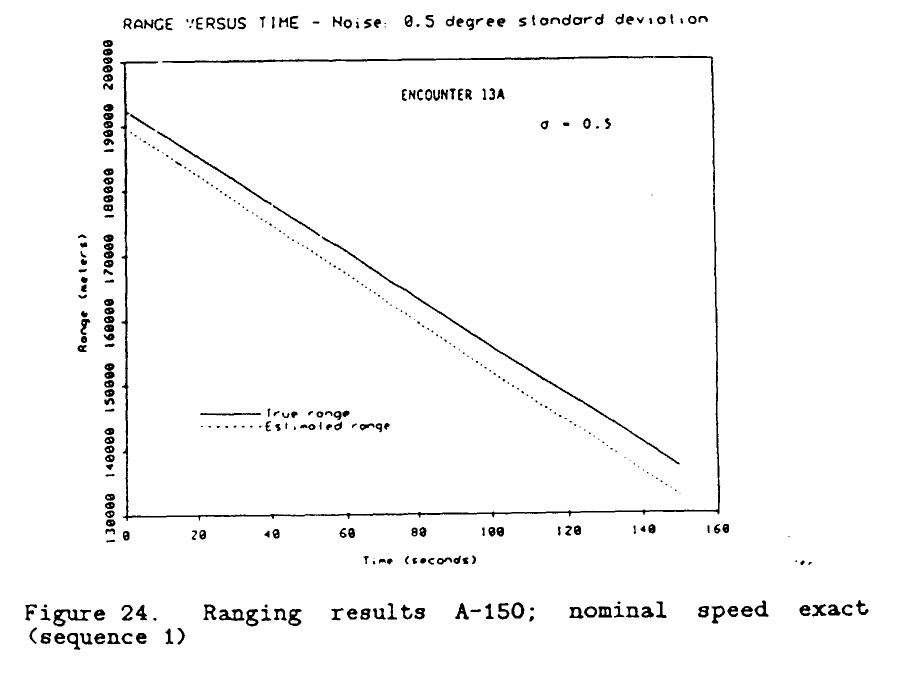

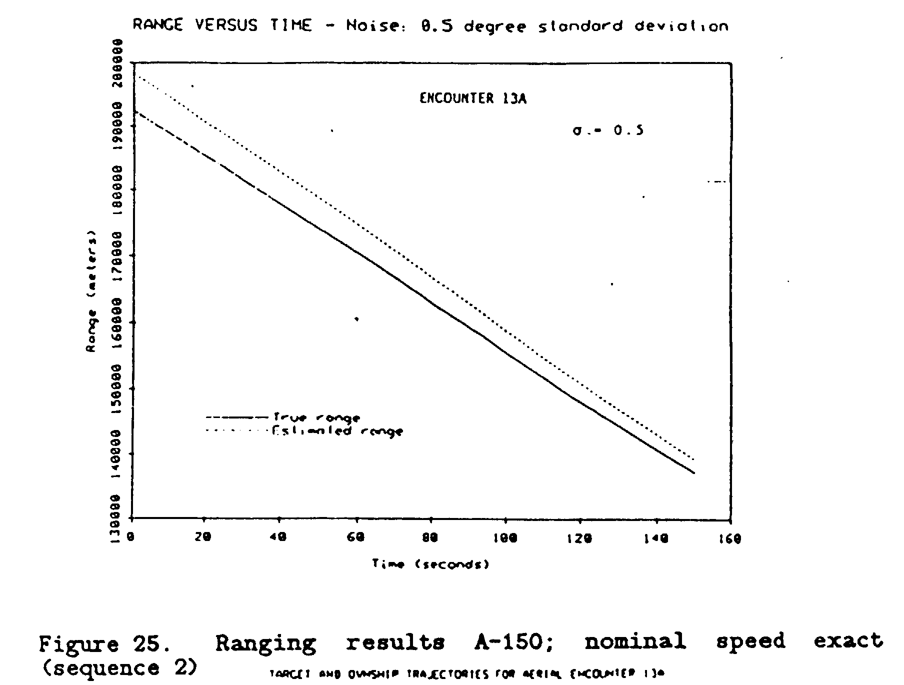

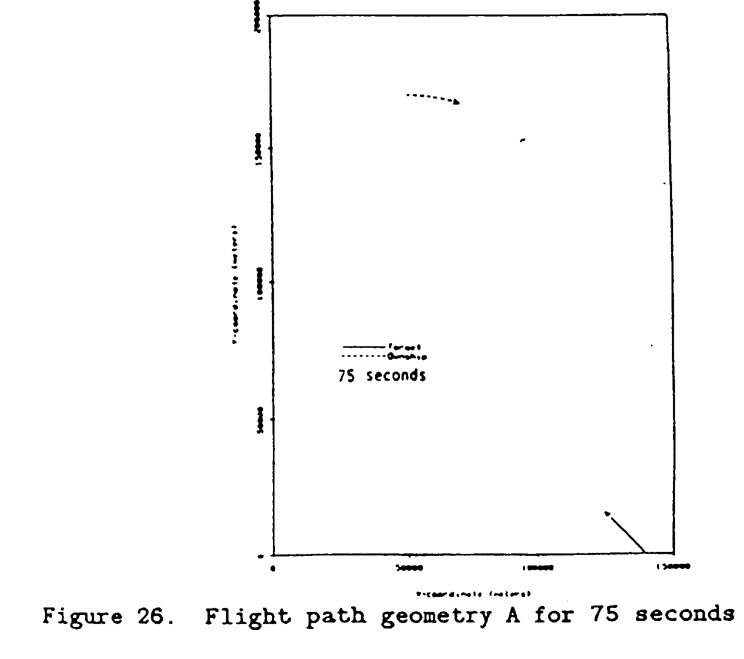

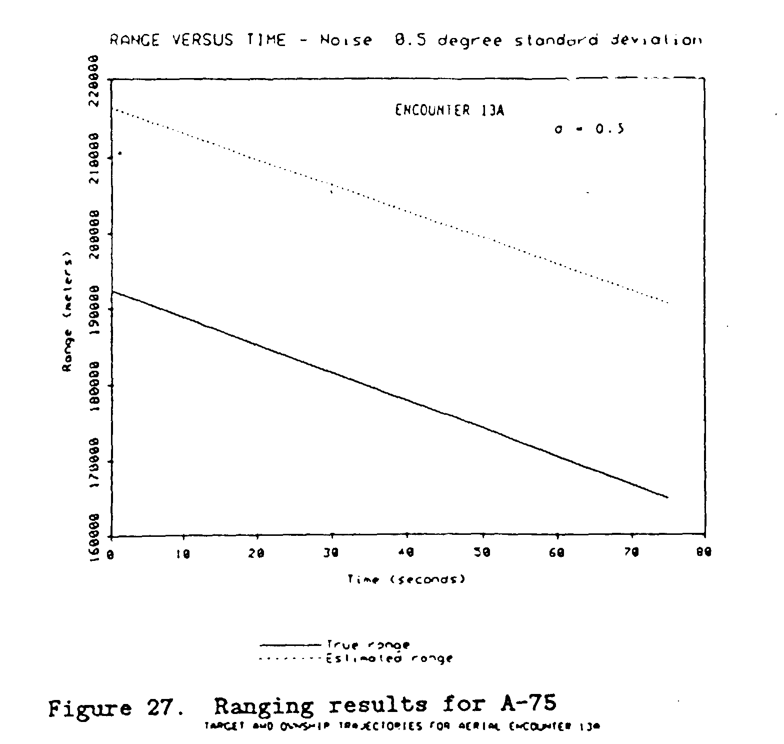

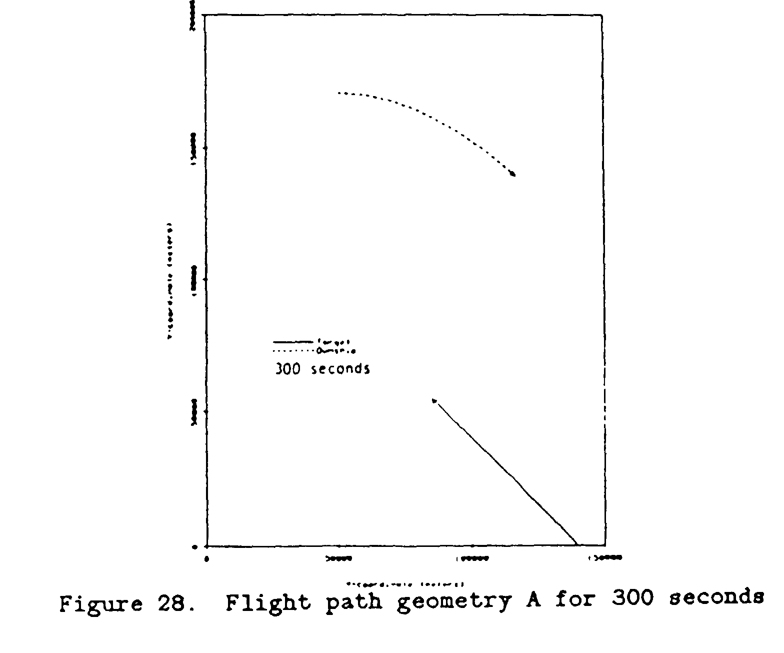

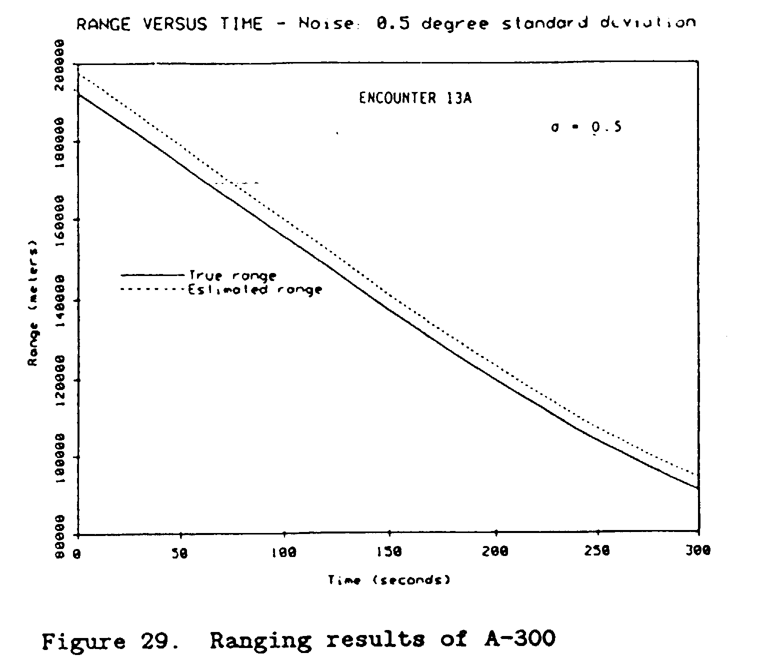

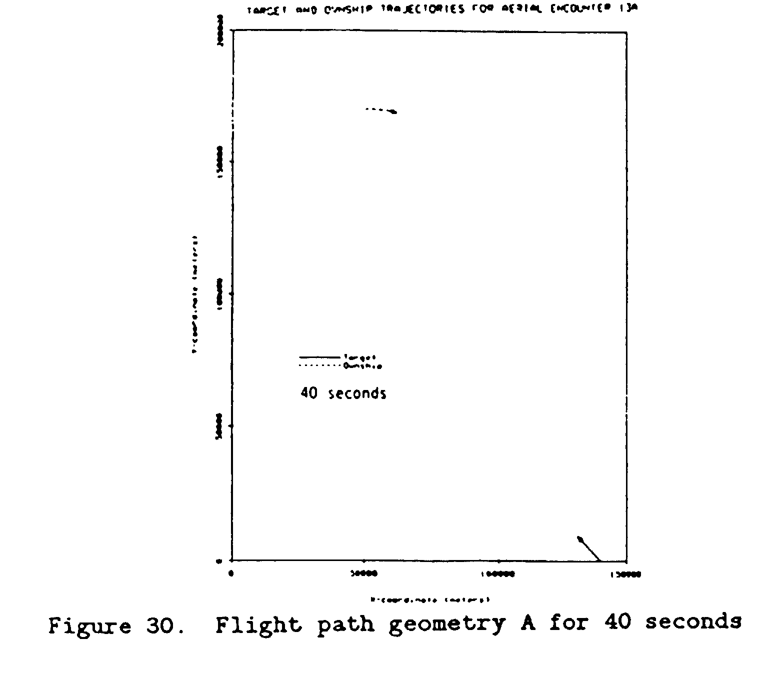

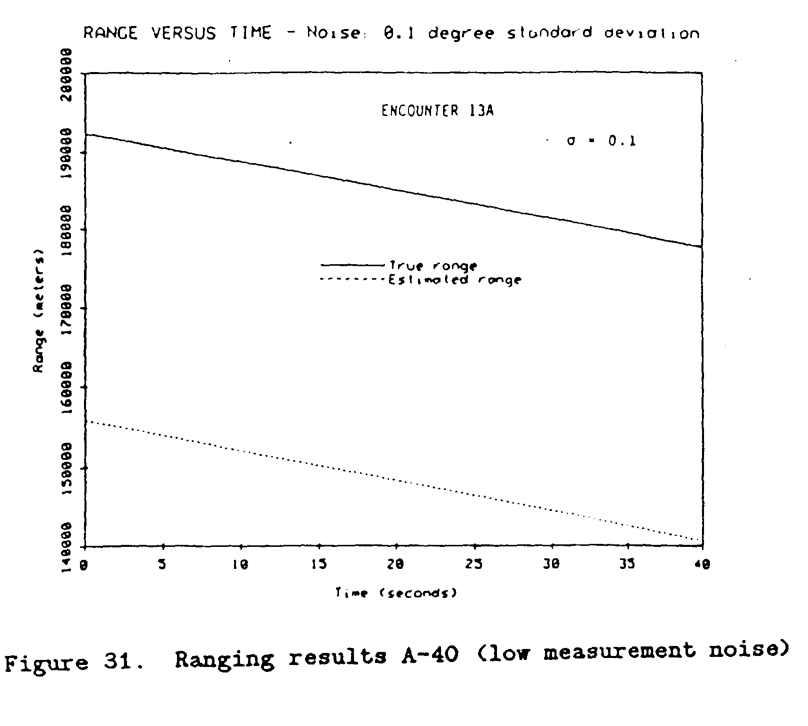

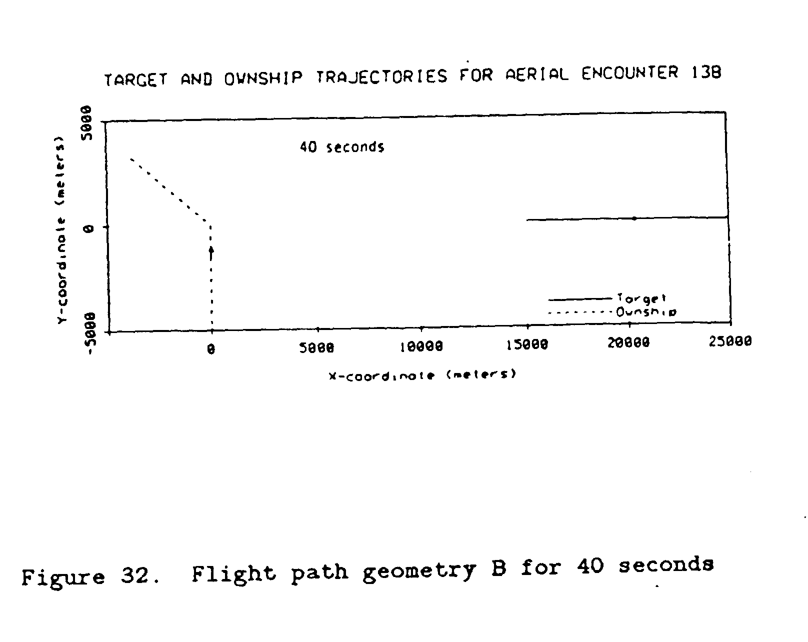

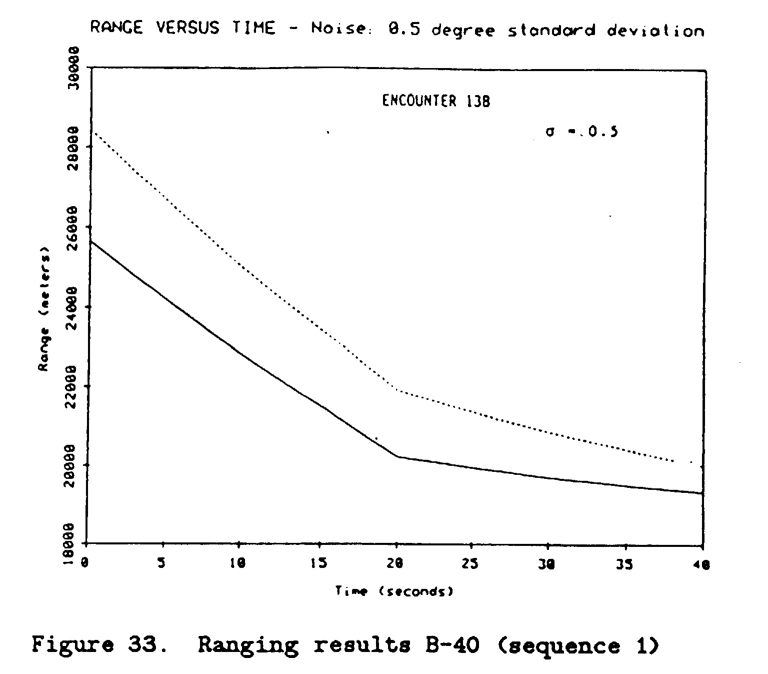

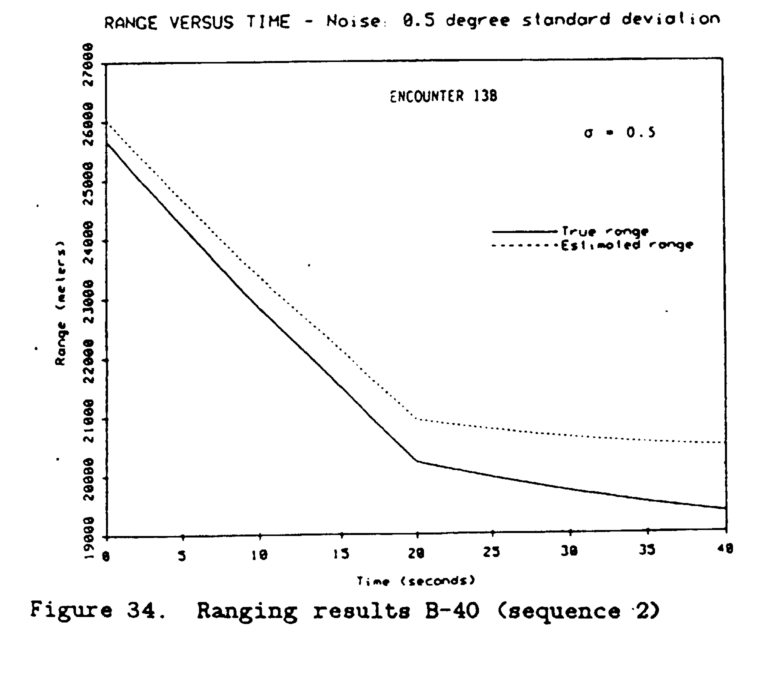

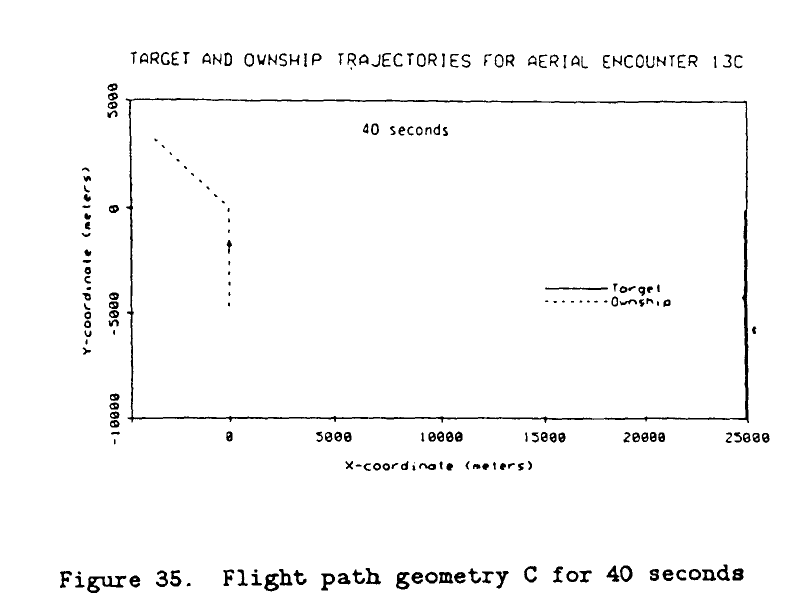

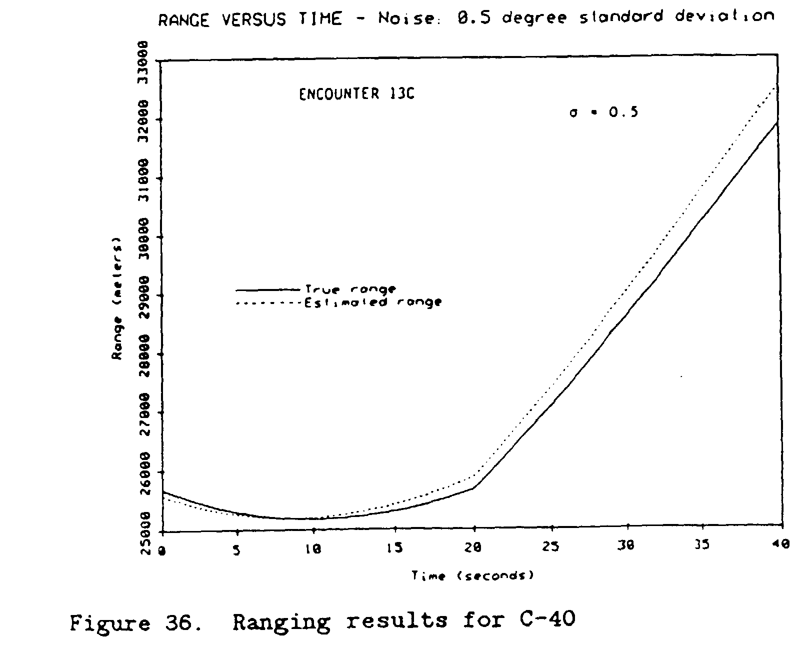

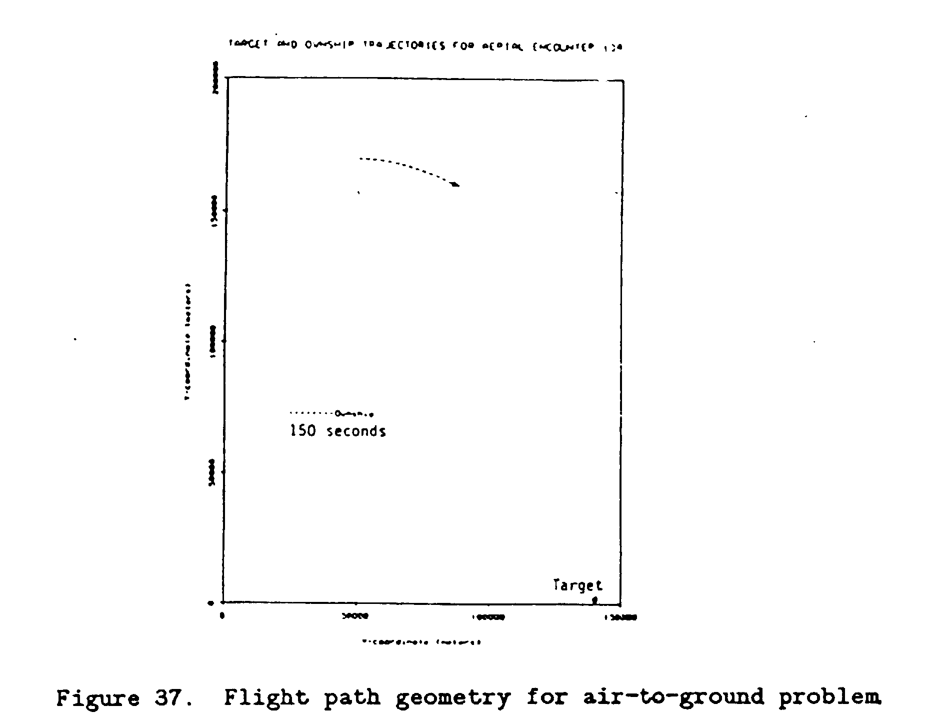

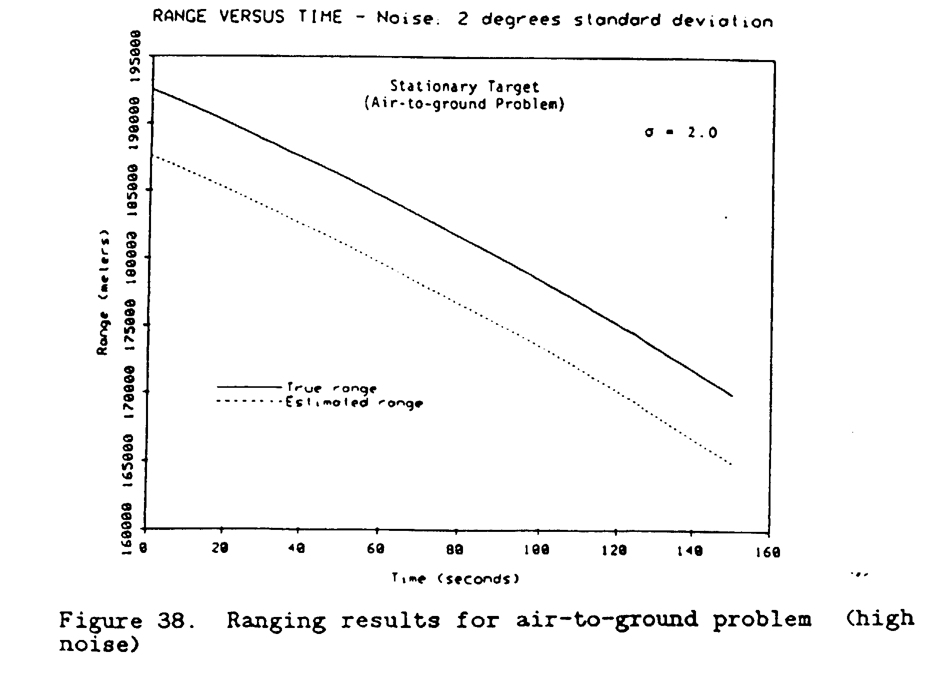

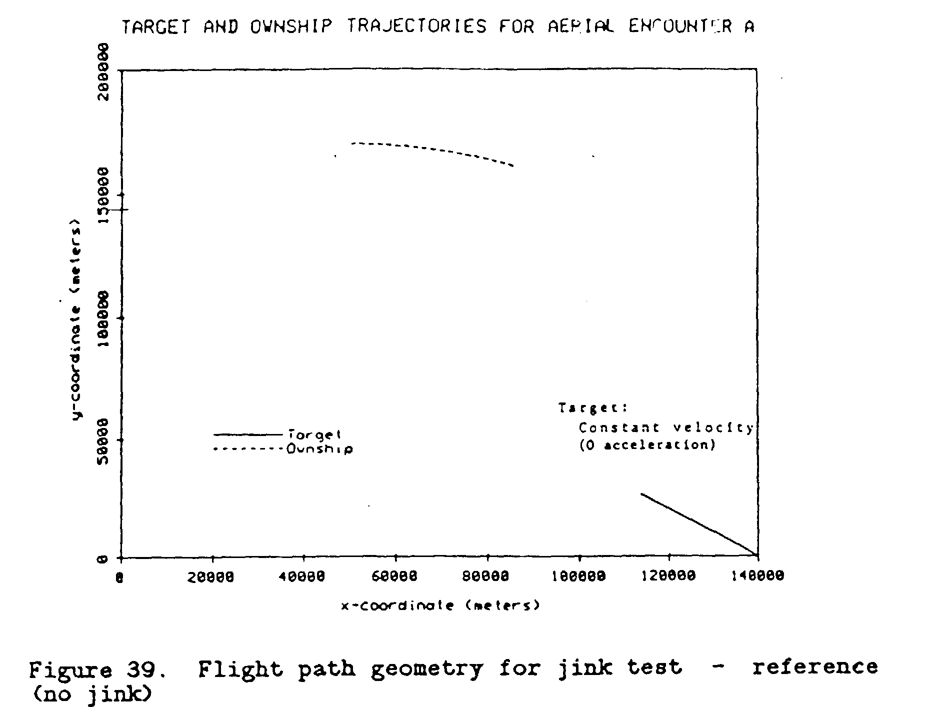

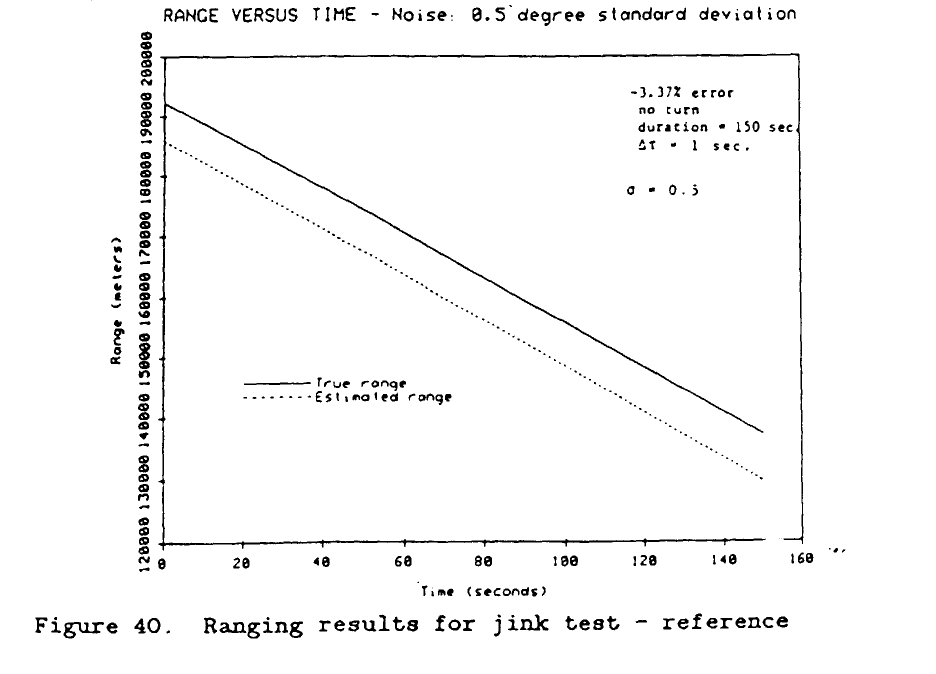

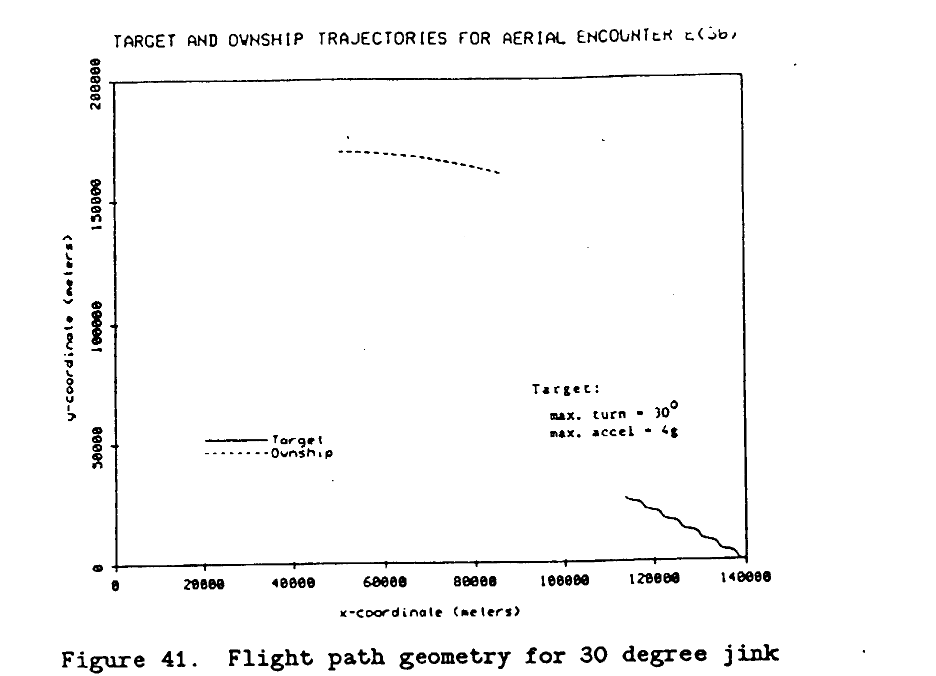

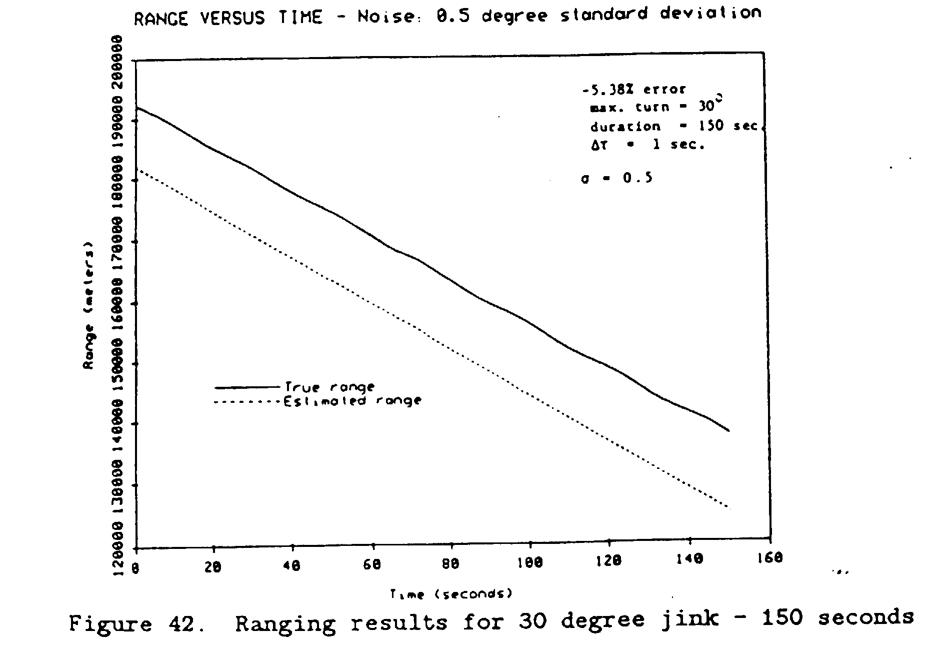

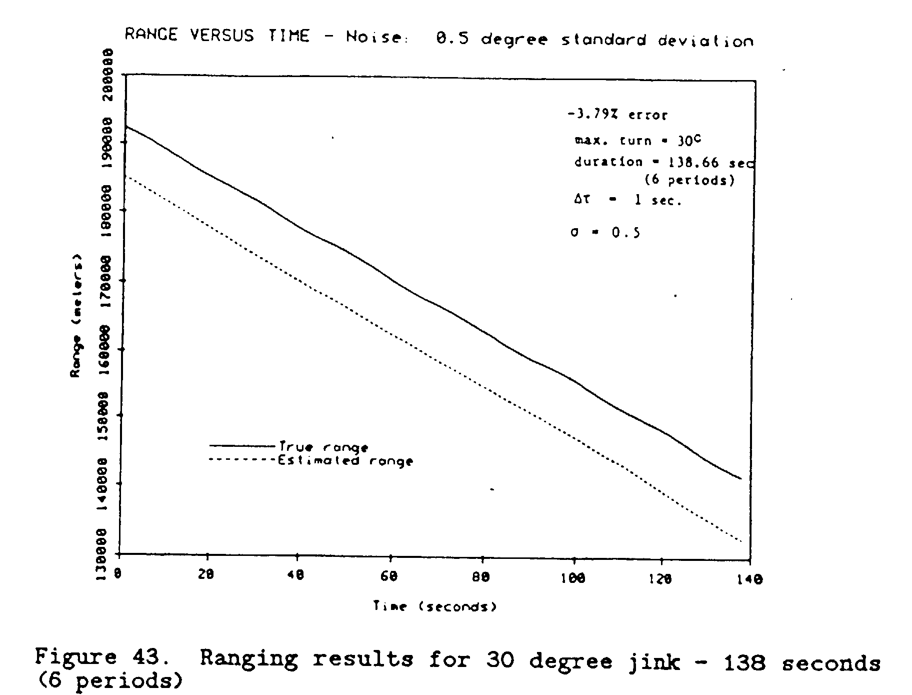

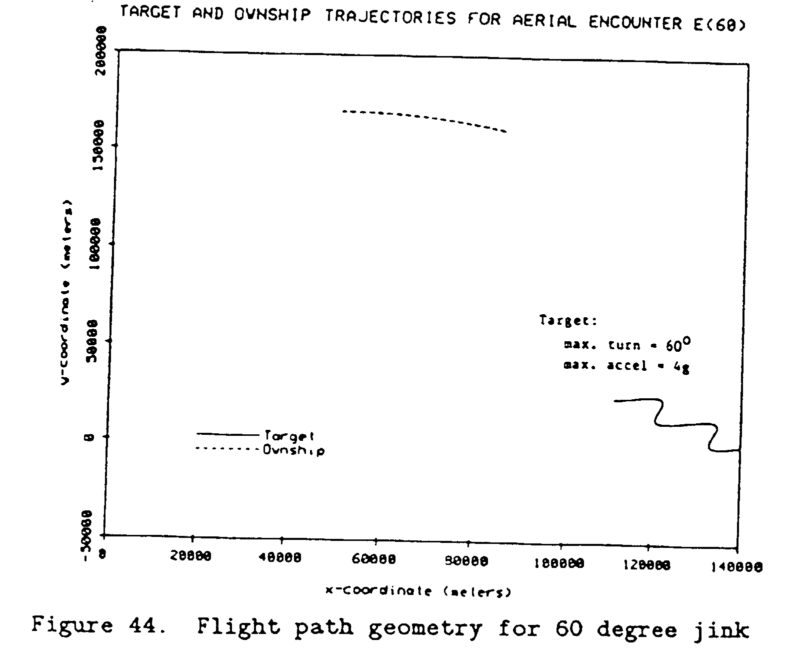

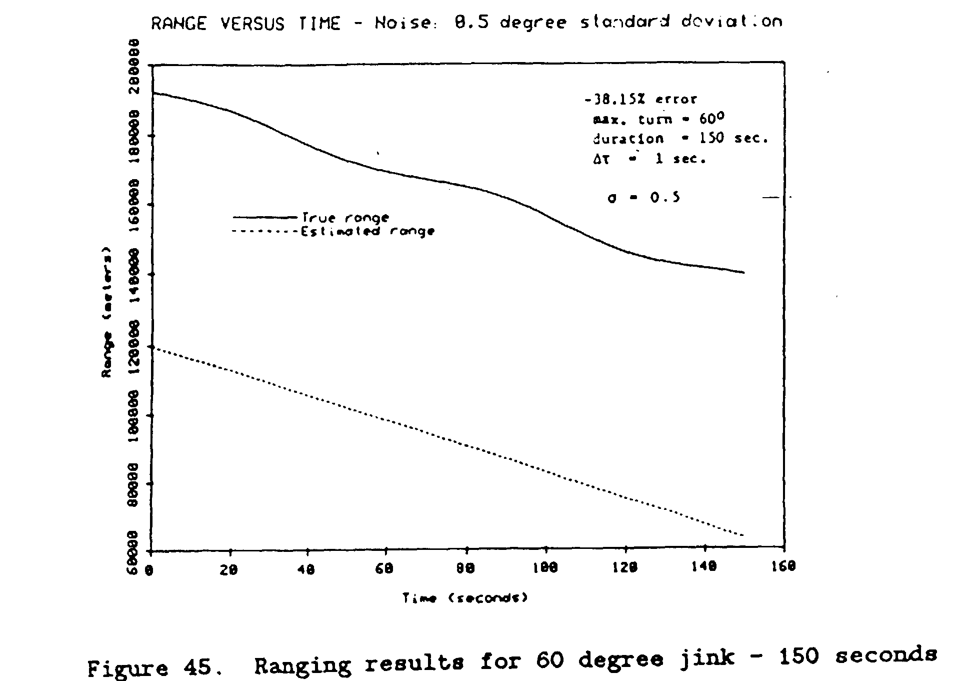

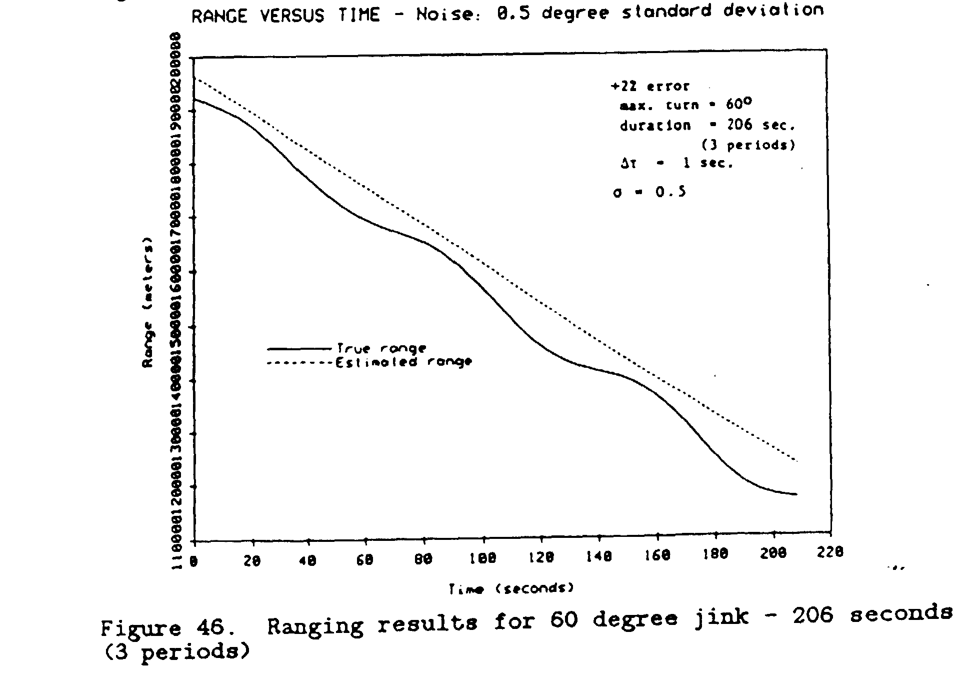

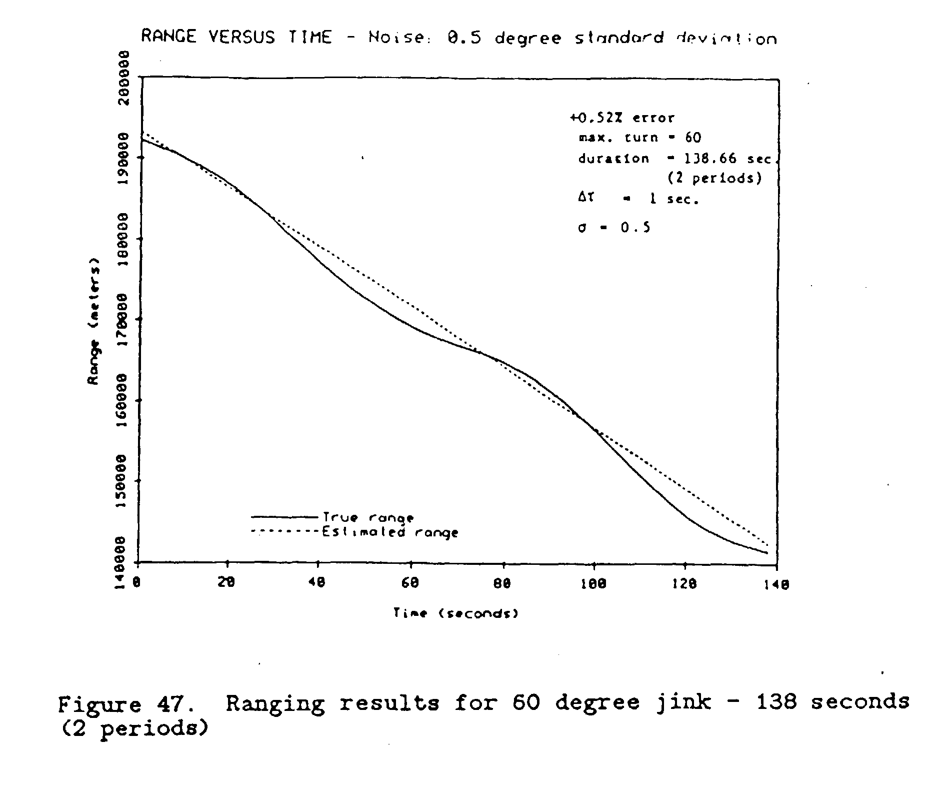

## Claims

1. A method for covertly determining and predicting target position data relative to a predetermined position, comprising the steps of:
(a) sensing a target with a passive sensor (12) to produce a passive target position data set;
(b) performing a coordinate transformation of said passive target position data set to said predetermined position to produce a transformed passive data set;
(c) comparing said transformed passive data set to a predicted target position data set to generate a measurement error;
(d) sensing said target with an active sensor (40) for a minimally detectable period of time to produce an active target position data set;
(e) forming a system error from said measurement error and from the active target position data set; and
(f) changing said predicted target position data set in response to said system error.

2. The method of claim 1, further comprising the step of repeating steps (a) through (f) to covertly determine target position data continuously relative to said predetermined position.

3. The method of claim 1, wherein said step of sensing a target with a passive sensor (12) further comprises the step of generating azimuth and elevation data relative to an ownship sensor.

4. The method of claim 3, wherein said step of transforming said passive target position data set further comprises the step of relating said azimuth and elevation data to an inertial navigation system position.

5. The method of claim 1, further comprising the step of constraining said active target position data set by a plurality of penalty functions.

6. The method of claim 5, further comprising the step of using said penalty functions to impose small weights for data within predetermined limits and to impose large weights outside said predetermined limits.

7. The method of claim 5, wherein said penalties comprise a speed penalty associated with a speed measurement aspect of said active target position data set.

8. The method of claim 5, wherein said penalties further comprise a maximum acquisition range penalty associated with a maximum acquisition range aspect of said active target position data set.

9. The method of claim 1, wherein said predicted target position data set comprises predicted bearing data, said predicted bearing data comprising predicted azimuth data and predicted elevational data.

10. The method of claim 1, wherein said changing step comprises a step of calculating a perturbation magnitude, said perturbation magnitude being associated with said system error.

11. The method of claim 10, wherein said perturbation magnitude is calculated according to a linear search procedure.

12. The method of claim 11, wherein said linear search procedure comprises a cubic interpolation method for limiting said perturbation magnitude.

13. The method of claim 1, wherein said changing step comprises a step of determining a perturbation direction, said perturbation direction being associated with said system error.

14. The method of claim 1, wherein said passive target position data set comprises early sighting data for advising of a flight path of the target.

15. A system for covertly determining and predicting target position data relative to a predetermined position, comprising:
a passive sensor (12) for passively sensing a target to produce a passive target position data set;
coordinate transformation circuitry (14) for transforming said passive target position data set to said predetermined position to produce a transformed passive data set;
comparison circuitry (22) for comparing said transformed passive data set to a predicted target position data set and thereby generating a measurement error;
an active sensor (40) for actively sensing said target for a minimally detectable period of time to produce an active target position data set;
system error circuitry (24) for forming a system error from said measurement error and from the active target position data set; and
perturbation circuitry for changing said predetermined target position data set in response to said system error.

16. The system of claim 15, further comprising circuitry for iteratively changing said predicted target position data set in response to said system error and thereby covertly determining target position data continuously relative to said predetermined position.

17. The system of claim 15, further comprising circuitry for determining azimuth and elevation data of the target relative to said passive sensor (12).

18. The system of claim 15, further comprising circuitry for relating passive sensor azimuth and elevation data to a set of data from an inertial navigation system.

19. The system of claim 15, further comprising constraint functions circuitry for constraining said active target position data set by a predetermined set of penalty functions.

20. The system of claim 19, wherein said penalty functions impose small penalties for data within predetermined limits and substantially larger penalties for data outside said predetermined limits.

21. The system of claim 20, wherein said penalty functions comprise a speed penalty function.

22. The system of claim 20, wherein said penalty functions comprise a maximum acquisition range penalty function.

23. The system of claim 15, wherein said predicted target position data set comprises predicted target bearing data, said predicted target bearing data further comprising predicted target azimuth data and predicted target elevation data.

24. The system of claim 15, wherein said perturbation circuitry further comprises circuitry for determining perturbation magnitude and perturbation direction.

25. The system of claim 24, wherein said perturbation magnitude determining circuitry comprises circuitry for performing a linear search using a cubic interpolation method.

## Patentansprüche

1. Verfahren zum geschützten Bestimmen und Vorhersagen von Zielpositionsdaten relativ zu einer vorgegebenen Position, mit den folgenden Schritten:
(a) Erfassen eines Ziels mit einem passiven Sensor (12), um eine Menge passiver Zielpositionsdaten zu erzeugen;
(b) Ausführen einer Koordinatentransformation für die Menge passiver Zielpositionsdaten in die vorgegebene Position, um eine Menge transformierter passiver Daten zu erzeugen;
(c) Vergleichen der Menge transformierter passiver Daten mit einer Menge vorhergesagter Zielpositionsdaten, um einen Meßfehler zu erzeugen;
(d) Erfassen des Ziels mit einem aktiven Sensor (40) während einer minimal erfaßbaren Zeitperiode, um eine Menge aktiver Zielpositionsdaten zu erzeugen;
(e) Bilden eines Systemfehlers aus dem Meßfehler und aus der Menge aktiver Zielpositionsdaten; und
(f) Ändern der Menge vorhergesagter Zielpositionsdaten entsprechend dem Systemfehler.

2. Verfahren nach Anspruch 1, ferner mit dem folgenden Schritt: Wiederholen der Schritte (a) bis (f), um kontinuierlich Zielpositionsdaten relativ zu der vorgegebenen Position geschützt zu bestimmen.

3. Verfahren nach Anspruch 1, bei dem der Schritt des Erfassens eines Ziels mit einem passiven Sensor (12) ferner den Schritt des Erzeugens von Azimut- und Höhendaten relativ zu einem Eigentümer-Sensor enthält.

4. Verfahren nach Anspruch 3, bei dem der Schritt des Transformierens der Menge passiver Zieldaten ferner den Schritt des Beziehens der Azimut- und Höhendaten auf eine Position eines Trägheitsnavigationssystems enthält.

5. Verfahren nach Anspruch 1, ferner mit dem Schritt des Beschränkens der Menge aktiver Zielpositionsdaten durch mehrere Reduzierungsfunktionen.

6. Verfahren nach Anspruch 5, ferner mit dem Schritt des Verwendens der Reduzierungsfunktionen, um den Daten innerhalb vorgegebener Grenzen kleine Gewichte und den Daten außerhalb der vorgegebenen Grenzen große Gewichte aufzuerlegen.

7. Verfahren nach Anspruch 5, bei dem die Reduzierungen eine Geschwindigkeitsreduzierung umfassen, die einem Geschwindigkeitsmessungsaspekt der Menge aktiver Zielpositionsdaten zugeordnet ist.

8. Verfahren nach Anspruch 5, bei dem die Reduzierungen ferner eine Maximalerfassungsreichweiten-Reduzierung umfassen, die einem Maximalerfassungsreichweitenaspekt der Menge aktiver Zielpositionsdaten zugeordnet ist.

9. Verfahren nach Anspruch 1, bei dem die Menge vorhergesagter Zielpositionsdaten vorhergesagte Peilungsdaten umfaßt, wobei die vorhergesagten Peilungsdaten vorhergesagte Azimutdaten und vorgesagte Höhendaten enthalten.

10. Verfahren nach Anspruch 1, bei dem der Änderungsschritt einen Schritt des Berechnens eines Störungsausmaßes enthält, wobei das Störungsausmaß dem Systemfehler zugeordnet ist.

11. Verfahren nach Anspruch 10, bei dem das Störungsausmaß anhand einer linearen Suchprozedur berechnet wird.

12. Verfahren nach Anspruch 11, bei dem die lineare Suchprozedur ein kubisches Interpolationsverfahren zum Begrenzen des Störungsausmaßes enthält.

13. Verfahren nach Anspruch 1, bei dem der Änderungsschritt einen Schritt des Bestimmens einer Störungsrichtung enthält, wobei die Störungsrichtung dem Systemfehler zugeordnet wird.

14. Verfahren nach Anspruch 1, bei dem die Menge passiver Zielpositionensdaten Frühvisierdaten für die Ankündigung einer Flugbahn des Ziels enthält.

15. System zum geschützten Bestimmen und Vorhersagen von Zielpositionsdaten relativ zu einer vorgegebenen Position, mit
einem passiven Sensor (12) zum passiven Erfassen eines Ziels, um eine Menge passiver Zielpositionsdaten zu erzeugen;
einer Koordinatentransformation-Schaltungsanordnung (14) zum Transformieren der Menge passiver Zielpositionsdaten in die vorgegebene Position, um eine Menge transformierter passiver Daten zu erzeugen;
einer Vergleichsschaltungsanordnung (22) zum Vergleichen der Menge transformierter passiver Daten mit einer Menge vorhergesagter Zielpositionsdaten, um dadurch einen Meßfehler zu erzeugen;
einem aktiven Sensor (40) zum aktiven Erfassen des Ziels während einer minimal erfaßbaren Zeitperiode, um eine Menge aktiver Zielpositionsdaten zu erzeugen;
einer Systemfehler-Schaltungsanordnung (24) zum Bilden eines Systemfehlers aus dem Meßfehler und aus der Menge aktiver Zielpositionsdaten; und
einer Störungsschaltungsanordnung zum Ändern der Menge vorgegebener Zielpositionsdaten entsprechend dem Systemfehler.

16. System nach Anspruch 15, ferner mit einer Schaltungsanordnung zum iterativen Ändern der Menge vorhergesagter Zielpositionsdaten entsprechend dem Systemfehler, um dadurch Zielpositionsdaten kontinuierlich relativ zu der vorgegebenen Position geschützt zu bestimmen.

17. System nach Anspruch 15, ferner mit einer Schaltungsanordnung zum Bestimmen der Azimut- und Höhendaten des Ziels relativ zum passiven Sensor (12).

18. System nach Anspruch 15, ferner mit einer Schaltungsanordnung zum Herstellen einer Beziehung passiver Sensorazimut- und Sensorhöhendaten zu einer Datenmenge von einem Trägheitsnavigationssystem.

19. System nach Anspruch 15, ferner mit einer Beschränkungsfunktionen-Schaltungsanordnung zum Beschränken der Menge aktiver Zielpositionsdaten durch eine vorgegebene Menge von Reduzierungsfunktionen.

20. System nach Anspruch 19, wobei die Reduzierungsfunktionen Daten innerhalb vorgegebener Grenzen kleine Reduzierungen und Daten außerhalb der vorgegebenen Grenzen wesentlich größere Reduzierungen auferlegen.

21. System nach Anspruch 20, wobei die Reduzierungsfunktionen eine Geschwindigkeitreduzierungsfunktion umfassen.

22. System nach Anspruch 20, wobei die Reduzierungsfunktionen eine Maximalerfassungsreichweiten-Reduzierungsfunktion umfassen.

23. System nach Anspruch 15, wobei die Menge vorhergesagter Zielpositionsdaten vorhergesagte Zielpeilungsdaten enthält, wobei die vorhersagten Zielpeilungsdaten ferner vorhergesagte Zielazimutdaten und vorhergesagte Zielhöhendaten umfassen.

24. System nach Anspruch 15, wobei die Störungsschaltungsanordnung ferner eine Schaltungsanordnung zum Bestimmen des Störungsausmaßes und der Störungsrichtung enthält.

25. System nach Anspruch 24, wobei die Störungsausmaßbestimmungs-Schaltungsanordnung eine Schaltungsanordnung zum Ausführen einer linearen Suche unter Verwendung eines kubischen Interpolationsverfahrens enthält.

## Revendications

1. Procédé pour déterminer et prédire secrètement des données de position d'une cible par rapport à une position prédéterminée, comprenant les étapes consistant à :
(a) détecter une cible à l'aide d'un capteur passif (12) pour produire un ensemble passif de données de position de la cible ;
(b) exécuter une transformation de coordonnées dudit ensemble de données de position dudit ensemble passif de données de position de la cible pour ladite position prédéterminée pour produire un ensemble passif transformé de données ;
(c) comparer ledit ensemble passif transformé de données en un ensemble prédit de données de position de la cible pour produire une erreur de mesure ;
(d) détecter ladite cible avec un capteur actif (40) pendant un intervalle de temps minimum décelable pour produire un ensemble actif de données de position de la cible ;
(e) former une erreur du système à partir de ladite erreur de mesure à partir de l'ensemble actif de données de position de la cible ; et
(f) modifier ledit ensemble prédit de données de position de la cible en réponse à ladite erreur du système.

2. Procédé selon la revendication 1, comprenant en outre les étapes consistant à répéter les étapes (a) à (f) pour déterminer secrètement et d'une manière continue les données de position de la cible par rapport à ladite position prédéterminée.

3. Procédé selon la revendication 1, selon lequel ladite étape de détection d'une cible avec un capteur passif (12) comprend en outre l'étape consistant à produire des données d'azimut et d'élévation par rapport à un capteur d'un avion effectuant la mesure.

4. Procédé selon la revendication 3, selon lequel les étapes de transformation dudit ensemble passif de données de position de la cible comporte en outre l'étape consistant à associer lesdites données d'azimut et d'élévation à une position d'un système de navigation par inertie.

5. Procédé selon la revendication 1, comprenant en outre l'étape consistant à limiter ledit ensemble actif de données de position de la cible au moyen d'une pluralité de fonctions de pénalité.

6. Procédé selon la revendication 5, comprenant l'étape consistant à utiliser lesdites fonctions de pénalité pour imposer de faibles poids pour des données à l'intérieur de limites prédéterminées et à imposer des poids élevés à l'extérieur desdites limites prédéterminées.

7. Procédé selon la revendication 5, selon lequel lesdites pénalités comprennent une pénalité de vitesse associée à un aspect, concernant la mesure de vitesse, dudit ensemble actif de données de position de la cible.

8. Procédé selon la revendication 5, selon lequel lesdites pénalités comprennent en outre les pénalités de portée maximale d'acquisition associée à un aspect, concernant la portée maximale d'acquisition, dudit ensemble actif de position de la cible.

9. Procédé selon la revendication 1, selon lequel ledit ensemble prédit de données de position de la cible comprend des données prédites de relèvement, lesdites données prédites de relèvement comprenant des données prédites d'azimut et des données prédites d'élévation.

10. Procédé selon la revendication 1, selon lequel ladite étape de modification comprend une étape de calcul d'une amplitude de perturbation, ladite amplitude de perturbation étant associée à ladite erreur du système.

11. Procédé selon la revendication 10, selon lequel ladite amplitude de perturbation est calculée conformément à une procédure de recherche linéaire.

12. Procédé selon la revendication 11, selon lequel ladite procédure de recherche linéaire comprend un procédé d'interpolation cubique servant à limiter ladite amplitude de perturbation.

13. Procédé selon la revendication 1, selon lequel ladite étape de modification comprend une étape consistant à déterminer une direction de perturbation, ladite direction de perturbation étant associée à ladite erreur du système.

14. Procédé selon la revendication 1, selon lequel ledit ensemble passif de données de position de la cible comprend des données précoces de visée servant à avertir d'une trajectoire de vol de la cible.

15. Système pour déterminer et prédire discrètement des données de position d'une cible par rapport à une position prédéterminée, comprenant :
un capteur passif (12) pour détecter de façon passive une cible pour produire un ensemble passif de données de position de la cible ;
un circuit (14) de transformation de coordonnées pour transformer ledit ensemble passif de données de position de la cible en ladite position prédéterminée pour produire un ensemble passif transformé de données ;
un circuit comparateur (22) pour comparer ledit ensemble passif transformé de données à un ensemble prédit de données de position de la cible et produire de ce fait une erreur de mesure ;
un capteur actif (40) pour détecter de façon active ladite cible pendant un intervalle de temps minimum décelable pour produire un ensemble actif de données de position de la cible ;
un circuit (24) de formation d'une erreur du système pour former une erreur du système à partir de ladite erreur de mesure et à partir de l'ensemble actif de données de position de la cible ; et
un circuit de perturbation pour modifier ledit ensemble prédéterminé de données de position de la cible en réponse à ladite erreur du système.

16. Système selon la revendication 15, comprenant en outre un circuit pour modifier de façon itérative ledit ensemble prédit de données de position de la cible en réponse à ladite erreur du système et de ce fait déterminer le traitement et d'une manière continue des données de position de la cible par rapport à ladite position prédéterminée.

17. Système selon la revendication 15, comprenant en outre un circuit pour déterminer les données d'azimut et d'élévation de la cible par rapport audit capteur passif (12).

18. Système selon la revendication 15, comprenant en outre un circuit pour associer des données passives d'azimut et d'élévation du capteur à un ensemble de données fourni par un système de navigation par inertie.

19. Système selon la revendication 15, comprenant en outre un circuit à fonctions de limitation pour limiter ledit ensemble actif de données de position de la cible au moyen d'un ensemble prédéterminé de fonctions de pénalité.

20. Système selon la revendication 19, selon lequel lesdites fonctions de pénalité imposent de faibles pénalités pour des données situées à l'intérieur de limites prédéterminées et des pénalités nettement plus fortes pour des données situées en dehors desdites limites prédéterminées.

21. Système selon la revendication 20, selon lequel lesdites fonctions de pénalité comprennent une fonction de pénalité de vitesse.

22. Système selon la revendication 20, dans lequel lesdites fonctions de pénalité comprennent une fonction de pénalité de portée d'acquisition maximale.

23. Système selon la revendication 15, selon lequel ledit ensemble prédit de données de position de la cible comprend des données prédites de relèvement de la cible, lesdites données prédites de relèvement de la cible comprenant en outre des données prédites d'azimut de la cible et des données prédites d'élévation de la cible.

24. Système selon la revendication 15, dans lequel ledit circuit de perturbation comprend en outre un circuit pour déterminer l'amplitude de perturbation et la direction de la perturbation.

25. Système selon la revendication 24, dans lequel ledit circuit de détermination de l'amplitude de perturbation comprend un circuit pour exécuter une recherche linéaire en utilisant un procédé d'interpolation cubique.
